(19)

Europäisches
Patentamt
European
Patent Office
Office européen
des brevets

(11) **EP 2 385 698 A2**

(12) **EUROPEAN PATENT APPLICATION**

(43) Date of publication:
**09.11.2011 Bulletin 2011/45**

(51) Int Cl.:
***H04N 5/349*** (2011.01)      ***H04N 5/225*** (2006.01)

(21) Application number: **11163661.9**

(22) Date of filing: **26.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.04.2010  JP 2010105472
28.09.2010  JP 2010217693
28.09.2010  JP 2010217694
28.09.2010  JP 2010217695**

(71) Applicant: **Honda Motor Co., Ltd.
Tokyo 107-8556 (JP)**

(72) Inventors:
• **Kurimoto, Noriko**
  **Tochigi 321-3395 (JP)**
• **Hiruma, Yosuke**
  **Tochigi 321-3395 (JP)**
• **Shibata, Kaoru**
  **Tochigi 321-3395 (JP)**
• **Shigematsu, Noriaki**
  **Tochigi 321-3395 (JP)**

(74) Representative: **Feller, Frank et al
Weickmann & Weickmann
Postfach 860 820
81635 München (DE)**

(54) **Imaging apparatus, imaging method, and imaging program**

(57)     An imaging operation is executed by partially shielding, from incident light coming from a subject, a photodetecting element (A(m, n)) including a photodetecting surface (P(m, n)) having a prescribed area and adapted to generate output values corresponding to light quantities received by the photodetecting surface, acquiring output values from the photodetecting element in each of a plurality of states in which different portions of the photodetecting element are shielded, and calculating a pixel information corresponding to a light quantity received by a region that is smaller than the photodetecting surface of the photodetecting element based on differences between the output values acquired in the plurality of states.

*FIG.3*

EP 2 385 698 A2

(Cont. next page)

## FIG.6

(A)

102

126

141

121

(B)

102

X,Y

C

← INCIDENT LIGHT

126

X,Y

121

**Description**

## BACKGROUND OF THE INVENTION

<FIELD OF THE INVENTION>

The present invention relates to an imaging apparatus, an imaging method, and an imaging program for taking an image.

<RELATED ART>

Conventionally, a procedure of measuring shapes of products, molds, jigs, etc. and making adjustments based on measurement results is followed. An imaging apparatus incorporating a high-resolution solid-state imaging device may be used in such a case. Example solid-state imaging devices are a CCD (charge-coupled device) imaging device and a CMOS (complementary metal oxide semiconductor) imaging device.
US 4,634,884 discloses a solid-state imaging apparatus which vibrates the photodetecting surface to attain a high resolution using an imaging device having a limited number of pixels.
Incidentally, in general, the number of pixels of an imaging apparatus increases with the number of effective pixels of an imaging device. However, to increase the number of effective pixels of an imaging device, it is usually necessary to increase the number of photodetecting elements of the imaging device, which is costly. On the other hand, a method for increasing the number of pixels without increasing the number of photodetecting elements is known in which a subject to be shot is divided into plural portions and shooting is performed plural times for the respective portions of the subject while an imaging device is moved. In this case, it is necessary to connect images taken to each other while checking relative positional relationships and hence it is necessary to calculate relative positional relationships between the images to be connected to each other. When the movement distance of the imaging device is large, it is necessary to calculate correlations between images taking into consideration positional deviations caused by the movement. There is a problem that this calculation tends to cause errors.
In the solid-state imaging apparatus disclosed in US 4,634,884, in the interline transfer scheme, for example, signal charges stored in photosensing portions are transferred to a vertical CCD register in a signal blanking period and read out in the next field effective period. However, there is no detailed disclosure about how to increase the resolution.

## SUMMARY OF THE INVENTION

One or more embodiments of the invention provide an imaging apparatus and an imaging method for generating an image having a large number of pixels at high speed and a low cost with high accuracy using an image sensor having a small number of pixels.
In accordance with one or more embodiments, an imaging apparatus is provided with a photodetecting element A(m, n) including a photodetecting surface P(m, n) having a prescribed area and adapted to generate an output value corresponding to a light quantity received by the photodetecting surface, and a light shield part 206, 106A-106D, 126, 127, 136A-136D, 26A-26C, 26-1 to 26-8 adapted to partially shield the photodetecting element from incident light coming from a subject.
Moreover, in accordance with one or more embodiments, an imaging method is provided with: a step of partially shielding, from incident light coming from a subject, a photodetecting element A(m, n) including a photodetecting surface (P(m, n)) having a prescribed area and adapted to generate output values corresponding to light quantities received by the photodetecting surface, and acquiring output values from the photodetecting element in each of a plurality of states in which different portions of the photodetecting element are shielded; and a step of calculating a pixel information corresponding to a light quantity received by a region that is smaller than the photodetecting surface of the photodetecting element based on differences between the output values acquired in the plurality of states.
Furthermore, in accordance with one or more embodiments, an imaging method is provided with: a step of acquiring, from a photodetecting element A(m, n) which has a photodetecting surface P(m, n) having a prescribed area and is adapted to generate an output value corresponding to a light quantity received by the photodetecting surface, a first output value that corresponds to a light quantity received by a first prescribed region which is a part of the photodetecting surface; a step of acquiring a second output value that corresponds to a light quantity received by a second prescribed region which is included in the first prescribed region; and a step of calculating a third output value corresponding to a light quantity received by a region that is the first prescribed region excluding the second prescribed region based on a difference between the first output value and the second output value.
Other aspects and advantages of the invention will be apparent from the following description and the appended claims.

## BRIEF DESCRIPTION OF THE DRAWINGS

[Fig. 1] Fig. 1 is a schematic diagram of an imaging apparatus according to a first exemplary embodiment.

[Fig. 2] Fig. 2 is a block diagram showing the configuration of an imaging device used in the imaging apparatus of Fig. 1.

[Fig. 3] Fig. 3 is schematic diagrams of an imaging unit of the imaging apparatus of Fig. 1.

[Fig. 4] Fig. 4 shows the imaging device and light shield plates of the imaging apparatus of Fig. 1.

[Fig. 5] Fig. 5 is a flowchart of a process according to which the imaging apparatus of Fig. 1 takes an image.

[Fig. 6] Fig. 6 is schematic diagrams of an imaging unit of an imaging apparatus according to a second exemplary embodiment.

[Fig. 7] Fig. 7 shows the imaging device and a light shield plate of the imaging apparatus of Fig. 6.

[Fig. 8] Fig. 8 is a flowchart of a process according to which the imaging apparatus of Fig. 6 takes an image.

[Fig. 9] Fig. 9 illustrates a modification of the imaging apparatus of Fig. 6.

[Fig. 10] Fig. 10 is schematic diagrams of an imaging unit of an imaging apparatus according to a third exemplary embodiment.

[Fig. 11] Fig. 11 shows example imaging devices of the imaging apparatus of Fig. 10.

[Fig. 12] Fig. 12 shows example pieces of pixel information acquired by the imaging apparatus of Fig. 10.

[Fig. 13] Fig. 13 is a flowchart of a process according to which the imaging apparatus of Fig. 10 takes an image.

[Fig. 14] Fig. 14 is a schematic diagram of an imaging apparatus according to a fourth exemplary embodiment.

[Fig. 15] Fig. 15 is a block diagram showing the configuration of an imaging device used in the imaging apparatus of Fig. 14.

[Fig. 16] Fig. 16 shows a relationship between end pixel information acquisition areas of the imaging device of Fig. 15 and a light shield plate.

[Fig. 17] Fig. 17 shows a relationship between an output value of the top-left end pixel information acquisition area of the imaging device of Fig. 15 and the light shield plate when the imaging device is located at a base position [1].

[Fig. 18] Fig. 18 shows a relationship between an output value of the top-left end pixel information acquisition area of the imaging device of Fig. 15 and the light shield plate when the imaging device is located at a moved position [2].

[Fig. 19] Fig. 19 shows a relationship between an output value of the top-left end pixel information acquisition area of the imaging device of Fig. 15 and the light shield plate when the imaging device is located at a moved position [3].

[Fig. 20] Fig. 20 shows a relationship between an output value of the top-left end pixel information acquisition area of the imaging device of Fig. 15 and the light shield plate when the imaging device is located at a moved position [4].

[Fig. 21] Fig. 21 shows pieces of pixel information of a subject image of the top-left end pixel information acquisition area of the imaging device of Fig. 15 when the imaging device is located at a moved position [9].

[Fig. 22] Fig. 22 shows a relationship between output values of plural pixel information acquisition areas of the imaging device of Fig. 15 and the light shield plate when the imaging device is located at the base position [1].

[Fig. 23] Fig. 23 shows a relationship between movements of the imaging device of Fig. 15 and sets of pieces of pixel information that can be acquired.

[Fig. 24] Fig. 24 shows a relationship between output values and acquired pieces of pixel information of the subject image of plural top pixel information acquisition areas of the imaging device of Fig. 15 when the imaging device is located at each of the base position [1], the moved position [2], and the moved position [3].

[Fig. 25] Fig. 25 shows pieces of pixel information of the subject image of the plural top pixel information acquisition areas of the imaging device of Fig. 15 when the imaging device is located at the moved position [3].

[Fig. 26] Fig. 26 shows pieces of pixel information of the subject image of plural leftmost pixel information acquisition areas of the imaging device of Fig. 15 when the imaging device is located at the moved position [7].

[Fig. 27] Fig. 27 shows pieces of pixel information of the subject image of the plural top pixel information acquisition areas of the imaging device of Fig. 15 when the imaging device is located at moved positions [6] and [9].

[Fig. 28] Fig. 28 illustrates an operation of acquiring pieces of pixel information of the subject image of an inner pixel information acquisition area of the imaging device of Fig. 15.

[Fig. 29] Fig. 29 pieces of pixel information of the subject image acquired by the imaging device of Fig. 15.

[Fig. 30] Fig. 30 is a flowchart of a process according to which the imaging apparatus of Fig. 14 takes an image.

[Fig. 31] Fig. 31 is a schematic diagram of an imaging apparatus according to a fifth exemplary embodiment.

[Fig. 32] Fig. 32 is a block diagram showing the configuration of an imaging device used in the imaging apparatus of Fig. 31.

[Fig. 33] Fig. 33 is schematic diagrams of an imaging unit of the imaging apparatus of Fig. 31.

[Fig. 34] Fig. 34 shows a relationship between an imaging device and a light shield film of the imaging apparatus of Fig. 31.

[Fig. 35] Fig. 35 illustrates a relationship between a photodetecting area and masked portions of an imaging device.

[Fig. 36] Fig. 36 shows example imaging devices that are formed with light shield films.

[Fig. 37] Fig. 37 shows positions that the pixel information acquisition areas can take with respect to the light shield films when the imaging devices of Fig. 36 are moved.

[Fig. 38] Fig. 38 show another example set of light shield films formed on the imaging devices of the imaging apparatus of Fig. 31.

[Fig. 39] Fig. 39 shows a relationship between end pixel information acquisition areas of the imaging device of Fig. 38 and a light shield film.

[Fig. 40] Fig. 40 shows a relationship between an output value of the top-left end pixel information acquisition area of the imaging device of Fig. 38 and the light shield film when the pixel information acquisition areas are located at a base position [1'].

[Fig. 41] Fig. 41 shows a relationship between an output value of the top-left end pixel information acquisition area of the imaging device of Fig. 38 and the light shield film when the pixel information acquisition areas are located at a moved position [2'].

[Fig. 42] Fig. 42 shows a relationship between an output value of the top-left end pixel information acquisition area of the imaging device of Fig. 38 and the light shield film when the pixel information acquisition areas are located at a moved position [3'].

[Fig. 43] Fig. 43 shows a relationship between an output value of the top-left end pixel information acquisition area of the imaging device of Fig. 38 and the light shield film when the pixel information acquisition areas are located at a moved position [4'].

[Fig. 44] Fig. 44 shows pieces of pixel information of a subject image of the top-left end pixel information acquisition area of the imaging device of Fig. 38 when the pixel information acquisition areas are located at a moved position [9'].

[Fig. 45] Fig. 45 shows a relationship between output values of plural pixel information acquisition areas of the imaging device of Fig. 38 and the pixel information acquisition areas are located at the base position [1'].

[Fig. 46] Fig. 46 shows a relationship between movements of the pixel information acquisition areas shown in Fig. 38 and sets of pieces of pixel information that can be acquired.

[Fig. 47] Fig. 47 shows a relationship between output values and acquired pieces of pixel information of the subject image of plural top pixel information acquisition areas of the imaging device of Fig. 38 when the pixel information acquisition areas are located at each of the base position [1'], the moved position [2'], and the moved position [3'].

[Fig. 48] Fig. 48 shows pieces of pixel information of the subject image acquired from the plural top pixel information acquisition areas of the imaging device of Fig. 38 when the pixel information acquisition areas are located at the moved position [3'].

[Fig. 49] Fig. 49 shows pieces of pixel information of the subject image acquired from plural leftmost pixel information acquisition areas of the imaging device of Fig. 38 when the pixel information acquisition areas are located at the moved position [7'].

[Fig. 50] Fig. 50 shows a relationship between sets of pieces of pixel information of the subject image acquired from the plural top pixel information acquisition areas of the imaging device of Fig. 38 when the pixel information acquisition areas are located at moved positions [6'] and [9'].

[Fig. 51] Fig. 51 illustrates an operation of acquiring pieces of pixel information of the subject image of an inner pixel information acquisition area of the imaging device of Fig. 38.

[Fig. 52] Fig. 52 pieces of pixel information of the subject image acquired by the imaging device of Fig. 15.

[Fig. 53] Fig. 53 is a flowchart of a process according to which the imaging apparatus of Fig. 31 takes an image.

## DETAILED DESCRIPTION OF THE EXEMPLARY EMBODIMENTS

Exemplary embodiments of the present invention and their modifications will be hereinafter described in detail with reference to the drawings.

<Exemplary embodiment 1>

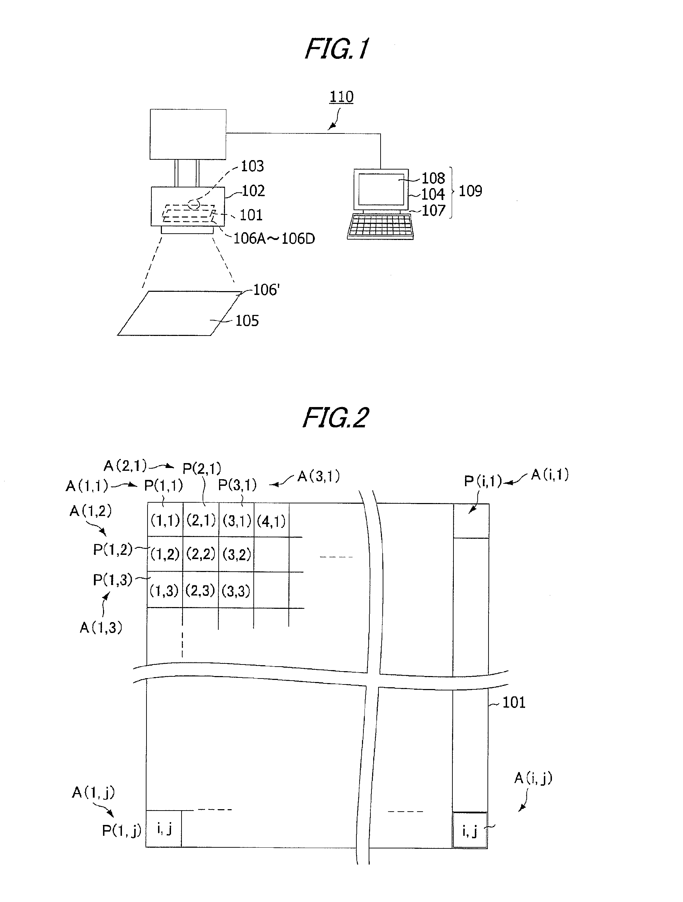

An imaging apparatus according to a first exemplary embodiment of the invention will be outlined below with reference to Figs. 1 and 2.

Fig. 1 is a schematic diagram of the imaging apparatus according to the first exemplary embodiment of the invention. Fig. 2 is a block diagram showing the configuration of an imaging device used in the imaging apparatus according to the first exemplary embodiment.

The imaging apparatus 110 of Fig. 1 includes an imaging unit 102 including an imaging device 101 which shoots a subject 105 and converts a resulting image into an electrical signal and plural light shield plates 106A-106D; a driving section 103 which drives the light shield plates 106A-106D in order one at a time so that the light shield plate 106 being driven is located at a light interrupting position C where it partially interrupts incident light coming from the subject 105 and being incident on the imaging device 101; a control section 104 which controls the imaging device 101, the imaging unit 102, and the driving section 103; a storage section 107 which stores image data of the subject 105 produced by the imaging unit 102; and a display unit 108 which displays an image of the subject 105 based on the image data.

The imaging unit 102 includes, in addition to the imaging device 101, an imaging lens (not shown) which forms an image of light coming from the subject 105 on the imaging device 101. The imaging device 101 converts the image, formed by the imaging lens, of the incident light coming from the subject 105 into an electrical signal. The imaging device 101 is a CCD (charge-coupled device) imaging device, a CMOS (complementary metal oxide semiconductor) imaging device, or the like which has plural photodetecting elements for photoelectrically converting an image (hereinafter referred to as "subject image") 105' that is formed on the imaging device 101 itself by the imaging lens. The imaging unit 102 has a function of an imaging part.

The driving section 103 drives the light shield plates 106A-106D in order one at a time in units of a fraction of the length of each sideline of a photodetecting element so that the light shield plate 106 being driven is located at the light interrupting position C where it partially interrupts incident light coming from the subject 105 and being incident on the imaging device 101. It is preferable that the driving section 103 be an actuator using a piezoelectric element or the like because it is required to be so accurate as to be able to drive the light shield plate 106 so that it is moved with respect to the imaging device 101 in units of a fraction of the length of each sideline of a photodetecting element.

In the first exemplary embodiment, the control section 104, the storage section 107, and the display unit 108 are parts of a computer 109. Although not shown in any drawing, the control section 104 is composed of a ROM (read-only memory) which is stored with programs according which the imaging apparatus 110 performs various functions, a CPU (central processing unit) which performs any of the various functions of the imaging apparatus 110 by executing a corresponding program stored in the ROM, a RAM (random access memory) which stores, when necessary, data etc. that are necessary when the CPU performs any of various kinds of processing, and other components.

As described later in detail, each of the light shield plates 106A-106D may have any shape as long as it can shield, from light, at least part of each of pixel information acquisition areas of the imaging device 101 in units of a region (hereinafter referred to as "subpixel") that measures, in each of the vertical direction and the horizontal direction, the length of a pixel divided by an integer (e.g., 2 or 3).

The control section 104 drives the imaging unit 102 by controlling the driving section 103, generates image data by processing an electrical signal that is output from the imaging device 101, and stores the generated image data in the storage section 107. The control section 104 displays the image taken by the imaging unit 102 on the display unit 108 based on the generated image data. Furthermore, the control section 104 performs calculation processing (described later) in processing the electrical signal that is output from the imaging device 101.

The display unit 108 is a liquid crystal display or the like. The storage section 107 consists of a DRAM (dynamic random access memory), a ROM (read-only memory), a hard disk drive, etc.

[Configuration of imaging device]

Next, the imaging device 101 will be described with reference to Fig. 2. The imaging device 101 is formed by plural photodetecting elements which are arranged two-dimensionally. Each photodetecting element has a photodetecting surface having a prescribed area. When light is incident on the photodetecting surface, each photodetecting element generates signal charge corresponding to one pixel through photoelectric conversion according to a quantity of light received by the photodetecting surface. The photodetecting surface of each photodetecting element will be hereinafter referred to as "pixel information acquisition area." Therefore, the entire photodetecting surface of the imaging device 101 which is a two-dimensional array of the photodetecting elements can be divided into plural pixel information acquisition areas in which each of the photodetecting elements generates a signal charge corresponding to a single pixel.

As shown in Fig. 2, the total number of pixels of the imaging device 101 is determined by the number of pixel information acquisition areas that constitute the photodetecting surface of the imaging device 101. For example, if the number of pixel information acquisition areas arranged in the horizontal direction (i.e., the number of horizontally arranged pixels) is represented by i and the number of pixel information acquisition areas arranged in the vertical direction (i.e., the number of vertically arranged pixels) is represented by j, (i, j: arbitrary natural number), the total number of pixels of the imaging device 101 is given by i x j.

With the above notation, the imaging device 101 has photodetecting elements A(1, 1), A(2, 1), A(3, 1), "', A(1, 2), ···, A(1, 3), ···, A(i, j). The pixel information acquisition areas of the photodetecting elements A(1, 1), A(2, 1), A(3, 1), ···, A(1, 2), ..., A(1, 3), ···, A(i, j) are denoted by P(1, 1), P(2, 1), P(3, 1), ···, P(1, 2), ···, P(1, 3), ···, P(i, j), respectively.

Since each pixel information acquisition area generates signal charge corresponding to one pixel, information indicating the position of each pixel information acquisition area of the imaging device 101 will be hereinafter referred to as "pixel address." With the top-left end defined as a reference position, pieces of information (pixel addresses) indicating the positions of the pixel information acquisition areas arranged rightward from the top-left end are (1, 1), (2, 1), ···, (i, 1), and pixel addresses indicating the positions of the pixel information acquisition areas arranged downward from the top-left end are (1, 1), (1, 2), ···, (1, j). The pixel address of the bottom-right end is (i, j), and the pixel addresses of the other pixel information acquisition areas are as shown in Fig. 2.

[Imaging operation]

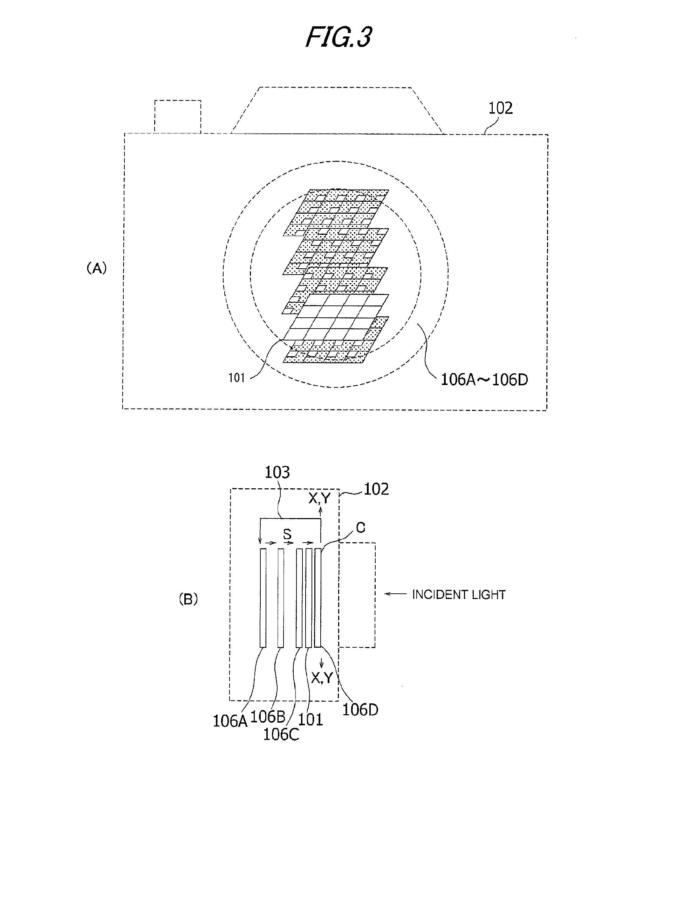

An operation that the above-configured imaging apparatus 110 shoots a subject 105 will be described below with reference to Figs. 3-5.

Fig. 3 is schematic diagrams of the imaging unit 102 of the imaging apparatus 110 according to the first exemplary embodiment of the invention. In the first exemplary embodiment, the imaging apparatus 110 is equipped with the imaging unit 102 having the single imaging device 101 and the plural light shield plates 106A-106D and the driving section 103 for driving the light shield plates 106A-106D.

The imaging unit 102 is equipped with the single imaging device 101 and the plural light shield plates 106A-106D. The light shield plates 106A-106D are placed, in order one at a time, at the light interrupting position C where the light shield plate 106 properly interrupts light being incident on the imaging device 101 and thereby allows incidence, on the imaging device 101, only necessary pieces of pixel information. Then, at the light interrupting position C, the position of the light shield plate 106 is adjusted finely in units of the length of a subpixel in each of the directions X and Y in the plane that is perpendicular to the incident light so that the light shield plate 106 interrupts the incident light properly.

As shown in part (B) of Fig. 3, the driving section 103 moves each of the light shield plates 106A-106D to the light interrupting position C under the control of the control section 104. Then, under the control of the control section 104, the driving section 103 finely adjusts the position of the light shield plate 106 selected from the light shield plates 106A-106D and placed at the light interrupting position C in units of the length of a subpixel in each of the directions X and Y in the plane that is perpendicular to incident light being incident on the imaging device 101 so that the light shield plate 106 interrupts the incident light properly.

The driving section 103 has a first drive mechanism which moves one of the light shield plates 106A-106D from a storage place S to the light interrupting position C under the control of the control section 104. For example, the first drive mechanism may have the same configuration as a CD changer which takes out an arbitrary CD from a cartridge housing plural CDs and sets it. The driving section 103 also has a second drive mechanism which finely adjusts the position of the thus-taken-out light shield plate 106 located at the light interrupting position C in units of the length of a subpixel in each of the directions X and Y in the plane that is perpendicular to incident light so that the light shield plate 106 is moved to a prescribed position. The second drive mechanism may be composed of an actuator using a piezoelectric element, a distance sensor, etc.

Each of the light shield plates 106A-106D is configured so as to partially interrupt light that is incident on the imaging device 101. In the first exemplary embodiment, since the plural light shield plates 106A-106D each of which serves to partially interrupt incident light are provided, necessary pieces of pixel information corresponding to the respective subpixels can be acquired by a single imaging device, that is, it is not necessary to provide plural imaging devices. The cost can thus be reduced.

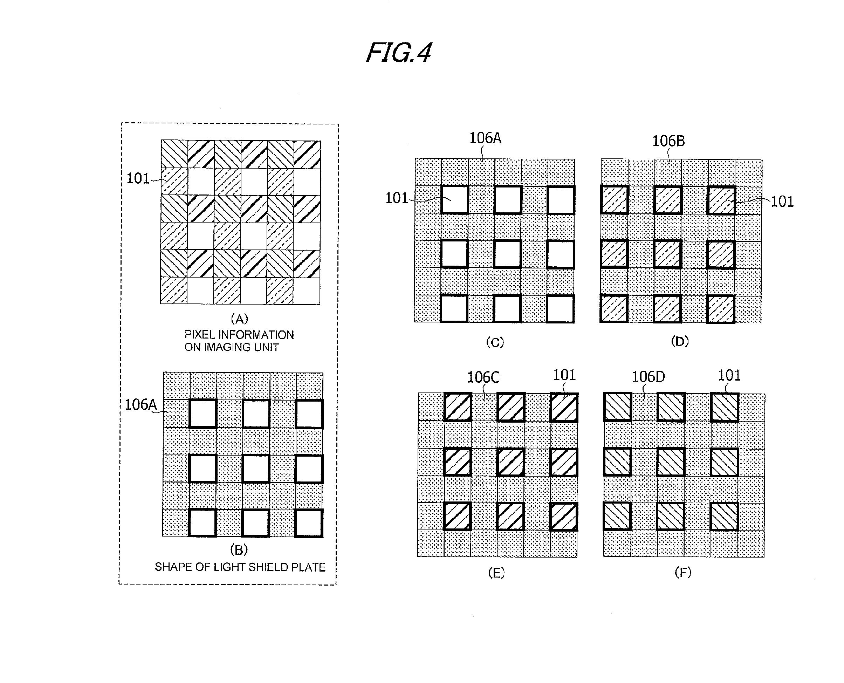

Fig. 4 shows an example manner of shielding the imaging device 101 from light using the plural light shield plates 106A-106D. Each of the light shield plates 106A-106D is configured to as to shield the imaging device 101 from light in units of a region that is the same in area as one pixel divided by an integer. To facilitate understanding, the following description will be directed to a case that each pixel is equally divided into four parts.

Part (A) of Fig. 4 shows a relationship between the imaging device 101 and pieces of pixel information to be acquired. Part (B) of Fig. 4 shows the light shield plate 106A as an example of the light shield plates 106A-106D. Parts (C)-(F) of Fig. 4 show sets of pieces of pixel information that the imaging device 101 can produce in states that it is shielded from light by the light shield plates 106A-106D, respectively.

As shown in parts (C)-(F) of Fig. 4, the light shield plates 106A-106D are formed so as to stop light beams corresponding to different 3/4 regions of the pixel information acquisition area of each pixel of the imaging device 101, respectively.

For example, the light shield plate 106A is formed so as to allow incident light to reach the bottom-right 1/4 region of the pixel information acquisition area of each pixel of the imaging device 101 and prohibit the incident light from reaching the other, 3/4 region of the pixel information acquisition area.

Part (C) of Fig. 4 shows pieces of pixel information that are acquired when the driving section 103 has moved the light shield plate 106A to the light interrupting position C and finely adjusted its position so as to register it with the imaging device 101.

For example, the light shield plate 106B is formed so as to allow incident light to reach the bottom-left 1/4 region of the pixel information acquisition area of each pixel of the imaging device 101 and prohibit the incident light from reaching the other, 3/4 region of the pixel information acquisition area.

Part (D) of Fig. 4 shows pieces of pixel information that are acquired when the driving section 103 has moved the light shield plate 106B to the light interrupting position C and finely adjusted its position so as to register it with the imaging device 101.

For example, the light shield plate 106C is formed so as to allow incident light to reach the top-right 1/4 region of the pixel information acquisition area of each pixel of the imaging device 101 and prohibit the incident light from reaching the other, 3/4 region of the pixel information acquisition area.

Part (E) of Fig. 4 shows pieces of pixel information that are acquired when the driving section 103 has moved the light shield plate 106C to the light interrupting position C and finely adjusted its position so as to register it with the imaging device 101.

For example, the light shield plate 106D is formed so as to allow incident light to reach the top-left 1/4 region of the pixel information acquisition area of each pixel of the imaging device 101 and prohibit the incident light from reaching the other, 3/4 region of the pixel information acquisition area.

Part (F) of Fig. 4 shows pieces of pixel information that are acquired when the driving section 103 has moved the light shield plate 106D to the light interrupting position C and finely adjusted its position so as to register it with the imaging device 101.

As described above, in the first exemplary embodiment, since information corresponding to each original pixel can be calculated by combining together four pieces of pixel information that are acquired from the imaging device 101 when the respective light shield plates 106A-106D are used, the number of pixels that are four times the number of pixels of the single imaging device 101 can be obtained. Furthermore, this can be done in a short time because what needs to be performed is only switching between the light shield plates 106A-106D and making adjustments. Therefore, an image having a large number of pixels can be generated at high speed and a low cost with high accuracy using an image sensor having a small number of pixels.

To facilitate understanding, the first exemplary embodiment is directed to the case that the four light shield plates 106A-106D are used, the number of light shield plates can be set at an arbitrary number as long as pieces of pixel information corresponding to all divisional regions of each pixel can be obtained.

For example, where imaging is performed using plural light shield plates each of which allows incident light to reach only a 1/M region (M: arbitrary natural number) of each of the pixel information acquisition areas P(1, 1)-P(i, j) of the respective pixels of the imaging device 101 and prohibits the incident light from reaching the other region of each pixel information acquisition area, M light shield plates are prepared which allow incident light to reach different 1/M regions of each pixel information acquisition area of the imaging device 101. The subject 105 is shot M times while switching is made between the M light shield plates, and pieces of pixel information generated by a pixel information calculating section are combined together.

[Pixel information acquisition process]

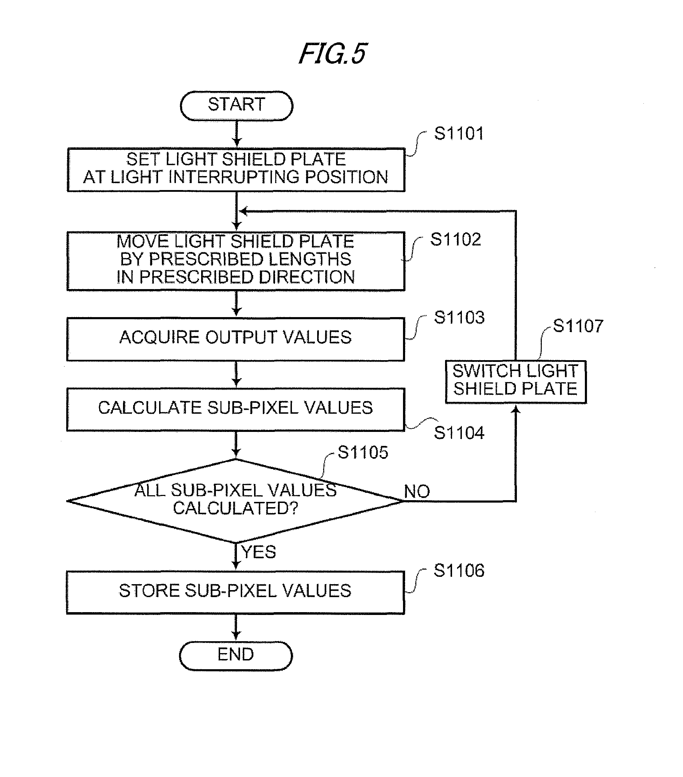

A process according to which the imaging apparatus 110 according to the first exemplary embodiment takes an image of a subject 105 will be described below with reference to Fig. 5. This process is executed under the control of the control section 104.

First, at step S1101, the control section 104 controls the driving section 103 to set a light shield plate 106 at a prescribed position with respect to the imaging device 101 and a subject 105. More specifically, the control section 104 controls the driving section 103 to set a light shield plate 106 at the light interrupting position C where it properly shields the imaging device 101 from incident light coming from the subject 105. One of the light shield plates 106A-106D that is selected at this stage to shield the imaging device 101 for shooting the subject 105 is called "light shield plate 106."

At step S1102, the control section 104 moves the light shield plate 106 by prescribed lengths in prescribed directions.

More specifically, the control section 104 controls the driving section 103 to move the light shield plate 106 to a prescribed position where it shields the imaging device 101 properly by moving it in units of the length of a subpixel in each of the directions X and Y in the plane that is perpendicular to incident light.

At step S1103, the control section 104 causes imaging and acquires output values of the imaging device 101.

More specifically, the control section 104 controls the imaging unit 102 to perform imaging, acquire output values of the pixel information acquisition areas P(1, 1), P(2, 1), P(3, 1), ···, P(1, 2), ···, P(1, 3), ···, P(i, j) of the imaging device 101, and store them in the storage section 107.

At step S1104, the control section 104 calculates subpixel values.

More specifically, the control section 104 calculates subpixel values of the pixel addresses (1, 1)-(i, j) of a subject image 105' based on the output values of the pixel information acquisition areas P(1, 1), P(2, 1), P(3, 1), ···, P(1, 2), ···, P(1, 3), ···, P(i, j) of the imaging device 101, respectively, and stores the calculated subpixel values in the storage section 107.

At step S1105, the control section 104 judges whether or not subpixel values have been calculated for all the regions of each pixel.

More specifically, the control section 104 judges whether or not imaging has been performed using all the light shield plates 106A-106D. If it is judged that there remains a shield plate(s) that has not been used yet, the process moves to step S1107. At step S1107, the light shield plate 106 is switched. More specifically, assume that, for example, steps S1102-S1105 have been executed using the light shield plate 106A and switching should be made from the light shield plate 106A to the light shield plate 106B. In this case, the control section 104 controls the driving section 103 to return the light shield plate 106A from the light interrupting position C to the light shield plate storage place S. Furthermore, the driving section 103 moves the light shield plate 106B from the storage place S to the light interrupting position C.

On the other hand, if it is judged at step S1105 that all subpixel values of every pixel address (m, n) (m, n: natural number) of the subject image 105' have been calculated, that is, imaging has been performed using all the light shield plates 106A-106D, the process moves to step S1106. At step S1106 the control section 104 stores, as pieces of pixel information, all the calculated pixel values (subpixel values) in the storage section 107 in such a manner that they are correlated with the corresponding pieces of position information of the subject image 105'. If necessary, the control section 104 displays an image based on all the calculated pixel values. More specifically, the control section 104 controls the display unit 108 to display an image of the subject 105 based on all the pieces of pixel information of the subject image 105' stored in the storage section 107. Then, the pixel information acquisition process is finished.

The imaging apparatus 110 according to the first exemplary embodiment is equipped with the imaging device 101 having the photodetecting elements A(m, n) which have the pixel information acquisition areas P(m, n) as the divisional photodetecting surfaces each having a prescribed area and produce output values corresponding to received light quantities, respectively, and the plural light shield plates 106A-106D which partially interrupt, in different patterns, incident light coming from a subject 105 and being incident on the imaging device 101. In the first exemplary embodiment, each of the light shield plates 106A-106D stops incident light in units of 1/4 of the area of one pixel. The imaging apparatus 110 performs the imaging method which includes step S1103 of performing imaging while switching between the light shield plates 106A-106D having the different light shield patterns (step S1107) and acquiring output values of the respective photodetecting elements A(m, n) of the imaging device 101, step S1104 of calculating subpixel values corresponding to light quantities received by regions smaller than the photodetecting surfaces P(m, n) of the photodetecting elements A(m, n) of the imaging device 101 based on the output values of the photodetecting elements A(m, n) of the imaging device 101, respectively, and step S1106 of storing the subpixel values calculated by step S1104 in such a manner that they are correlated with respective pieces of position information of a subject image 105'.

In the above imaging method, finer pieces of pixel information of a subject can be obtained based on output values corresponding to regions smaller than the photodetecting surfaces P(m, n) (pixel information acquisition areas) of the photodetecting elements A(m, n) while the masked region of each photodetecting element is changed. As a result, a high-resolution image can be obtained at a low cost without the need for increasing the number of photodetecting elements A(m, n) or connecting images. Step S1102 of moving the light shield plate 106 by prescribed lengths in prescribed directions and step S1107 of switching the light shield plate 106 constitute an exposure control step of controlling exposure of the imaging device 101 by partially interrupting incident light coming from a subject 105 so that different regions of each of at least part of the pixel information acquisition areas P(1, 1)-P(i, j) arranged in the vertical direction and the horizontal direction are masked in units of an area that is smaller than the area of one pixel.

As described above, in the first exemplary embodiment, since imaging is performed while switching is made between the four light shield plates 106A-106D having different light shield patterns, pieces of pixel information of four divisional pixels (subpixels) of each pixel can be obtained from the single imaging device 101. Therefore, a resolution that is four times the actual resolution of the imaging device 101 can be obtained. This can be done in a short time because what needs to be performed is only switching between the light shield plates 106A-106D and making adjustments. Therefore, an image having a large number of pixels can be generated at high speed and a low cost with high accuracy using an image sensor having a small number of pixels.

To facilitate understanding, the first exemplary embodiment is directed to the case that the four light shield plates 106A-106D are used, the number of light shield plates can be set at an arbitrary number as long as pieces of pixel information corresponding to all divisional regions of each pixel can be obtained. More specifically, pieces of pixel information can be obtained from divisional regions of each pixel, the number of divisional regions being equal to the number of light shield plates, and hence a resolution that is equal to the actual resolution of the imaging device 101 multiplied by the number of light shield plates can be obtained.

For example, where imaging is performed using plural light shield plates each of which allows incident light to reach only a 1/M region (M: arbitrary natural number) of each of the pixel information acquisition areas P(1, 1)-P(i, j) of the respective pixels of the imaging device 101 and prohibits the incident light from reaching the other region of each pixel information acquisition area, M light shield plates are prepared which allow incident light to reach different 1/M regions of each pixel information acquisition area of the imaging device 101. A subject 105 is shot M times while switching is made between the M light shield plates, and pieces of pixel information generated by the pixel information calculating section are combined together.

<Exemplary embodiment 2>

In the first exemplary embodiment, as shown in Fig. 4, a high-resolution image is obtained by the single imaging device 101 by switching between the plural light shield plates 106A-106D having different light shield patterns. The invention is not limited to it.

Pieces of pixel information corresponding to respective subpixels can also be obtained from each one-pixel photodetecting element of the single imaging device by interrupting light to shine on the imaging device by moving a single light shield plate in units of a subpixel instead of using plural light shield plates. This mode will be described below as a second exemplary embodiment.

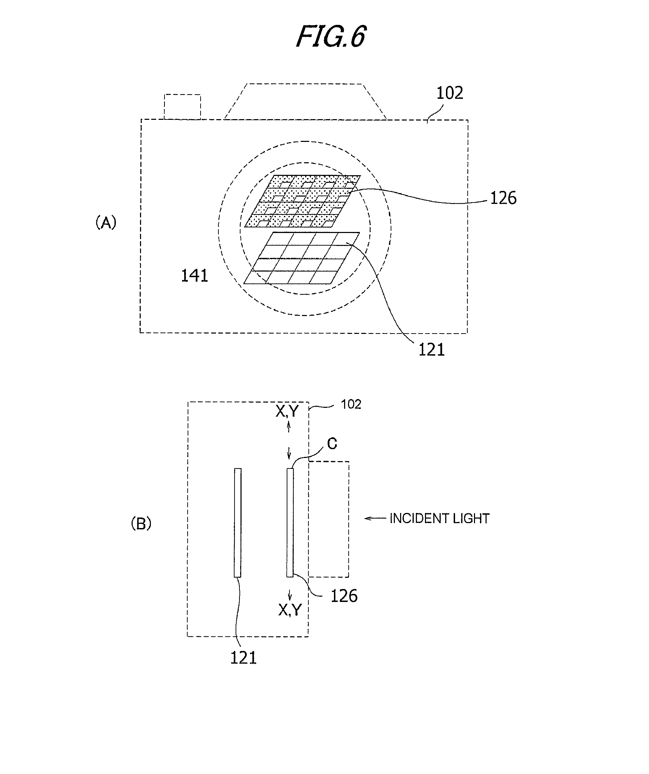

Fig. 6 is a schematic diagram of an imaging unit of an imaging apparatus according to the second exemplary embodiment of the invention. The imaging apparatus according to the second exemplary embodiment is different from that according to the first exemplary embodiment in that the former is equipped with an imaging unit 102 having a single imaging device 121 and a single light shield plate 126 and a driving section 120 for driving the light shield plate 126 instead of the imaging unit 102 and the driving section 103 of the latter. Components etc. having the same ones in the first exemplary embodiment are given the same reference symbols and will not be described in detail.

More specifically, the imaging unit 102 is equipped with the single imaging device 121 and the single light shield plate 126. The light shield plate 126 which is disposed at the light interrupting position C is moved in units of the length of a subpixel in each of the directions X and Y in the plane that is perpendicular to incident light being incident on the imaging unit 102 so as to be placed at a prescribed position so that the light shield plate 126 interrupts the incident light properly. The position of the light shield plate 126 is performed by the driving section 123 under the control of the control section 104. The driving section 123 may be composed of an actuator using a piezoelectric element, a distance sensor, etc.

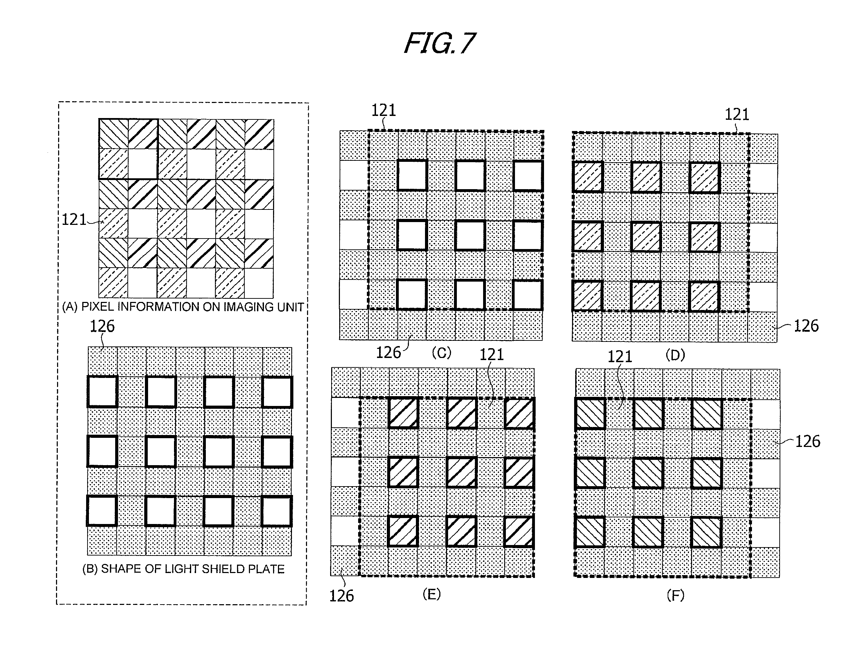

Part (A) of Fig. 7 shows a relationship between the imaging device 121 and pieces of pixel information to be acquired, and part (B) of Fig. 7 shows a shape of the light shield plate 126.

The light shield plate 126 shown in part (B) of Fig. 7 has such a size as to be able to cover the entire surface of the imaging device 121 and has, in each of the vertical direction and the horizontal direction, a margin that is so wide as to be able to mask an additional area corresponding to at least one subpixel.
The light shield plate 126 is formed so as to allow incident light to reach only a 1/4 region of each pixel information acquisition area of the imaging device 121 and prohibit the incident light from reaching the other, 3/4 region of each pixel information acquisition area when it is located at each prescribed position. Parts (C)-(F) of Fig. 7 show sets of pieces of pixel information that the imaging device 121 can produce when the light shield plate 126 is placed at the respective prescribed positions.

In the second exemplary embodiment, imaging is performed while the driving section 123 moves the light shield plate 126 to the various positions with respect to the imaging device 121 under the control of the control section 104, whereby the same sets of pieces of pixel information as the sets of pieces of pixel information shown the in parts (C)-(F) of Fig. 4 which are acquired using the light shield plates 106A-106D can be acquired as shown in parts (C)-(F) of Fig. 7.

First, part (C) of Fig. 7 shows a state that the driving section 123 has driven the light shield plate 126 so that it allows incident light to reach the bottom-right 1/4 region of each pixel information acquisition area of the imaging device 121 and prohibits the incident light from reaching the other, 3/4 region of each pixel information acquisition area. When imaging is performed in this state, the same pieces of pixel information as the pieces of pixel information shown in part (C) of Fig. 4 can be acquired as shown in part (C) Fig. 7.

Part (D) of Fig. 7 shows a state that the driving section 123 has driven the light shield plate 126 so that it allows incident light to reach the bottom-left 1/4 region of each pixel information acquisition area of the imaging device 121 and prohibits the incident light from reaching the other, 3/4 region of each pixel information acquisition area. When imaging is performed in this state, the same pieces of pixel information as the pieces of pixel information shown in part (D) of Fig. 4 can be acquired as shown in part (D) Fig. 7.

Part (E) of Fig. 7 shows a state that the driving section 123 has driven the light shield plate 126 so that it allows incident light to reach the top-right 1/4 region of each pixel information acquisition area of the imaging device 121 and prohibits the incident light from reaching the other, 3/4 region of each pixel information acquisition area. When imaging is performed in this state, the same pieces of pixel information as the pieces of pixel information shown in part (E) of Fig. 4 can be acquired as shown in part (E) Fig. 7.

Part (F) of Fig. 7 shows a state that the driving section 123 has driven the light shield plate 126 so that it allows incident light to reach the top-left 1/4 region of each pixel information acquisition area of the imaging device 121 and prohibits the incident light from reaching the other, 3/4 region of each pixel information acquisition area. When imaging is performed in this state, the same pieces of pixel information as the pieces of pixel information shown in part (F) of Fig. 4 can be acquired as shown in part (F) Fig. 7.

Pieces of pixel information corresponding to the respective subpixels can thus be acquired as shown in part (A) of Fig. 7 by moving the light shield plate 126 in units of a subpixel perpendicularly to incident light so that the pixel information acquisition area of each pixel of the imaging device 121 is masked as a result of those movements (switching between light shield plates is not necessary).

[Pixel information acquisition process]

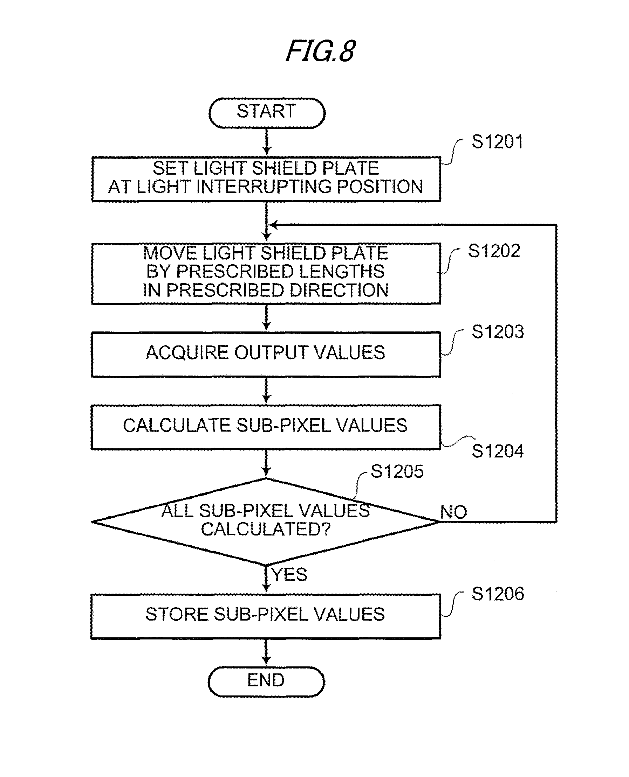

A process according to which the imaging apparatus 110 takes an image of a subject 105 will be described below with reference to Fig. 8. This process is executed under the control of the control section 104.

First, at step S1201, the control section 104 controls the driving section 103 to set the light shield plate 106 at a prescribed position with respect to the imaging device 121 and a subject 105.

At step S1202, the control section 104 moves the light shield plate 166 by a prescribed length in prescribed directions.

More specifically, the control section 104 controls the driving section 123 to move the light shield plate 126 to one of the positions of parts (C)-(F) of Fig. 7.

At step S1203, the control section 104 causes imaging and acquires output values of the imaging device 121.

More specifically, the control section 104 controls the imaging unit 102 to perform imaging, acquire output values of the pixel information acquisition areas P(1, 1), P(2, 1), P(3, 1), ···, P(1, 2), ···, P(1, 3), ···, P(i, j) of the imaging device 121, and store them in the storage section 107.

At step S1204, the control section 104 calculates subpixel values.

More specifically, the control section 104 calculates subpixel values of the pixel addresses (1, 1)-(i, j) of a subject image 105' based on the output values of the pixel information acquisition areas P(1, 1), P(2, 1), P(3, 1), ···, P(1, 2), ···, P(1, 3), ···, P(i, j) of the imaging device 121, respectively, and stores the calculated subpixel values in the storage section 107.

At step S1205, the control section 104 judges whether or not subpixel values have been calculated for all the regions of each pixel.

More specifically, the control section 104 judges whether or not all subpixel values of every pixel address (m, n) (m, n: natural number) of the subject image 105' have been calculated, where m is an arbitrary natural number of 1 to i and n is an arbitrary natural number of 1 to j. If it is judged that a subpixel value(s) of each pixel address (m, n) is yet to be calculated, the process returns to step S1202.

On the other hand, if it is judged at step S1205 that all subpixel values of every pixel address (m, n) of the subject image 105' have been calculated, the process moves to step S1206. At step S1206 the control section 104 stores, as pieces of pixel information, all the calculated pixel values (subpixel values) in the storage section 107 in such a manner that they are correlated with the corresponding pieces of position information of the subject image 105'. If necessary, the control section 104 displays an image based on all the calculated pixel values. More specifically, the control section 104 controls the display unit 108 to display an image of the subject 105 based on all the pieces of pixel information of the subject image 105' stored in the storage section 107. Then, the pixel information acquisition process is finished.

In the imaging apparatus 110 according to the second exemplary embodiment, the photodetecting elements A(m, n) have the divisional photodetecting surfaces P(m, n) as the pixel information acquisition areas each having a prescribed area and produce output values corresponding to light quantities received by the divisional photodetecting surfaces P(m, n), respectively. The imaging apparatus 110 performs the imaging method which includes step S1203 of acquiring output values of the photodetecting elements A(m, n) in each of plural states in which different regions of each photodetecting element A(m, n) are shielded from incident light coming from a subject, step S1204 of calculating subpixel values corresponding to light quantities received by regions smaller than the photodetecting surfaces P(m, n) of the photodetecting elements A(m, n) based on the output values of the photodetecting elements A(m, n) acquired in each of the plural states, respectively, and step S1206 of storing the subpixel values calculated by step S1204 in such a manner that they are correlated with respective pieces of position information of a subject image.

In the above imaging method, finer pieces of pixel information of a subject image can be obtained based on output values corresponding to regions smaller than the photodetecting surfaces P(m, n) of the photodetecting elements A(m, n) while the masked region of each photodetecting element is changed. Therefore, it is not necessary to increase the number of photodetecting elements A(m, n), connect images, or providing plural light shield plates. As a result, a high-resolution image can be obtained at a low cost. Step S1102 of moving the light shield plate 126 by prescribed lengths in prescribed directions constitutes an exposure control step of controlling exposure of the imaging device 121 by partially interrupting incident light coming from a subject so that different regions of each of at least part of the pixel information acquisition areas P(1, 1)-P(i, j) arranged in the vertical direction and the horizontal direction are masked in units of an area that is smaller than the area of one pixel.

In the second exemplary embodiment, to produce a high-resolution image, the position of the light shield plate 126 with respect to the photodetecting elements is changed in units a distance that is shorter than the length of a photodetecting element during imaging. The photodetecting elements are not moved during imaging. What needs to be performed is only moving the light shield plate 126 by a short distance each time, and hence can be done in a short time. Therefore, an image having a large number of pixels can be generated at high speed and a low cost with high accuracy using an image sensor having a small number of pixels.

To facilitate understanding, the second exemplary embodiment is directed to the case that sets of pieces of information obtained by performing imaging each time the light shield plate 126 us moved to one of the four positions shown in parts (C)-(F) of Fig. 7 are used. However, the number of times of imaging performed after movement of the light shield plate 126 may be an arbitrary number as long as pieces of pixel information corresponding to all divisional regions of each pixel can be obtained.

For example, where imaging is performed using the light shield plate 126 which allows incident light to reach only a 1/M region (M: arbitrary natural number) of each of the pixel information acquisition areas P(1, 1)-P(i, j) of the respective pixels of the imaging device 121 and prohibits the incident light from reaching the other region of each pixel information acquisition area, the light shield plate 126 is moved to M different positions so as to allow incident light to reach different 1/M regions of each pixel information acquisition area of the imaging device 121. A subject 105 is shot M times while the light shield plate 126 is placed at the M different positions with respect to the subject 105, and generated pieces of pixel information are combined together.

<Modification of second exemplary embodiment>

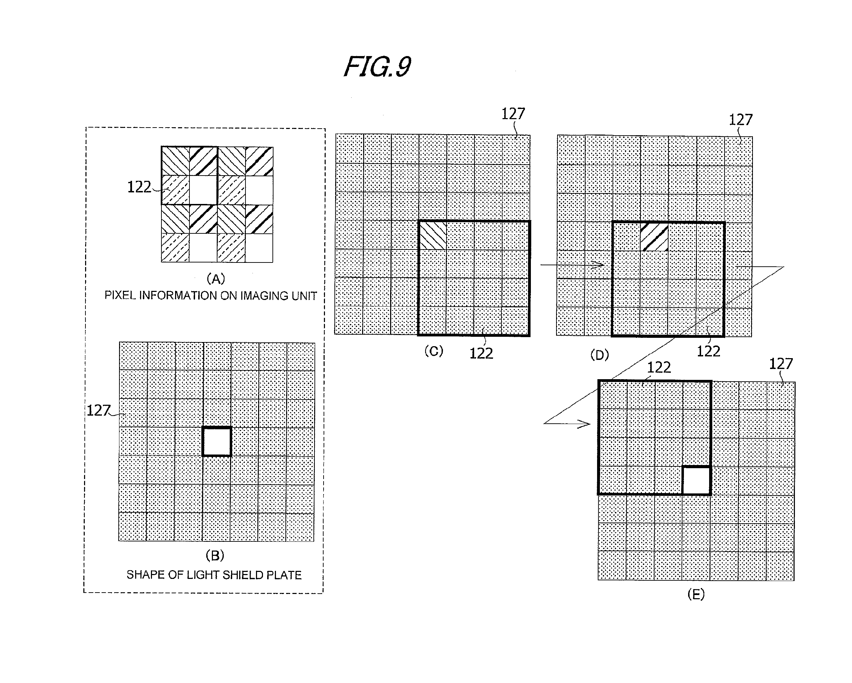

As mentioned above, the light shield plate may have various shapes. Although the second exemplary embodiment is directed to the case that the light shield plate 126 prohibits incident light from reaching the 3/4 region of each pixel information acquisition area, the invention is not limited to such a case. For example, the light shield plate may be formed so as to prohibit incident light from reaching a wider area. Fig. 9 shows an example of such a light shield plate and an imaging device.

Part (A) of Fig. 9 shows a relationship between an imaging device 122 and pieces of pixel information to be acquired. Part (B) of Fig. 9 shows a modified light shield plate 127 which prohibits incident light from reaching a wider are, that is, allows incident light to reach a smaller area.

The light shield plate 127 shown in part (B) of Fig. 9 is formed so as to allow incident light to reach only a 1/16 region of a pixel of the imaging device 122. That is, the light shield plate 127 is formed so as to allow incident light to reach only a 1/16 region of a pixel and prohibit the incident light from reaching the other region of the imaging device 122.

Part (C)-(E)of Fig. 9 show pieces of information that the imaging device 122 can produce as the light shield plate 127 is moved. In the state of part (C) of Fig. 9, pixel information of a first 1/16 region (uppermost and leftmost) of the imaging device 122 is acquired. In the state of part (D) of Fig. 9, pixel information of a second 1/16 region (uppermost and immediate right side from the leftmost) of the imaging device 122 is acquired. When the light shield plate 127 has been moved to the position of part (E) of Fig. 9, pixel information of the last 1/16 region (lowermost and rightmost) of the imaging device 122 is acquired. What needs to be performed is only moving the light shield plate 127, and hence can be done in a short time. Therefore, an image having a large number of pixels can be generated at high speed and a low cost with high accuracy using an image sensor having a small number of pixels.

As described above, in this modification, pieces of pixel information can be obtained in a subpixel-by-subpixel basis by performing imaging while moving the light shield plate 127 a number of times, the number being equal to the number of necessary pieces of pixel information. Whereas in the second exemplary embodiment pieces of pixel information can be obtained from a wide area, in this modification the area from which to acquire pieces of pixel information can be restricted to a narrow area. Therefore, this modification is advantageous when applied to a case that pieces of pixel information can be acquired with very high accuracy but the shooting area is narrow.

<Exemplary embodiment 3>

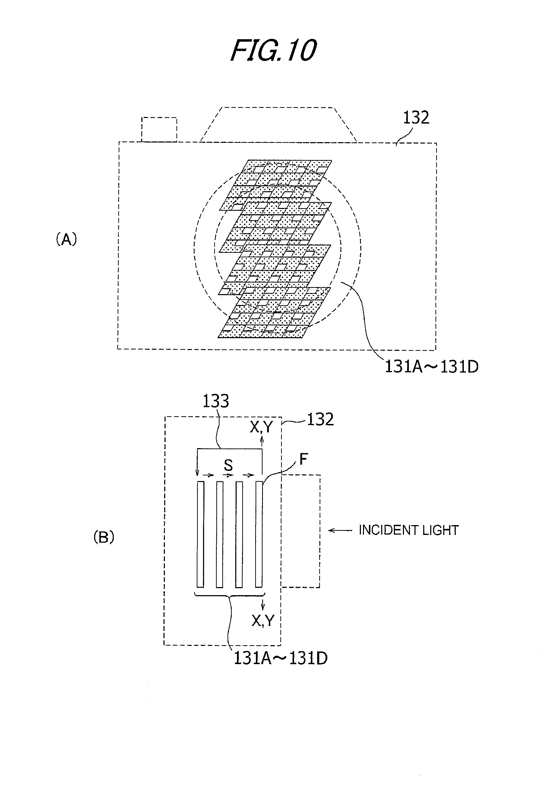

Fig. 10 is a schematic diagram of an imaging unit of an imaging apparatus according to a third exemplary embodiment of the invention. The imaging apparatus according to the third exemplary embodiment is different from that according to the first exemplary embodiment in that the former is equipped with an imaging unit 132 having plural imaging devices 131A-131D and a driving section 133 for driving the plural imaging devices 131A-131D. Components etc. having the same ones in the first exemplary embodiment are given the same reference symbols and will not be described in detail.

As shown in Fig. 10, in the imaging apparatus according to the third exemplary embodiment, the imaging unit 132 is equipped with plural imaging devices 131A-131D. The driving section 133 drives the imaging devices 131A-131D in different manners under the control of the control section 104. First, the driving section 133 guides one of the imaging devices 131A-131D to an imaging position F where the one imaging device 131 can shoot a subject in such a manner as to receive incident light properly. Then, the driving section 133 moves the imaging device 131 located at the imaging position F in units of the length of a subpixel in each of the directions X and Y in the plane that is perpendicular to incident light so that the imaging device 131 is moved to a prescribed position (see part (B) of Fig. 10).

More specifically, the driving section 133 has a first drive mechanism which moves one of the imaging devices 131A-131D from a storage place S to the imaging position F under the control of the control section 104. For example, the first drive mechanism may have the same configuration as a CD changer which takes out an arbitrary CD from a cartridge housing plural CDs and sets it. The driving section 133 also has a second drive mechanism which moves the imaging device 131 located at the imaging position F in units of the length of a subpixel in each of the directions X and Y in the plane that is perpendicular to incident light so that the imaging device 131 is moved to a prescribed position. The second drive mechanism may be composed of an actuator using a piezoelectric element, a distance sensor, etc.

Each of the imaging devices 131A-131D has a light shield film which is formed so as to partially interrupt light that is incident on it. Therefore, in the third exemplary embodiment, it is not necessary to provide a light shield plate(s) for partially interrupting light that is incident on the imaging device(s).

Furthermore, in the third exemplary embodiment, arrangement directions and positions of apertures of each of the light shield films formed on the respective imaging devices 131A-131D may be set arbitrarily.

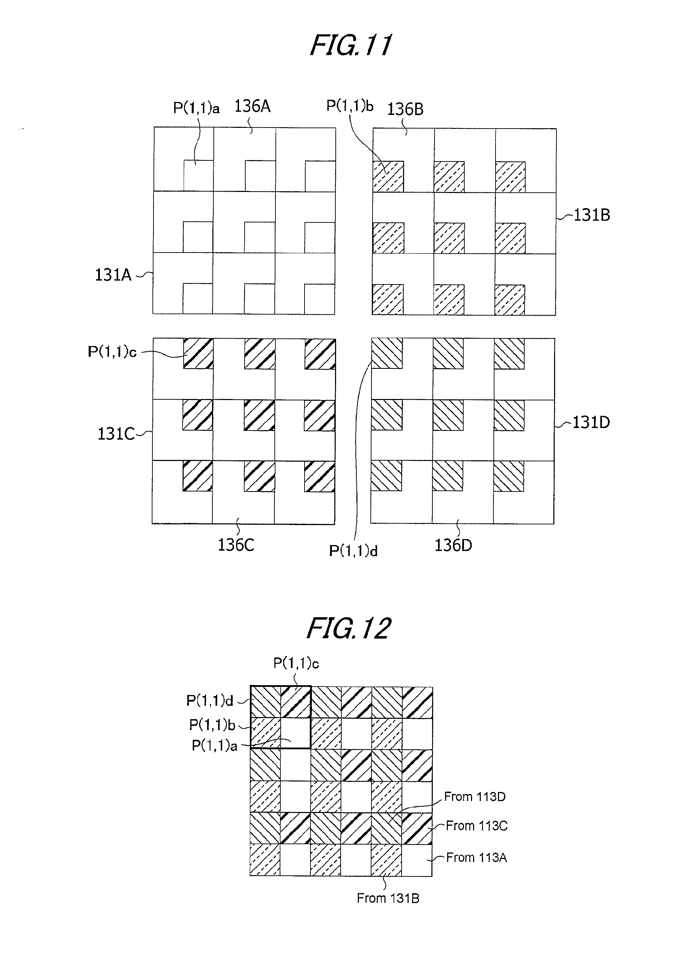

Fig. 11 shows example imaging devices 131A-131D which are formed with respective light shield films. Each light shield film is formed to as to shield the imaging device 131 from light in units of a region that is the same in area as one pixel divided by an integer. To facilitate understanding, the following description will be directed to a case that each pixel is equally divided into four parts.

As shown in Fig. 11, each light shield film is formed on the imaging device 131 so as to prohibit incident light from reaching a 3/4 region of each of the pixel information acquisition areas P(1, 1)-P(i, j).

For example, in the imaging device 131A, a light shield film 136A is formed so as to allow incident light to reach only the bottom-right 1/4 region of each of the pixel information acquisition area P(1, 1)-P(i, j) and prohibit the other, 3/4 region of each pixel information acquisition area.

For example, in the imaging device 131B, a light shield film 136B is formed so as to allow incident light to reach only the bottom-left 1/4 region of each of the pixel information acquisition area P(1, 1)-P(i, j) and prohibit the other, 3/4 region of each pixel information acquisition area.

For example, in the imaging device 131C, a light shield film 136C is formed so as to allow incident light to reach only the top-right 1/4 region of each of the pixel information acquisition area P(1, 1)-P(i, j) and prohibit the other, 3/4 region of each pixel information acquisition area.

For example, in the imaging device 131D, a light shield film 136D is formed so as to allow incident light to reach only the top-left 1/4 region of each of the pixel information acquisition area P(1, 1)-P(i, j) and prohibit the other, 3/4 region of each pixel information acquisition area.

The driving section 133 moves one of the above-configured imaging devices 131A-131D from the storage place S to the imaging position F under the control of the control section 104. Then, the driving section 133 moves the imaging device 131 located at the imaging position F in units of the length of a subpixel in each of the directions X and Y in the plane that is perpendicular to incident light so that the imaging device 131 is moved to a prescribed position. Then, imaging is performed.

Fig. 12 shows pieces of pixel information acquired from the imaging devices 131A-131D.

In Fig. 12, the portion enclosed by the thick solid line indicates pieces of information of one pixel. As shown in Fig. 12, for example, the pieces of information of the one top-left pixel are pixel information P(1, 1)a which is acquired from the 1/4 region of the pixel information acquisition area P(1, 1) of the imaging device 131A, pixel information P(1, 1)b which is acquired from the 1/4 region of the pixel information acquisition area P(1, 1) of the imaging device 131B, pixel information P(1, 1)c which is acquired from the 1/4 region of the pixel information acquisition area P(1, 1) of the imaging device 131C, and pixel information P(1, 1)d which is acquired from the 1/4 region of the pixel information acquisition area P(1, 1) of the imaging device 131D.

Although to facilitate understanding the above description is directed to the case that there are only nine pixel information acquisition areas, the number of pixel information acquisition areas of each of the imaging devices 131A-131D is arbitrary. It suffices that the light shield films shield the respective imaging devices from light in similar patterns in units of a subpixel.

[Pixel information acquisition process]

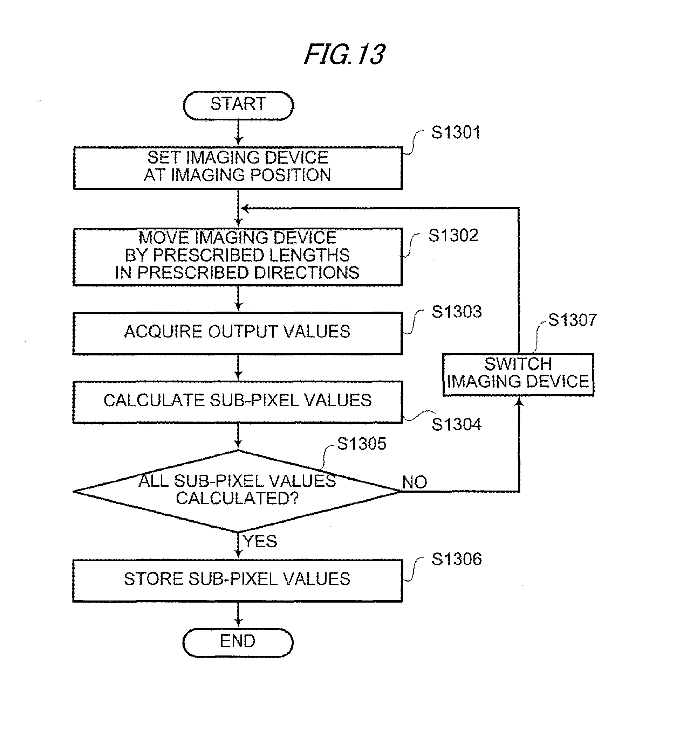

A process according to which the imaging apparatus according to the third exemplary embodiment takes an image of a subject 105 will be described below with reference to Fig. 13. This process is executed under the control of the control section 104.

First, at step S1301, the control section 104 controls the driving section 133 to set an imaging device 131 at a prescribed position with respect to a subject 105. More specifically, the control section 104 controls the driving section 103 to set an imaging device 131 at the imaging position F where it can shoot the subject 105. One of the imaging devices 131A-131D that is selected at this stage to shoot the subject 105 is called "imaging device 131."

At step S1302, the control section 104 moves the imaging device 131 by prescribed lengths in prescribed directions.

More specifically, the control section 104 controls the driving section 103 to move the imaging device 131 to a prescribed position that is suitable to shoot the subject 105 by moving it in units of the length of a subpixel in each of the directions X and Y in the plane that is perpendicular to incident light.

At step S1303, the control section 104 causes imaging and acquires output values of the imaging device 131. More specifically, the control section 104 controls the imaging unit 132 to perform imaging, acquire output values of the pixel information acquisition areas P(1, 1), P(2, 1), P(3, 1), ···, P(1, 2), ···, P(1, 3), ···, P(i, j) of the imaging device 131, and store them in the storage section 107.

At step S1304, the control section 104 calculates subpixel values. More specifically, the control section 104 calculates subpixel values of the pixel addresses (1, 1)-(i, j) of a subject image 105' based on the output values of the pixel information acquisition areas P(1, 1), P(2, 1), P(3, 1), ···, P(1, 2), ···, P(1, 3), ···, P(i, j) of the imaging device 131, respectively, and stores the calculated subpixel values in the storage section 107.

At step S1305, the control section 104 judges whether or not subpixel values have been calculated for all the regions of each pixel. More specifically, the control section 104 judges whether or not imaging has been performed using all the imaging devices 131A-131D. If it is judged that there remains an imaging device(s) that has not been used yet, the process moves to step S1307, where the imaging device 131 is switched. More specifically, assume that, for example, steps S1302-S1305 have been executed using the imaging device 131A and switching should be made from the imaging device 131A to the imaging device 131B. In this case, the control section 104 controls the driving section 133 to return the imaging device 131A from the imaging position F to the imaging device storage place S. Furthermore, the driving section 133 moves the imaging device 131B from the storage place S to the imaging position F.

On the other hand, if it is judged at step S1305 that all subpixel values of every pixel address (m, n) of the subject image 105' have been calculated, that is, imaging has been performed using all the imaging devices 131A-131D, the process moves to step S1306. At step S1306 the control section 104 stores, as pieces of pixel information, all the calculated pixel values (subpixel values) in the storage section 107 in such a manner that they are correlated with the corresponding pieces of position information of the subject image 105'. If necessary, the control section 104 displays an image based on all the calculated pixel values. More specifically, the control section 104 controls the display unit 108 to display an image of the subject 105 based on all the pieces of pixel information of the subject image 105' stored in the storage section 107. Then, the pixel information acquisition process is finished.

Step S1302 of moving the imaging device 131 by prescribed lengths in prescribed directions and step S1307 of switching the imaging device 131 constitute an exposure control step of controlling exposure of the imaging device 101 by partially interrupting incident light coming from a subject 105 so that different regions of each of at least part of the pixel information acquisition areas P(1, 1)-P(i, j) arranged in the vertical direction and the horizontal direction are masked in units of an area that is smaller than the area of one pixel.

The imaging apparatus according to the third exemplary embodiment is equipped with the plural imaging devices 131A-131D in which the photodetecting elements A(m, n) which have the pixel information acquisition areas P(m, n) as the divisional photodetecting surfaces each having a prescribed area and produce output values corresponding to received light quantities, respectively, are shielded partially in different patterns from incident light coming from a subject 105. In the third exemplary embodiment, the light shield film of each of the imaging devices 131A-131D stops incident light in units of 1/4 of the area of one pixel. The imaging apparatus performs the imaging method which includes step S1303 of performing imaging while switching between the imaging devices 131A-131D having the different light shield patterns (step S1307) and acquiring output values of the respective photodetecting elements A(m, n) of each of the imaging devices 131A-131D, step S1304 of calculating subpixel values corresponding to light quantities received by regions smaller than the photodetecting surfaces P(m, n) of the photodetecting elements A(m, n) of each of the imaging devices 131A-131D based on the output values of the photodetecting elements A(m, n) of each of the imaging devices 131A-131D, respectively, and step S1306 of storing the subpixel values calculated by step S1304 in such a manner that they are correlated with respective pieces of position information of a subject image 105'.

In the above imaging method, finer pieces of pixel information of a subject can be obtained based on output values corresponding to regions smaller than the photodetecting surfaces P(m, n) (pixel information acquisition areas) of the photodetecting elements A(m, n) while the masked region of each photodetecting element is changed. As a result, a high-resolution image can be obtained at a low cost without the need for increasing the number of photodetecting elements A(m, n) or connecting images. What needs to be performed is only switching between the imaging devices 131A-131D and making adjustments, and hence can be done in a short time. Therefore, an image having a large number of pixels can be generated at high speed and a low cost with high accuracy using an image sensor having a small number of pixels.

The third exemplary embodiment is directed to the case that a subject 105 is shot with such accuracy that each pixel is equally divided into sour subpixels, the invention is not limited to such a case.

For example, where imaging is performed using plural imaging devices each of which is formed with a light shield film that allows incident light to reach only a 1/M region (M: arbitrary natural number) of the pixel information acquisition area of each pixel of the imaging device and prohibits the incident light from reaching the other region of the pixel information acquisition area of each pixel, M imaging devices are prepared which is formed with respective light shield films that allow incident light to reach different 1/M regions of each set of corresponding pixel information acquisition areas of the imaging devices. A subject 105 is shot M times while switching is made between the M imaging devices, and pieces of pixel information generated by a pixel information calculating section are combined together.

<Exemplary embodiment 4>

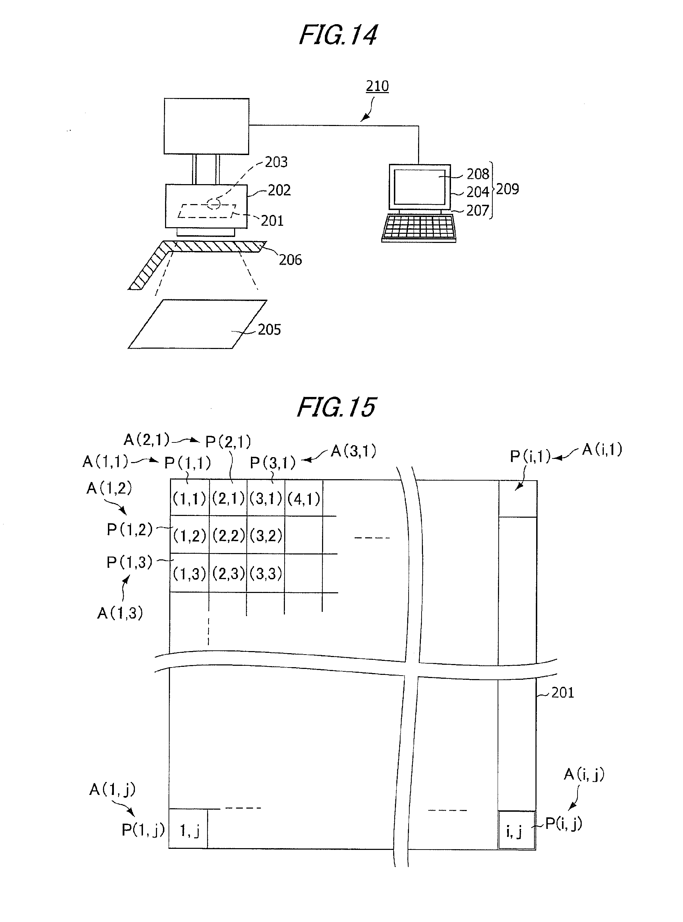

An imaging apparatus according to a fourth exemplary embodiment will be outlined below with reference to Figs. 14 and 15.

Fig. 14 is a schematic diagram of the imaging apparatus according to the fourth exemplary embodiment of the invention. Fig. 2 is a block diagram showing the configuration of an imaging device used in the imaging apparatus according to the fourth exemplary embodiment.

The imaging apparatus 210 of Fig. 14 includes an imaging unit 202 including an imaging device 201 which shoots a subject 205 and converts a resulting image into an electrical signal; a driving section 203 which drives the imaging device 201; a control section 204 which controls the imaging device 201, the imaging unit 202, and the driving section 203; a storage section 207 which stores image data of the subject 205 generated by the imaging unit 202; and a display unit 208 which displays an image of the subject 205 based on the image data.

The imaging unit 202 includes, in addition to the imaging device 201, an imaging lens (not shown) which forms an image of light coming from the subject 205 on the imaging device 201. The imaging device 201 converts the image, formed by the imaging lens, of the incident light coming from the subject 205 into an electrical signal. The imaging device 201 is a CCD (charge-coupled device) imaging device, a CMOS (complementary metal oxide semiconductor) imaging device, or the like which has plural photodetecting elements for photoelectrically converting an image (hereinafter referred to as "subject image") 205' that is formed on the imaging device 201 itself by the imaging lens. The imaging unit 202 has a function of an imaging part.

The driving section 203 drives the imaging device 201 in units of a fraction of the length of each sideline of a photodetecting element with respect to the subject 205. It is preferable that the driving section 203 be an actuator using a piezoelectric element or the like because it is required to be so accurate as to be able to drive the imaging device 201 so that it is moved with respect to the subject 205 in units of a fraction of the length of each sideline of a photodetecting element.

In the fourth exemplary embodiment, the control section 204, the storage section 207, and the display unit 208 are parts of a computer 209. Although not shown in any drawing, the control section 204 is composed of a ROM (read-only memory) which is stored with programs according which the imaging apparatus 210 performs various functions, a CPU (central processing unit) which performs any of the various functions of the imaging apparatus 210 by executing a corresponding program stored in the ROM, a RAM (random access memory) which stores, when necessary, data etc. that are necessary when the CPU performs any of various kinds of processing, and other components.

An L-shaped light shield plate 206 which is formed so as to partially shield, from light, the end pixel information acquisition areas arranged alongside at least two sidelines of the imaging device 201 is disposed between the imaging device 201 and the subject 205. The light shield plate 206 has a function of a light shield part. The position, shown in Fig. 14, of the light shield plate 206 with respect to the subject 205 is just an example, and the light shield plate 206 may be disposed at another position as long as it is suitable to partially shield, from light, the end pixel information acquisition areas arranged alongside at least two sidelines of the imaging device 201. As described later in detail, the light shield plate 206 may have a shape other than the L shape as long as it conforms to the shape of the end lines so as to be able to accurately shield, from light, at least two sidelines (end lines) of the imaging device 201 in units of a region (hereinafter referred to as "subpixel") that measures, in each of the vertical direction and the horizontal direction, the length of, for example, a pixel divided by an arbitrary integer (e.g., 2 or 3).

The control section 204 drives the imaging unit 202 by controlling the driving section 203, generates image data by processing an electrical signal that is output from the imaging device 201, and stores the generated image data in the storage section 207. The control section 204 displays the image taken by the imaging unit 202 on the display unit 208 based on the generated image data. Furthermore, the control section 204 performs calculation processing (described later) in processing the electrical signal that is output from the imaging device 201.

The display unit 208 is a liquid crystal display or the like. The storage section 207 consists of a DRAM (dynamic random access memory), a ROM (read-only memory), a hard disk drive, etc.

[Configuration of imaging device]

Next, the imaging device 201 will be described with reference to Fig. 15. The imaging device 201 is formed by plural photodetecting elements which are arranged two-dimensionally. Each photodetecting element has a photodetecting surface having a prescribed area. When light is incident on the photodetecting surface, each photodetecting element generates signal charge corresponding to one pixel through photoelectric conversion according to a quantity of light received by the photodetecting surface. The photodetecting surface of each photodetecting element is referred to as "pixel information acquisition area." Therefore, the entire photodetecting surface of the imaging device 201 which is a two-dimensional array of the photodetecting elements can be divided into plural pixel information acquisition areas where the photodetecting elements generate signal charges corresponding to the pixels, respectively.

As shown in Fig. 15, the total number of pixels of the imaging device 201 is determined by the number of pixel information acquisition areas that constitute the photodetecting surface of the imaging device 201. For example, if the number of pixel information acquisition areas arranged in the horizontal direction (i.e., the number of horizontally arranged pixels) is represented by i and the number of pixel information acquisition areas arranged in the vertical direction (i.e., the number of vertically arranged pixels) is represented by j, (i, j: arbitrary natural number), the total number of pixels of the imaging device 201 is given by i x j.

With the above notation, the imaging device 201 has photodetecting elements A(1, 1), A(2, 1), A(3, 1), ···, A (1, 2), ···, A(1, 3), ···, A(i, j). The pixel information acquisition areas of the photodetecting elements A(1, 1), A(2, 1), A(3, 1), ···, A(1, 2), ···, A(1, 3), ···, A(i, j) are denoted by P(1, 1), P(2, 1), P(3, 1), ···, P(1, 2), ···, P(1, 3), ···, P(i, j), respectively.

Since each pixel information acquisition area generates signal charge corresponding to one pixel, information indicating the position of each pixel information acquisition area of the imaging device 201 will be hereinafter referred to as "pixel address." With the top-left end defined as a reference position, pieces of information (pixel addresses) indicating the positions of the pixel information acquisition areas arranged rightward from the top-left end are (1, 1), (2, 1), ···, (i, 1), and pixel addresses indicating the positions of the pixel information acquisition areas arranged downward from the top-left end are (1, 1), (1, 2), ···, (1, j). The pixel address of the bottom-right end is (i, j), and the pixel addresses of the other pixel information acquisition areas are as shown in Fig. 2. Pieces of pixel information of a subject image 205' are given pixel addresses defined in a state that the imaging device 201 is located at a moved position [9] (described later).

[Imaging operation]

An operation that the above-configured imaging apparatus 210 shoots a subject 205 efficiently will be described below with reference to Figs. 3-5.

First, the light shield plate 206 is placed over a subject 205 to be shot by the imaging device 201 so that the end pixel information acquisition areas arranged alongside at least two sidelines (end lines) of the imaging device 201 are shielded partially from light. The position, shown in Fig. 14, of the light shield plate 206 with respect to the subject 205 is just an example, and the light shield plate 206 may be disposed at another position as long as it is suitable to partially shield, from light, the end pixel information acquisition areas arranged alongside at least two sidelines (end lines) of the imaging device 201. The light shield plate 206 partially shields, from light, the end pixel information acquisition areas arranged alongside at least two sidelines (end lines) of the imaging device 201. In the fourth exemplary embodiment, the subject 205 and the light shield plate 206 are fixed and the imaging device 201 is moved by the driving section 203 independently of the subject 205 and the light shield plate 206.

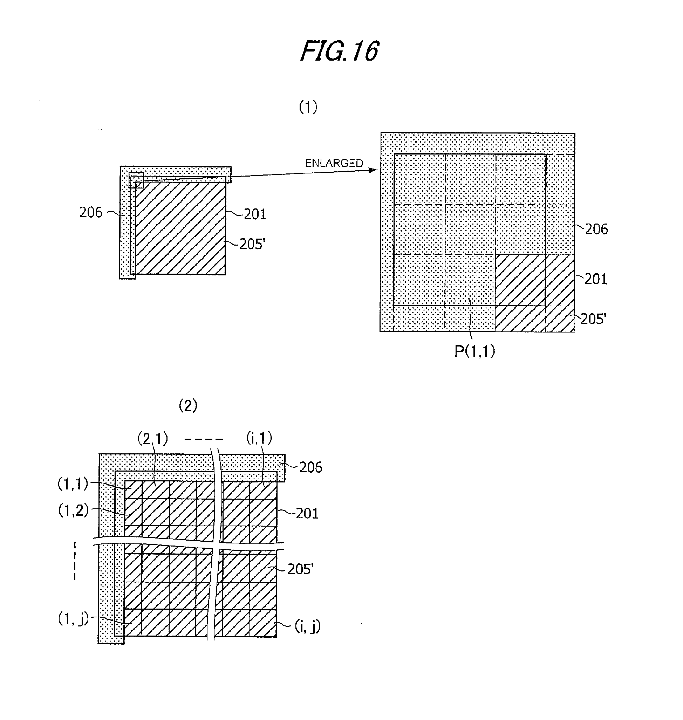

Fig. 16 shows a positional relationship, to be satisfied when first the subject 205 is covered with the light shield plate 206, between the light shield plate 206, end pixel information acquisition areas of the imaging device 201, and a subject image 205' formed on the imaging device 201.

As shown in part (1) of Fig. 16, the light shield plate 206 is placed so as to partially shield, from light, the end pixel information acquisition areas arranged alongside at least two sidelines of the imaging device 201. The right-hand part of part (1) of Fig. 16 is an enlarged diagram showing, in a more detailed manner, a relationship between the pixel information acquisition area P(1, 1) located at the top-left end of the imaging device 201 and the light shield plate 206. The region enclosed by the solid line is the top-left end pixel information acquisition area P(1, 1) of the imaging device 201. When receiving light incident thereon, the pixel information acquisition area P(1, 1) generates and outputs pixel information corresponding to one pixel. When located at the position shown in part (1) of Fig. 16, the light shield plate 206 is disposed so as to prohibit incident light from reaching that region of the pixel information acquisition area P(1, 1) which extends from each of the top sideline and the left sideline downward or leftward by 2/3 of the length of a pixel. As a result, the pixel information acquisition area P(1, 1) actually outputs pixel information corresponding to a subpixel that measures 1/9 of the area of a pixel.

The L-shaped light shield plate 206 prohibits incident light (to form the subject image 205' on the imaging device 201) from reaching a region, extending from the top or left sideline downward or rightward by 2/3 of the length of a pixel, of each of the end pixel information acquisition areas arranged alongside the top or left sideline other than the pixel information acquisition area P(1, 1). That is, when located at the position shown in part (2) of Fig. 16, the light shield plate 206 prohibits incident light from reaching a region, measuring 2/3 of the area of a pixel, of each of the top pixel information acquisition areas P(2, 1), P(3, 1), ···, P(i, 1) arranged alongside the top sideline and the left end pixel information acquisition areas P(1, 2), P(1, 3), ···, P(1, j) arranged alongside the left sideline. Therefore, each of the pixel information acquisition areas P(2, 1), P(3, 1), ···, P(i, 1) and P(1, 2), P(1, 3), ···, P(1, j) actually outputs information corresponding to a subpixel that measures 1/3 of the area of a pixel.

Next, an imaging operation according to the fourth exemplary embodiment will be described. In the fourth exemplary embodiment, the control section 204 controls the driving section 203 to repeatedly perform imaging after shifting the imaging device 201 in each of the rightward direction and the downward direction by 1/3 of the length of a pixel until moving it by the length of a pixel.

[Operation in which attention is paid to the top-left end pixel information acquisition area]

First, to facilitate understanding, relationships between movements of the imaging device 201 relative to a subject image 205' and the light shield plate 206 and sets of output values of the imaging device 201 will be described with attention paid to the top-left end pixel information acquisition area P(1, 1).

First, imaging is performed in a state that a region, measuring 2/3 of the area of a pixel, of each of the end pixel information acquisition areas arranged alongside the top sideline of the imaging device 201 and the end pixel information acquisition areas arranged alongside the left sideline is masked by the light shield plate 206 (in the case of the pixel information acquisition area P(1, 1), a region measuring 8/9 of the area of a pixel is masked). The position of the imaging device 201 with respect to the subject image 205' in this state is named a base position [1]. In the fourth exemplary embodiment, the end pixel information acquisition areas arranged alongside the top sideline in the imaging device 201 are pixel information acquisition areas of at least one row and the end pixel information acquisition areas arranged alongside the left sideline are pixel information acquisition areas of at least one column. The top-left end pixel information acquisition area P(1, 1) is the intersecting pixel information acquisition area of the horizontally arranged pixel information acquisition areas of one row and the vertically arranged pixel information acquisition areas of one column.

In the following description, attention will be paid to mesh-like small regions (subpixels; separated from each other by broken lines) obtained by equally dividing the top-left end pixel information acquisition area P(1, 1) into nine (3 × 3) parts.

The driving section 203 moves the imaging device 201 relative to the light shield plate 206 in the vertical direction and the horizontal direction in units of 1/9 of a pixel until almost all of the mesh-like small regions are put into an exposed state and a masked state.

As a result, the imaging device 201 is moved relative to the light shield plate 206 in the vertical direction and the horizontal direction in units of 1/9 of a pixel until:

in the horizontal direction, each of the vertically arranged pixel information acquisition areas of one column excluding the top-left end pixel information acquisition area P(1, 1) is put into a state that is immediately before a state that a region corresponding to one pixel is masked starting from a state that it is not masked at all; and in the vertical direction, each of the horizontally arranged pixel information acquisition areas of one row excluding the top-left end pixel information acquisition area P(1, 1) is put into a state that is immediately before a state that a region corresponding to one pixel is masked starting from a state that it is not masked at all.

Although to facilitate understanding the expression "the imaging device 201 is moved relative to the light shield plate 206 'until each of the pixel information acquisition areas of one row or column is put into a state that is immediately before a state that a region corresponding to one pixel is masked starting from a state that it is not masked at all,'" the invention is not limited to such a case. For example, in the fourth exemplary embodiment, the driving section 203 moves the imaging device 201 relative to the light shield plate 206 "until each of the pixel information acquisition areas of one row or column is put into a state that it is not masked at all starting from a state that is immediately before a state that a region corresponding to one pixel is masked" in the vertical direction and the horizontal direction. From which of the horizontally or vertically arranged pixel information acquisition areas of one row or column the driving section 203 moves the imaging device 201 relative to the light shield plate 206 "until each pixel information acquisition area is put into a state immediately before a state that a region corresponding to one pixel is masked starting from a state that it is not masked at all" or "until each pixel information acquisition area is put into a state that it is not masked at all starting from a state that is immediately before a state that a region corresponding to one pixel is masked" may be determined arbitrarily. Therefore, in this specification, the expression "until each pixel information acquisition area is put into a state immediately before a state that a region corresponding to one pixel is masked starting from a state that it is not masked at all" should not be construed as a restriction relating to temporal order.

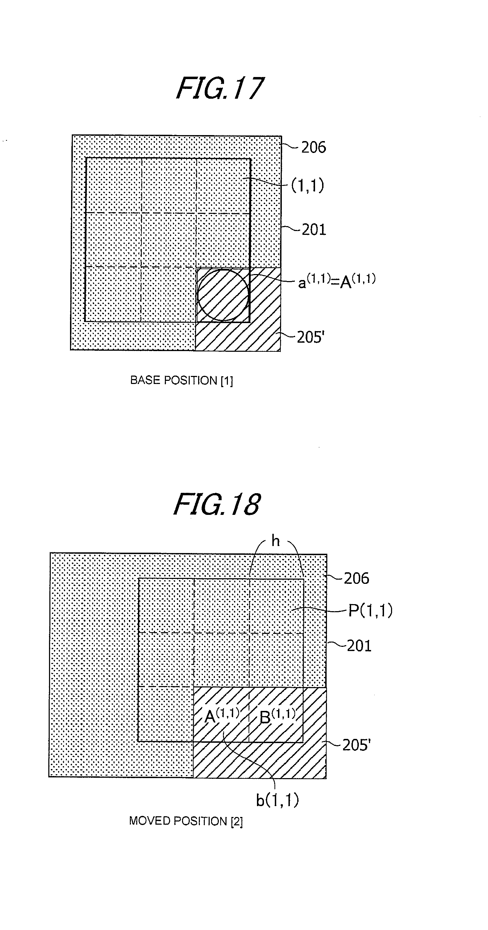

Fig. 17 shows a relationship between the position of the imaging device 201 with respect to the light shield plate 206 and output values of the imaging device 201 when the imaging device 201 is located at the base position [1], with attention paid to the top-left end pixel information acquisition area P(1, 1). Imaging is performed in the state that the region, measuring 2/3 of the length of a pixel in each of the vertical direction and the horizontal direction from the top and the left end, respectively, of the top-left end pixel information acquisition area P(1, 1) is shielded from light by the light shield plate 206.

An output value $a^{(1, 1)}$ of the pixel information acquisition area P(1, 1) is stored in the storage section 207. Furthermore, the output value $a^{(1, 1)}$ of the pixel information acquisition area P(1, 1) is stored in the storage section 207 as a pixel value $A^{(1, 1)}$ of the top-left end region of the subject image 205'.

Then, imaging is performed after the imaging device 201 is shifted rightward from the base position [1] by 1/3 of the length of a pixel relative to the subject image 205' and the light shield plate 206. The resulting position of the imaging device 201 with respect to the subject image 205' and the light shield plate 206 is named a moved position [2].

Fig. 18 shows a relationship between the imaging device 201 and the subject image 205' when the imaging device 201 has been moved rightward from the base position [1] so that the subject image 205' formed on the imaging device 201 is shifted from the pixel information acquisition area P(1, 1) (one pixel) by a distance h which is 1/3 of the length of a pixel, with attention paid to the pixel information acquisition area P(1, 1). The distance h is shorter than the dimension of each photodetecting element. The area of the masked region, shown in Fig. 18, of the pixel information acquisition area P(1, 1) is smaller than that shown in Fig. 17 by an amount corresponding to the movement of the distance h. That is, the area of the exposed region, shown in Fig. 18, of the pixel information acquisition area P(1, 1) is larger than that shown in Fig. 17 by an amount corresponding to the movement of the distance h. Pixel values are calculated progressively on a subpixel-by-subpixel basis utilizing a difference between exposed regions.

More specifically, an output value $b^{(1, 1)}$ of the pixel information acquisition area P(1, 1) produced in this state is stored in the storage section 207. Furthermore, a pixel value

$$B^{(1, 1)} = b^{(1, 1)} - a^{(1, 1)}$$

is stored in the storage section 207 as a pixel value of the region, second to the right from the top-left end region, of the subject image 205'.

Then, imaging is performed after the imaging device 201 is shifted rightward from the moved position [2] so that the subject image 205' formed on the imaging device 201 is shifted further from the pixel information acquisition area P(1, 1) (one pixel) by 1/3 of the length of a pixel. The resulting position of the imaging device 201 with respect to the subject image 205' is named a moved position [3].

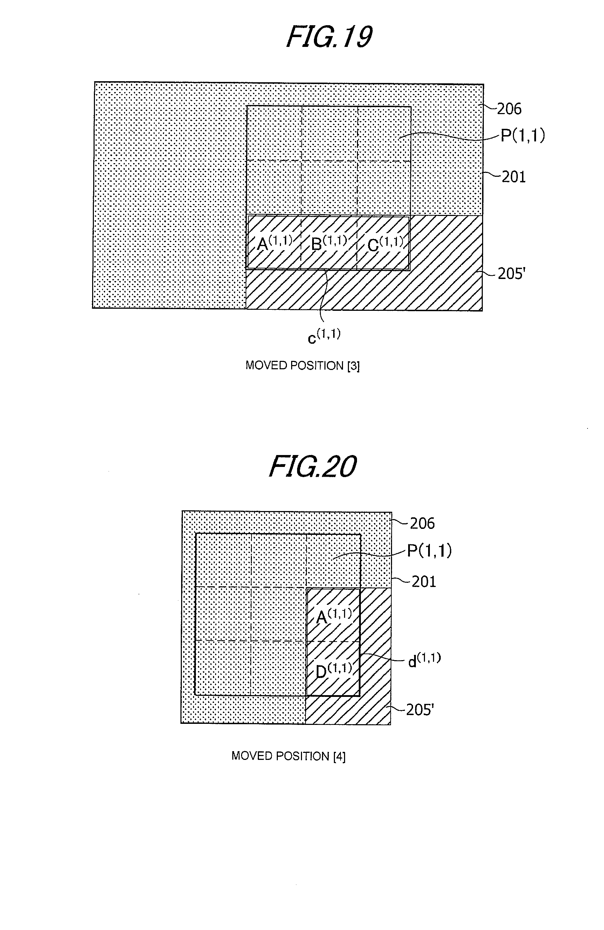

Fig. 19 shows a relationship between the imaging device 201 and the subject image 205' when the imaging device 201 is located at the moved position [3] with attention paid to the pixel information acquisition area P(1, 1).

An output value $c^{(1, 1)}$ of the pixel information acquisition area P(1, 1) produced in this state is stored in the storage section 207. Furthermore, a pixel value

$$C^{(1, 1)} = c^{(1, 1)} - (A^{(1, 1)} + B^{(1, 1)})$$

is stored in the storage section 207 as a pixel value of the region, third to the right from the top-left end region, of the subject image 205'.

Then, the imaging device 201 is returned to the base position [1], and imaging is performed after the imaging device 201 is shifted downward relative to the subject image 205' by 1/3 of the length of a pixel.

Fig. 20 shows a relationship between the imaging device 201 and the subject image 205' when the imaging device 201 has been shifted downward from the base position [1] relative to the subject image 205' by 1/3 of the length of a pixel, with attention paid to the pixel information acquisition area P(1, 1). The resulting position of the imaging device 201 with respect to the subject image 205' is named a moved position [4].

An output value $d^{(1, 1)}$ of the pixel information acquisition area P(1, 1) produced in this state is stored in the storage section 207. Furthermore, a pixel value

$$D^{(1, 1)} = d^{(1, 1)} - A^{(1, 1)}$$

is stored in the storage section 207 as a pixel value of the region, second downward from the top-left end region, of the subject image 205'.

Then, imaging is performed after the imaging device 201 is shifted rightward from the moved position [4] by 1/3 of the length of a pixel.

The resulting position of the imaging device 201 with respect to the subject image 205' is named a moved position [5] (not shown).

An output value $e^{(1, 1)}$ of the pixel information acquisition area P(1, 1) produced in this state is stored in the storage section 207. Furthermore, a pixel value

$$E^{(1, 1)} = e^{(1, 1)} - (A^{(1, 1)} + B^{(1, 1)} + D^{(1, 1)})$$

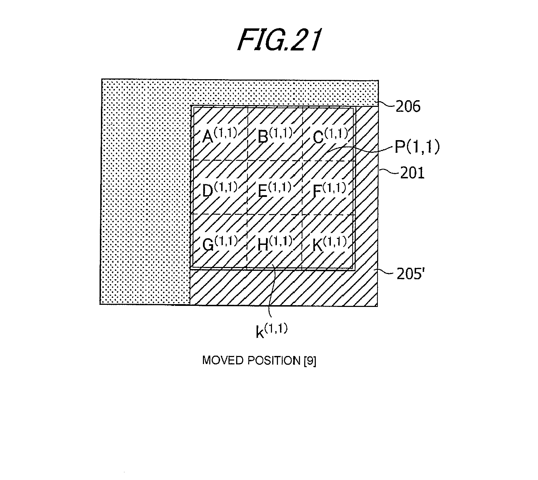

is stored in the storage section 207 as a pixel value of the region, second to the right and second downward from the top-left end region, of the subject image 205' (see Fig. 21).

Then, imaging is performed after the imaging device 201 is further shifted rightward from the moved position [5] by 1/3 of the length of a pixel.

The resulting position of the imaging device 201 with respect to the subject image 205' is named a moved position [6] (not shown).

An output value $f^{(1, 1)}$ of the pixel information acquisition area P(1, 1) produced in this state is stored in the storage section 207. Furthermore, a pixel value

$$F^{(1, 1)} = f^{(1, 1)} - (A^{(1, 1)} + B^{(1, 1)} + C^{(1, 1)} + D^{(1, 1)} + E^{(1, 1)})$$

is stored in the storage section 207 as a pixel value of the region, third to the right and second downward from the top-left end region, of the subject image 205' (see Fig. 21).

Then, the imaging device 201 is returned to the base position [1], and imaging is performed after the imaging device 201 is shifted downward from the base position [1] by 2/3 of the length of a pixel.

The resulting position of the imaging device 201 with respect to the subject image 205' is named a moved position [7] (not shown).

An output value $g^{(1, 1)}$ of the pixel information acquisition area P(1, 1) produced in this state is stored in the storage section 207. Furthermore, a pixel value

$$G^{(1, 1)} = g^{(1, 1)} - (A^{(1, 1)} + D^{(1, 1)})$$

is stored in the storage section 207 as a pixel value of the region, third downward from the top-left end region, of the subject image 205' (see Fig. 21).

Then, imaging is performed after the imaging device 201 is shifted rightward from the moved position [7] by 1/3 of the length of a pixel. The resulting position of the imaging device 201 with respect to the subject image 205' is named a moved position [8] (not shown).

An output value $h^{(1, 1)}$ of the pixel information acquisition area P(1, 1) produced in this state is stored in the storage section 207. Furthermore, a pixel value

$$H^{(1, 1)} = h^{(1, 1)} - (A^{(1, 1)} + B^{(1, 1)} + D^{(1, 1)} + E^{(1, 1)} + G^{(1, 1)})$$

is stored in the storage section 207 as a pixel value of the region, second to the right and third downward from the top-left end region, of the subject image 205' (see Fig. 21).

Then, imaging is performed after the imaging device 201 is further shifted rightward from the moved position [8] by 1/3 of the length of a pixel. The resulting position of the imaging device 201 with respect to the subject image 205' is named a moved position [9] (not shown).

An output value $k^{(1, 1)}$ of the pixel information acquisition area P(1, 1) produced in this state is stored in the storage section 207. Furthermore, a pixel value

$$K^{(1,\,1)} = k^{(1,\,1)} - (A^{(1,\,1)} + B^{(1,\,1)} + C^{(1,\,1)} + D^{(1,\,1)} + E^{(1,\,1)}$$
$$+ \, F^{(1,\,1)} + G^{(1,\,1)})$$

is stored in the storage section 207 as a pixel value of the region, third to the right and third downward from the top-left end region, of the subject image 205' (see Fig. 21).

Fig. 21 shows a relationship between the imaging device 201 and the generated pieces of pixel information (pixel values) of the subject image 205' in the state that the imaging device 201 has been shifted to the moved position [9] from the base position [1] via the moved positions [2]-[8], with attention paid to the pixel information acquisition area P(1, 1). Pieces of pixel information of the subject image 205' are given pixel addresses defined in a state that the imaging device 201 is located at the moved position [9].

In the above-described manner, the pixel values $A^{(1,\,1)}$, $B^{(1,\,1)}$, $C^{(1,\,1)}$, $D^{(1,\,1)}$, $E^{(1,\,1)}$, $F^{(1,\,1)}$, and $G^{(1,\,1)}$ of 1/9-size subpixels of the top-left end pixel of the subject image 205' can be obtained using the pixel information acquisition area P(1, 1) of one pixel which is located at the top-left end of the imaging device 201. That is, nine pieces of pixel information can be obtained using the pixel information acquisition area P(1, 1) of one pixel.

[Operation in which attention is paid to other pixel information acquisition areas]

When imaging is performed at each of the positions [1]-[9], corresponding sets of pieces of pixel information of the subject image 205' can be acquired from pixel information acquisition areas other than the top-left end pixel information acquisition area P(1, 1). A description will now be made of an operation of acquiring sets of pieces of pixel information from the pixel information acquisition areas other than the pixel information acquisition area P(1, 1), that is, the pixel information acquisition areas P(2, 1), P(3, 1), P(1, 2), P(2, 2), P(3, 2), P(1, 3), P(2, 3), P(3, 3), ⋯.

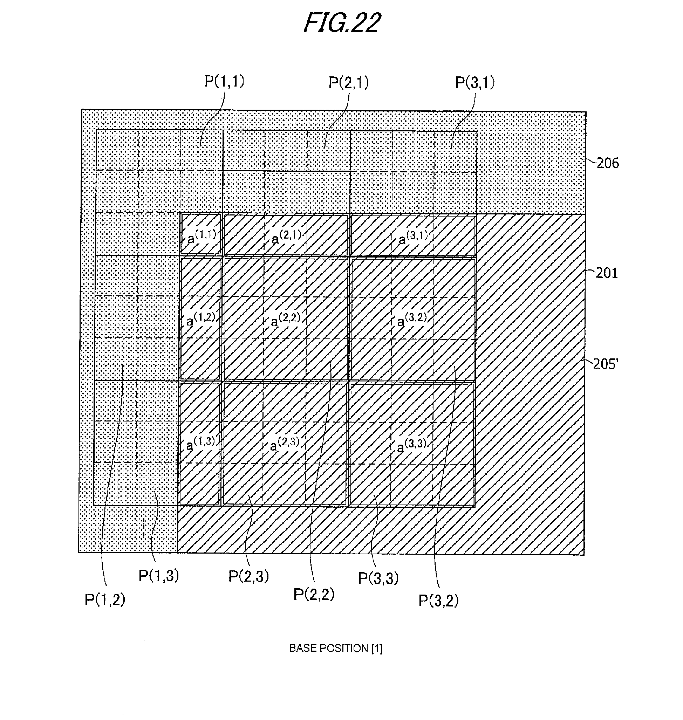

As shown in Fig. 22, when the imaging device 201 is located at the base position [1], output values $a^{(1,\,1)}$, $a^{(2,\,1)}$, $a^{(3,\,1)}$, $a^{(1,2)}$, $a^{(2,2)}$, $a^{(3,2)}$, $a^{(1,\,3)}$, $a^{(2,3)}$, $a^{(3,\,3)}$, ⋯ of the pixel information acquisition areas P(1, 1), P(2, 1), P(3, 1), P(1, 2), P(2, 2), P(3, 2), P(1, 3), P(2, 3), P(3, 3), ⋯ are stored in the storage section 207.

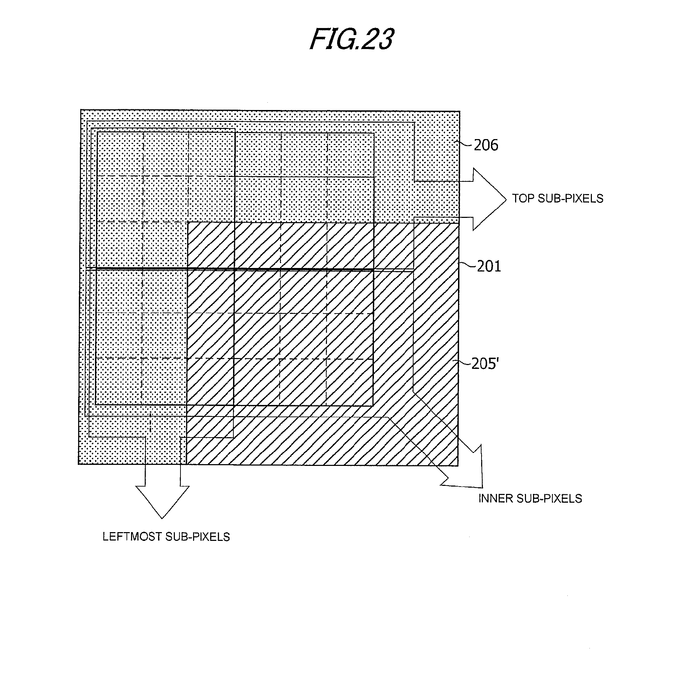

As shown in Fig. 23, pieces of pixel information of the subject image 205' can be acquired from the top subpixels by similar methods by moving the imaging device 201 rightward relative to the subject 205 and the light shield plate 206 to the moved positions [2] and [3] starting from the base position [1]. Likewise, pieces of pixel information of the subject image 205' can be acquired from the leftmost subpixels by similar methods by moving the imaging device 201 downward relative to the subject 205 and the light shield plate 206 to the moved positions [4] and [5]. Furthermore, pieces of pixel information of the subject image 205' can be acquired from the inner subpixels and pixel information acquisition areas by similar methods based on the thus-acquired pieces of pixel information of the top subpixels and the leftmost subpixels by moving the imaging device 201 to the moved positions [6]-[9].

A description will now be made of how to acquire pieces of pixel information of the entire subject image 205' for three separate cases of acquiring pieces of pixel information from the top subpixels, acquiring pieces of pixel information from the leftmost subpixels, and acquiring pieces of pixel information from the inner subpixels and pixel information acquisition areas of the subject image 205'.

[Acquisition of pieces of pixel information of top subpixels]

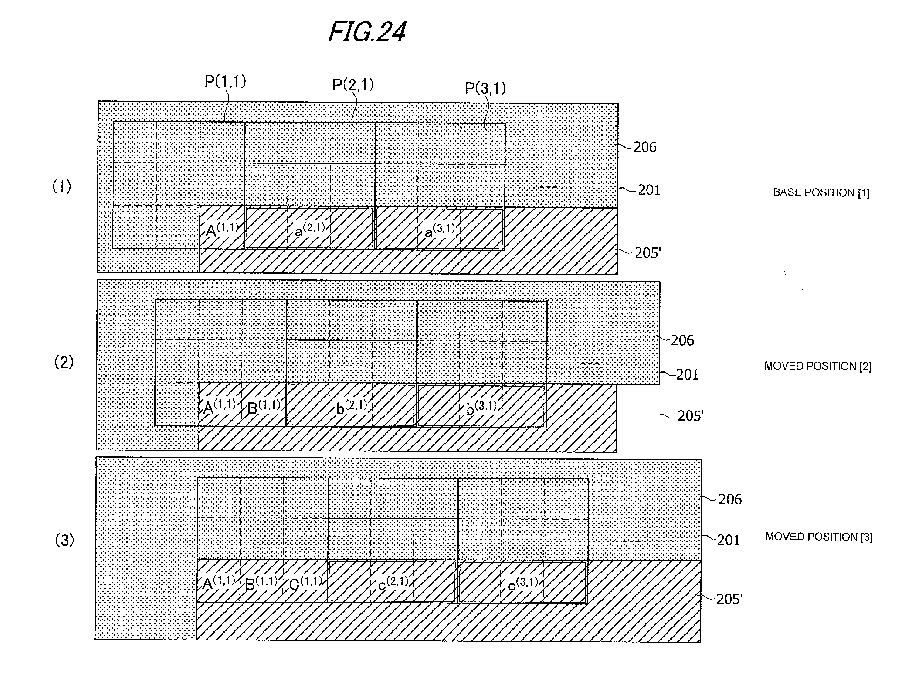

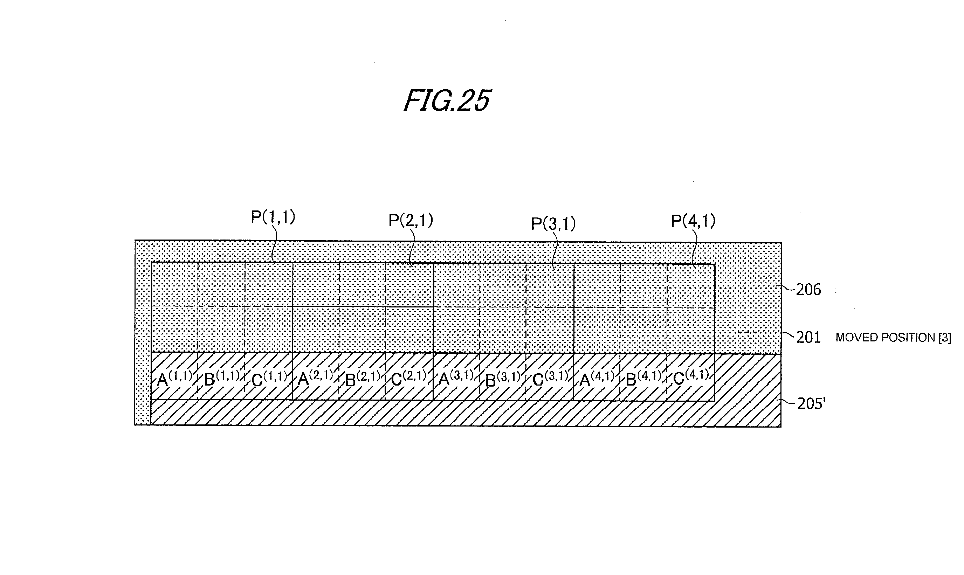

A method for acquiring pieces of pixel information of top subpixels of the subject image 205' of the pixel information acquisition area P(1, 1), P(2, 1), P(3, 1), ⋯ will be described below with reference to Figs. 24 and 25.

As shown in part (1) of Fig. 24, when the imaging device 201 is located at the base position [1], output values of the pixel information acquisition areas P(1, 1), P(2, 1), and P(3, 1) are stored in the storage section 207 as $A^{(1,\,1)}$, $a^{(2,\,1)}$, and $a^{(3,\,1)}$, respectively, because an output value $a^{(1,\,1)}$ of the pixel information acquisition area P(1, 1) is employed as pixel information $A^{(1,\,1)}$.

Then, as shown in part (2) of Fig. 24, when the imaging device 201 is located at the moved position [2], pieces of information $A^{(1,\,1)}$, $B^{(1,\,1)}$, $b^{(2,\,1)}$, and $b^{(3,\,1)}$ are stored in the storage section 207 based on output values of the pixel information acquisition areas P(1, 1), P(2, 1), and P(3, 1), because pieces of pixel information $A^{(1,\,1)}$ and $B^{(1,\,1)}$ of the pixel information acquisition area P(1, 1) are calculated by the above-described method.

Then, as shown in part (3) of Fig. 24, when the imaging device 201 is located at the moved position [3], pieces of information $A^{(1,\,1)}$, $B^{(1,\,1)}$, $C^{(1,\,1)}$, $C^{(2,\,1)}$, and $C^{(3,\,1)}$ are stored in the storage section 207 based on output values of the pixel information acquisition areas P(1, 1), P(2, 1), and P(3, 1), because pieces of pixel information $A^{(1,\,1)}$, $B^{(1,\,1)}$, and $C^{(1,\,1)}$ of the pixel information acquisition area P(1, 1) are calculated by the above-described method.

Pieces of pixel information of the top subpixels of the pixel information acquisition area P(2, 1) are calculated as follows:

$$A^{(2,\,1)} = a^{(2,\,1)} - (B^{(1,\,1)} + C^{(1,\,1)})$$

$$B^{(2,\,1)} = b^{(2,\,1)} - (C^{(1,\,1)} + A^{(2,\,1)})$$

$$C^{(2,\,1)} = c^{(2,\,1)} - (A^{(2,\,1)} + B^{(2,\,1)})$$

These pieces of pixel information are stored in the storage section 207.

Likewise, pieces of pixel information of the top subpixels of the other pixel information acquisition areas P(3, 1), P(4, 1), ⋯ are calculated according to the following equation based on output values of the pixel information acquisition areas P(1, 1), P(2, 1), P(3, 1), P(4, 1), ⋯:

$$A^{(m,\,1)} = a^{(m,\,1)} - (B^{(m-1,\,1)} + C^{(m-1,\,1)})$$

$$B^{(m,\,1)} = b^{(m,\,1)} - (C^{(m-1,\,1)} + A^{(m,\,1)})$$

$$C^{(m,\,1)} = c^{(m,\,1)} - (A^{(m,\,1)} + B^{(m,\,1)})$$

where m is an arbitrary natural number. These pieces of pixel information are stored in the storage section 207.
Fig. 25 shows the pieces of pixel information acquired in the above-described manner.

[Acquisition of pieces of pixel information of leftmost subpixels]

A method for acquiring pieces of pixel information of leftmost subpixels of the subject image 205' of the pixel information acquisition areas P(1, 1), P(1, 2), P(1, 3), ⋯ will be described below.

Output values of the pixel information acquisition areas P(1, 1), P(1, 2), P(1, 3), ⋯ to be produced when the imaging device 201 is located at the base position [1] are represented by $a^{(1,\,1)}$, $a^{(1,\,2)}$, $a^{(1,3)}$, ⋯, respectively. Output values of the pixel information acquisition areas P(1, 1), P(1, 2), P(1, 3), ⋯ obtained by imaging which is performed repeatedly as the imaging device 201 is shifted downward by 1/3 of the length of a pixel each time so as to reach the moved positions [4] and [7] starting from the base position [1] are used. That is, pieces of pixel information of the leftmost subpixels can be acquired based on the output values of the pixel information acquisition areas P(1, 1), P(1, 2), P(1, 3), ⋯, by methods similar to the methods by which pieces of pixel information of the top subpixels are acquired. Pieces of pixel information of the leftmost subpixels of the leftmost pixel information acquisition areas are calculated according to the following equations (interim equations omitted):

$$A^{(1,\,n)} = a^{(1,\,n)} - (D^{(1,\,n-1)} + G^{(1,\,n-1)})$$

$$D^{(1,\,n)} = d^{(1,\,n)} - (G^{(1,\,n-1)} + A^{(1,\,n)})$$

$$G^{(1,\,n)} = g^{(1,\,n)} - (A^{(1,\,n)} + D^{(1,\,n)})$$

where n is an arbitrary natural number. These pieces of pixel information are stored in the storage section 207.

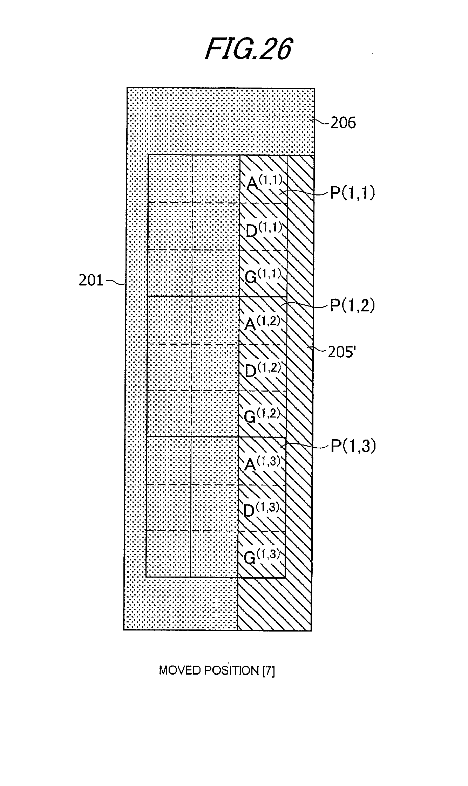

Fig. 26 shows the pieces of pixel information acquired in the above-described manner.

[Acquisition of pieces of pixel information of inner subpixels and pixel information acquisition areas]

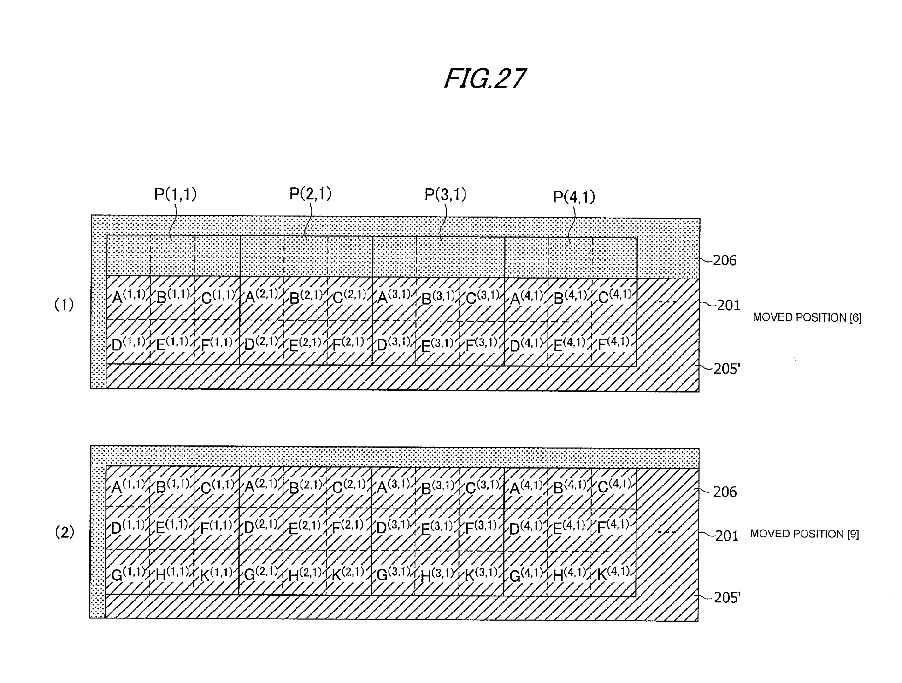

A method for acquiring pieces of pixel information of inner subpixels of the subject image 205' of the pixel information acquisition areas P(1, 1), P(2, 1), P(3, 1), ⋯ will be described below with reference to Fig. 27. Output values of the pixel information acquisition areas P(1, 1), P(2, 1), P(3, 1), ⋯ obtained by imaging which is performed after the imaging device 201 is shifted downward by 1/3 of the length of a pixel so as to reach the moved positions [6] from the moved position [3] are used. That is, pieces of pixel information D-F of the pixel information acquisition areas P(1, 1), P(2, 1), P(3, 1), ⋯ can be acquired using the output values of the pixel information acquisition area P(1, 1), P(2, 1), P(3, 1), ⋯ by methods similar to the methods by which pieces of pixel information of the top subpixels are acquired. Pieces of pixel information D-F are calculated according to the following equations:

$$D^{(m,\,1)} = d^{(m,\,1)} - (B^{(m-1,\,1)} + C^{(m-1,\,1)} + E^{(m-1,\,1)} + F^{(m-1,\,1)}$$
$$+ A^{(m,\,1)})$$

$$E^{(m,\,1)} = e^{(m,\,1)} - (C^{(m-1,\,1)} + F^{(m-1,\,1)} + A^{(m,\,1)} + B^{(m,\,1)}$$
$$+ D^{(m,\,1)})$$

$$F^{(m,\,1)} = f^{(m,\,1)} - (A^{(m,\,1)} + B^{(m,\,1)} + C^{(m,\,1)} + D^{(m,\,1)} + E^{(m,\,1)})$$

The pieces of pixel information calculated in the above-described manner are stored in the storage section 207. Part (1) of Fig. 27 shows the thus-acquired pieces of pixel information.

Furthermore, output values of the pixel information acquisition area P(1, 1), P(2, 1), P(3, 1), ⋯ obtained by imaging which is performed after the imaging device 201 is shifted downward by 1/3 of the length of a pixel so as to reach the moved positions [9] from the moved position [6] are used. That is, pieces of pixel information G-K of the pixel information acquisition areas P(1, 1), P(2, 1), P(3, 1), ⋯ can be acquired using the output values of the pixel information acquisition areas P(1, 1), P(2, 1), P(3, 1), ⋯ by methods similar to the methods by which pieces of pixel information of the top subpixels are acquired. Pieces of pixel information G-K are calculated according to the following equations:

$$G^{(m,\,1)} = g^{(m,\,1)} - (B^{(m-1,\,1)} + C^{(m-1,\,1)} + E^{(m-1,\,1)} + F^{(m-1,\,1)}$$
$$+ H^{(m-1,\,1)} + K^{(m-1,\,1)} + A^{(m,\,1)} + D^{(m,\,1)})$$

$$H^{(m,\,1)} = h^{(m,\,1)} - (C^{(m-1,\,1)} + F^{(m-1,\,1)} + K^{(m-1,\,1)} + A^{(m,\,1)}$$
$$+ B^{(m,\,1)} + D^{(m,\,1)} + E^{(m,\,1)} + G^{(m,\,1)})$$

$$K^{(m,\,1)} = k^{(m,\,1)} - (A^{(m,\,1)} + B^{(m,\,1)} + C^{(m,\,1)} + D^{(m,\,1)} + E^{(m,\,1)}$$
$$+ F^{(m,\,1)} + G^{(m,\,1)} + H^{(m,\,1)})$$

The pieces of pixel information calculated in the above-described manner are stored in the storage section 207. Part (2) of Fig. 27 shows the thus-acquired pieces of pixel information.

Next, a method for acquiring pieces of pixel information of the subject image 205' of further inner pixel information acquisition areas based on pieces of pixel information of inner pixel information acquisition areas of the imaging device 201 will be described using, as an example, a case of acquiring pieces of pixel information of the subpixels of the pixel information acquisition area P(2, 2). It is assumed that output values $a^{(2,\,2)}$-$k^{(2,\,2)}$ of the subpixels of the pixel information acquisition area P(2, 2) that were acquired when the imaging device 201 was located at the base position [1] and the moved positions [2]-[9] are already stored in the storage section 207.

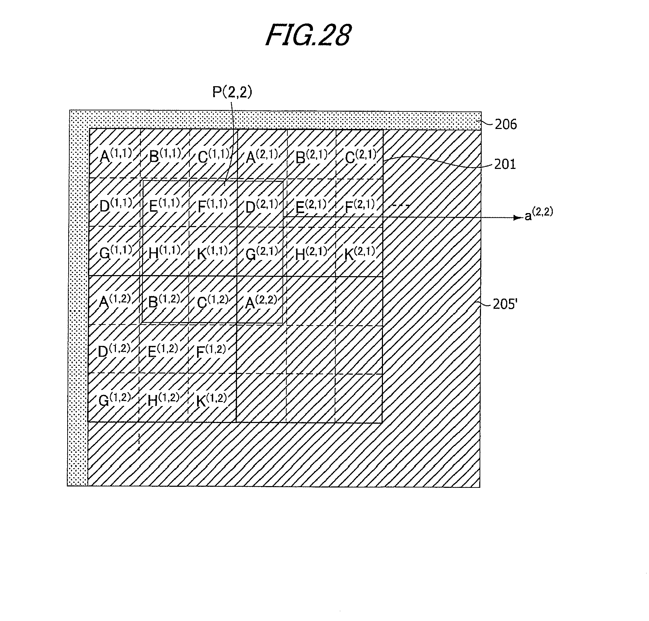

It is also assumed that pieces of pixel information of the top pixel information acquisition areas and the leftmost pixel information acquisition areas that were calculated based on pieces of information acquired when the imaging device 201 was located at the base position [1] and the moved positions [2]-[9] are already stored in the storage section 207 as shown in Fig. 28.

As shown in Fig. 28, pixel information $A^{(2, 2)}$ is calculated according to the following equation using the output value $a^{(2,2)}$ of the pixel information acquisition area $P(2, 2)$ that was acquired when the imaging device 201 was located at the base position [1]:

$$A^{(2, 2)} = a^{(2, 2)} - (E^{(1, 1)} + F^{(1, 1)} + H^{(1, 1)} + K^{(1, 1)} + D^{(2, 1)}$$
$$+ G^{(2, 1)} + B^{(1, 2)} + C^{(1, 2)})$$

Likewise, pixel information $B^{(2, 2)}$ is calculated according to the following equation using the output value $b^{(2,2)}$ of the pixel information acquisition area $P(2, 2)$ that was acquired when the imaging device 201 was located at the moved position [2]:

$$B^{(2, 2)} = b^{(2, 2)} - (F^{(1, 1)} + K^{(1, 1)} + D^{(2, 1)} + E^{(2, 1)} + G^{(2, 1)}$$
$$+ H^{(2, 1)} + C^{(1, 2)} + A^{(2, 2)})$$

Pixel information $C^{(2, 2)}$ is calculated according to the following equation using the output value $C^{(2,2)}$ of the pixel information acquisition area $P(2, 2)$ that was acquired when the imaging device 201 was located at the moved position [3]:

$$C^{(2, 2)} = c^{(2, 2)} - (D^{(2, 1)} + E^{(2, 1)} + F^{(2, 1)} + G^{(2, 1)} + H^{(2, 1)}$$
$$+ K^{(2, 1)} + A^{(2, 2)} + B^{(2, 2)})$$

Pixel information $D^{(2,2)}$ is calculated according to the following equation using the output value $d^{(2, 2)}$ of the pixel information acquisition area $P(2, 2)$ that was acquired when the imaging device 201 was located at the moved position [4]:

$$D^{(2, 2)} = d^{(2, 2)} - (H^{(1, 1)} + K^{(1, 1)} + G^{(2, 1)} + B^{(1, 2)} + C^{(1, 2)}$$
$$+ E^{(1, 2)} + F^{(1, 2)} + A^{(2, 2)})$$

Pixel information $E^{(2,2)}$ is calculated according to the following equation using the output value $e^{(2,2)}$ of the pixel information acquisition area $P(2, 2)$ that was acquired when the imaging device 201 was located at the moved position [5]:

$$E^{(2, 2)} = e^{(2, 2)} - (K^{(1, 1)} + G^{(2, 1)} + H^{(2, 1)} + C^{(1, 2)} + F^{(1, 2)}$$
$$+ A^{(2, 2)} + B^{(2, 2)} + D^{(2, 2)})$$

Pixel information $F^{(2,2)}$ is calculated according to the following equation using the output value $f^{(2, 2)}$ of the pixel information acquisition area $P(2, 2)$ that was acquired when the imaging device 201 was located at the moved position [6]:

$$F^{(2, 2)} = f^{(2, 2)} - (G^{(2, 1)} + H^{(2, 1)} + K^{(2, 1)} + A^{(2, 2)} + B^{(2, 2)}$$
$$+ C^{(2, 2)} + D^{(2, 2)} + E^{(2, 2)})$$

Pixel information $G^{(2, 2)}$ is calculated according to the following equation using the output value $g^{(2, 2)}$ of the pixel information acquisition area $P(2, 2)$ that was acquired when the imaging device 201 was located at the moved position [7]:

$$G^{(2,2)} = g^{(2,2)} - (B^{(1,2)} + C^{(1,2)} + E^{(1,2)} + F^{(1,2)} + K^{(1,2)}$$
$$+ H^{(1,2)} + A^{(2,2)} + D^{(2,2)})$$

Pixel information $H^{(2,2)}$ is calculated according to the following equation using the output value $h^{(2,2)}$ of the pixel information acquisition area $P(2, 2)$ that was acquired when the imaging device 201 was located at the moved position [8]:

$$H^{(2,2)} = h^{(2,2)} - (C^{(1,2)} + F^{(1,2)} + K^{(1,2)} + A^{(2,2)} + B^{(2,2)}$$
$$+ D^{(2,2)} + E^{(2,2)} + G^{(2,2)})$$

Pixel information $K^{(2,2)}$ is calculated according to the following equation using the output value $k^{(2,2)}$ of the pixel information acquisition area $P(2, 2)$ that was acquired when the imaging device 201 was located at the moved position [9]:

$$K^{(2,2)} = k^{(2,2)} - (A^{(2,2)} + B^{(2,2)} + C^{(2,2)} + D^{(2,2)} + E^{(2,2)}$$

$$+ F^{(2,2)} + G^{(2,2)} + H^{(2,2)})$$

Put in general terms, pieces of pixel information $A^{(m,n)}$ -$K^{(m,n)}$ of the subpixels of the subject image 205' can be calculated according to the following equations using output values $a^{(m,n)}$-$k^{(m,n)}$ of the pixel information acquisition areas $P(m, n)$:

$$A^{(m,n)} = a^{(m,n)} - (E^{(m-1,n-1)} + F^{(m-1,n-1)} + H^{(m-1,n-1)}$$
$$+ K^{(m-1,n-1)} + D^{(m,n-1)} + G^{(m,n-1)} + B^{(m-1,n)} + C^{(m-1,n)})$$

$$B^{(m,n)} = b^{(m,n)} - (F^{(m-1,n-1)} + K^{(m-1,n-1)} + D^{(m,n-1)} + E^{(m,n-1)}$$
$$+ G^{(m,n-1)} + H^{(m,n-1)} + C^{(m-1,n)} + A^{(m,n)})$$

$$C^{(m,n)} = c^{(m,n)} - (D^{(m,n-1)} + E^{(m,n-1)} + F^{(m,n-1)} + G^{(m,n-1)}$$
$$+ H^{(m,n-1)} + K^{(m,n-1)} + A^{(m,n)} + B^{(m,n)})$$

$$D^{(m,n)} = d^{(m,n)} - (H^{(m-1,n-1)} + K^{(m-1,n-1)} + G^{(m,n-1)} + B^{(m-1,n)}$$
$$+ C^{(m-1,n)} + E^{(m-1,n)} + F^{(m-1,n)} + A^{(m,n)})$$

$$E^{(m,n)} = e^{(m,n)} - (K^{(m-1,n-1)} + G^{(m,n-1)} + H^{(m,n-1)} + C^{(m-1,n)}$$
$$+ F^{(m-1,n)} + A^{(m,n)} + B^{(m,n)} + D^{(m,n)})$$

$$F^{(m, n)} = f^{(m, n)} - (G^{(m, n-1)} + H^{(m, n-1)} + K^{(m, n-1)} + A^{(m, n)}$$
$$+ B^{(m, n)} + C^{(m, n)} + D^{(m, n)} + E^{(m, n)})$$

$$G^{(m, n)} = g^{(m, n)} - (B^{(m-1, n)} + C^{(m-1, n)} + E^{(m-1, n)} + F^{(m-1, n)}$$
$$+ H^{(m-1, n)} + K^{(m-1, n)} + A^{(m, n)} + D^{(m, n)})$$

$$H^{(m, n)} = h^{(m, n)} - (C^{(m-1, n)} + F^{(m-1, n)} + K^{(m-1, n)} + A^{(m, n)}$$
$$+ B^{(m, n)} + D^{(m, n)} + E^{(m, n)} + G^{(m, n)})$$

$$K^{(m, n)} = k^{(m, n)} - (A^{(m, n)} + B^{(m, n)} + C^{(m, n)} + D^{(m, n)} + E^{(m, n)}$$
$$+ F^{(m, n)} + G^{(m, n)} + H^{(m, n)})$$

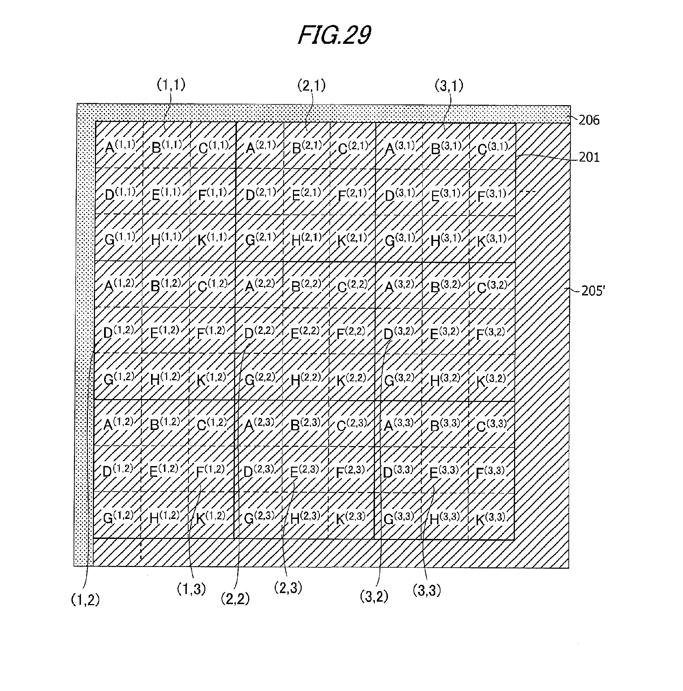

Fig. 29 shows pieces of pixel information acquired in the above-described manner. Pieces of pixel information of the subject image 205' are given pixel addresses defined in a state that the imaging device 201 is located at the moved position [9]. The thus-calculated pieces of pixel information are stored in the storage section 207.

It is understood from the above description that pieces of pixel information of the subject image 205' of all the subpixels can be extracted from pieces of information that are acquired when the top pixel information acquisition areas and leftmost pixel information acquisition areas are shielded from light partially.

In the fourth exemplary embodiment, an operation that a subject 205 is shot after the imaging device 201 is shifted by 1/3 of the length of a pixel is repeated until it is moved by the length of a pixel, that is, the subject 205 is shot with a resolution corresponding to a subpixel that occupies 1/9 of a pixel. However, the shift distance is not limited to 1/3 of the length of a pixel and may even be different in the vertical direction and the horizontal direction. A similar procedure can be followed even in a case that an operation of shooting a subject 205 after shifting the imaging device 201 by 1/X of the length of a pixel in the horizontal direction and by 1/Y of the length of a pixel in the vertical direction (X, Y: arbitrary natural number) is repeated until the imaging device 201 is moved by the length of a pixel, that is, the subject 205 is shot with a resolution corresponding to a subpixel obtained by equally dividing a pixel into XY parts (XY: natural number).

In this case, the imaging device 201 is moved in the vertical direction until each of horizontally arranged pixel information acquisition areas of one row that do not intersect vertically arranged pixel information acquisition areas of one column is put into a state that is immediately before a state that a region corresponding to at least one pixel is masked starting from a state that it is not masked at all. The imaging device 201 is also moved in the horizontal direction until each of the vertically arranged pixel information acquisition areas of one column that do not intersect the horizontally arranged pixel information acquisition areas of one row is put into a state that is immediately before a state that a region corresponding to at least one pixel is masked starting from a state that it is not masked at all.

As described above, the imaging apparatus 210 according to the fourth exemplary embodiment is equipped with the photodetecting elements A(m, n) which have the pixel information acquisition areas P(m, n) as the divisional photodetecting surfaces each having a prescribed area and produce output values corresponding to light quantities received by the divisional photodetecting surfaces, respectively, and the light shield plate 206 as a light shield part which partially shields each photodetecting elements A(m, n) from incident light coming from a subject, where m is an arbitrary natural number of 1 to i and n is an arbitrary natural number of 1 to j. With this configuration, in the imaging apparatus 210 according to the fourth exemplary embodiment, an output value can be acquired from each photodetecting element A(m, n) in a state that its photodetecting surface P(m, n) is shielded from light partially. Therefore, in the imaging apparatus 210, an output value which corresponds to a fine region of each divisional photodetecting surface and is different from an output value produced without shielding of the divisional photodetecting surface because it reflects the degree of shielding.

In the imaging apparatus 210 according to the fourth exemplary embodiment, output values of each photodetecting element A(m, n) are acquired in plural respective states in which different regions of the photodetecting element A(m, n) are shielded from light by the light shield plate 206. That is, in the imaging apparatus 210 according to the fourth exemplary embodiment, each pixel information acquisition area P(m, n) can be shielded from light partially in different light shield patterns by moving the imaging device 201. Output values produced in states that each pixel information acquisition area P(m, n) is shielded from light partially in different light shield patterns and an output value produced in a state that the pixel information acquisition area P(m, n) is not shielded from light can be acquired. Output values corresponding to even finer regions which reflect respective different light shield patterns can thus be acquired.

The imaging apparatus 210 according to the fourth exemplary embodiment is also equipped with the control section 204 (a calculating part) which calculates pixel information corresponding to a light quantity received by a region that is smaller than the photodetecting surface of a photodetecting element concerned based on the difference between the sum of pieces of pixel information that are acquired when pixel information acquisition areas P(m, n) are shielded from light in different patterns and an output value of the pixel information acquisition area concerned that is acquired when it is shielded from light in a particular light shield pattern or is not shielded at all and outputs the calculated pixel information, and the storage section 207 which stores the pixel information that is output from the control section 204 in such a manner that it is correlated with corresponding position information of a subject image. Therefore, the imaging apparatus 210 according to the fourth exemplary embodiment can calculate pixel information corresponding to a light quantity received by a region that is smaller than the photodetecting surface of a photodetecting element concerned based on the difference between the sum of pieces of pixel information that are acquired when pixel information acquisition areas P(m, n) are shielded from light in different patterns and an output value of the pixel information acquisition area concerned that is acquired when it is shielded from light in a particular light shield pattern or is not shielded at all, and store the calculated pixel information in such a manner that it is correlated with corresponding position information of a subject image. Therefore, in the imaging apparatus 210, pieces of pixel information corresponding to regions that are smaller than the photodetecting surface P(m, n) of each photodetecting element A(m, n) can be acquired as pieces of pixel information of a subject image corresponding to even finer regions.

Still further, the imaging apparatus 210 according to the fourth exemplary embodiment is equipped with the driving section 203 as an imaging device driving section which moves the photodetecting elements A(m, n) relative to the light shield plate 206 in units of a distance that is shorter than the length of each photodetecting element A(m, n). With this configuration, in the imaging apparatus 210 according to the fourth exemplary embodiment, since the photodetecting elements A(m, n) can be moved relative to the light shield plate 206 each time by a distance that is shorter than the length of each photodetecting elements A(m, n), pieces of pixel information of a subject image corresponding to even finer regions can be acquired based on output values that correspond to regions that are smaller than the photodetecting surface P(m, n) of each photodetecting element A(m, n) and are acquired as the photodetecting elements A(m, n) are moved each time by a distance that is shorter than the length of each photodetecting elements A(m, n).

As a result, the imaging apparatus 210 according to the fourth exemplary embodiment can generate pieces of pixel information of a subject image corresponding to even finer regions without the need for increasing the pixel density of an imaging device or connecting images, and hence can generate a high-resolution image at a low cost.

[Pixel information acquisition process]

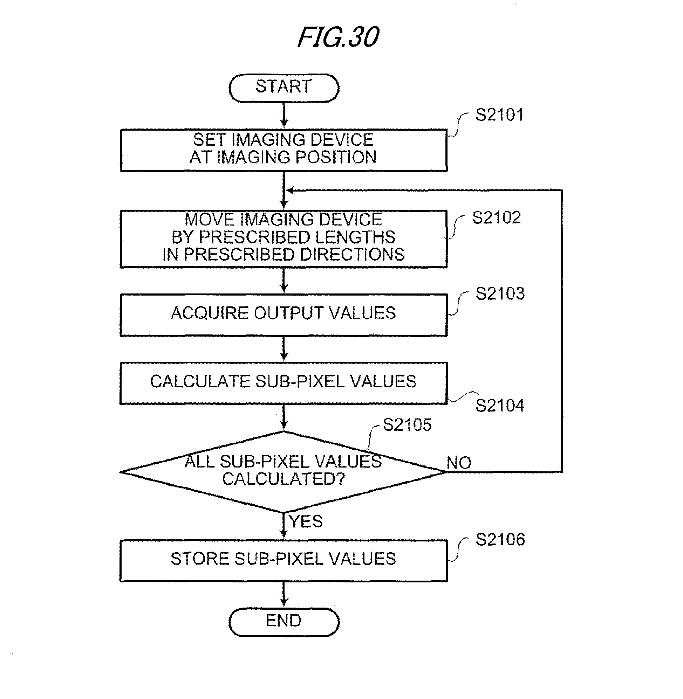

A process according to which the imaging apparatus 210 takes an image of a subject 205 will be described below with reference to Fig. 30. This process is executed under the control of the control section 204.

First, at step S2101, the control section 204 controls the driving section 203 to set the imaging device 201 at a prescribed position with respect to a subject 205 and the shield plate 206. At this step, the control section 204 causes the end pixel information acquisition areas arranged alongside at least two sidelines of the imaging device 201 are partially shielded from light in units of a prescribed subpixel (see Fig. 16). More specifically, the control section 204 sets the imaging device 201 at the base position [1] shown in Fig. 17 with respect to the subject 205 and the light shield plate 206.

At step S2102, the control section 204 moves the imaging device 201 by prescribed lengths in prescribed directions.

More specifically, the control section 204 controls the driving section 203 to move the imaging device 201 to one of the base position [1] and the moved positions [2]-[9].

At step S2103, the control section 204 causes imaging and acquires output values of the imaging device 201. More specifically, the control section 204 controls the imaging unit 202 to perform imaging, acquire output values of the pixel information acquisition areas P(1, 1), P(2, 1), P(3, 1), ···, P(1, 2), ···, P(1, 3), ···, P(i, j) of the imaging device 201, and store them in the storage section 207.

At step S2104, the control section 204 calculates subpixel values.

More specifically, the control section 204 calculates subpixel values of pixel addresses (m, n) of a subject image 205' according to the above-described equations using the output values of the pixel information acquisition areas P(1, 1), P(2, 1), P(3, 1), ···, P(1, 2), ···, P(1, 3), ···, P(i, j) of the imaging device 201, and stores the calculated subpixel values in the storage section 207.

At step S2105, the control section 204 judges whether or not all subpixel values of every pixel address (m, n) of a subject image 205' have been calculated, where m is an arbitrary natural number of 1 to i and n is an arbitrary natural number of 1 to j. If it is judged that there remain uncalculated subpixel values of pixel addresses (m, n), the process returns to step S2102.

On the other hand, if it is judged at step S2105 that all subpixel values of every pixel address (m, n) of the subject image 205' have been calculated, the process moves to step S2106. At step S2106, the control section 204 stores, as pieces of pixel information, all the calculated pixel values (subpixel values) in the storage section 207 in such a manner that they are correlated with the corresponding pieces of position information of the subject image 205'. If necessary, the control section 204 displays an image based on all the calculated pixel values. More specifically, the control section 204 controls the display unit 208 to display an image of the subject 205 based on all the pieces of pixel information of the subject image 205' stored in the storage section 207. Then, the pixel information acquisition process is finished.

In the imaging apparatus 210 according to the fourth exemplary embodiment, the photodetecting elements A (m, n) have the divisional photodetecting surfaces P(m, n) as the pixel information acquisition areas each having a prescribed area and produce output values corresponding to light quantities received by the divisional photodetecting surfaces P(m, n), respectively. The imaging apparatus 210 performs the imaging method which includes step S2103 of acquiring output values of the photodetecting elements A(m, n) in each of plural states in which different regions of each photodetecting element A(m, n) are shielded from incident light coming from a subject, step S2104 of calculating subpixel values corresponding to light quantities received by regions smaller than the photodetecting surfaces P(m, n) of the photodetecting elements A(m, n) based on differences between the output values of the photodetecting elements A(m, n) acquired in the plural states, and step S2106 of storing the subpixel values calculated by step S2104 in such a manner that they are correlated with pieces of position information of a subject image.

In the above imaging method, even finer pieces of pixel information of a subject image can be obtained based on differences between output values corresponding to regions smaller than the photodetecting surfaces P(m, n) of the photodetecting elements A(m, n) while the masked region of each photodetecting element is changed. Therefore, it is not necessary to increase the number of photodetecting elements A(m, n) or connect images. As a result, a large number of pixels can be obtained using a sensor having a small number of pixels, and hence a high-resolution image can be obtained at a low cost.

In the imaging apparatus 210 according to the fourth exemplary embodiment, the photodetecting elements A (m, n) have the divisional photodetecting surfaces P(m, n) each having a prescribed area and produce output values corresponding to light quantities received by the divisional photodetecting surfaces P(m, n), respectively. For example, the imaging apparatus 210 performs the following imaging method. At step S2103, the imaging apparatus 210 executes a substep of acquiring, from the photodetecting element A(1, 1), a first output value (e.g., $b^{(1, 1)}$) that corresponds to a light quantity received by a first prescribed region which is part of the photodetecting surface P(1, 1) and a substep of acquiring a second output value (e.g., $a^{(1, 1)}$) that corresponds to a light quantity received by a second prescribed region which is included in the first prescribed region. At step S2104, the imaging apparatus 210 calculates the difference (e.g. $b^{(1, 1)} - a^{(1, 1)}$) between the first output value and the second output value as a third output value (e.g., $B^{(1, 1)}$) corresponding to a light quantity received by a region that is the first prescribed region excluding the second prescribed region.

In this imaging method, even finer pieces of pixel information of a subject image can be obtained based on an output value corresponding to a light quantity received by a region that is the first prescribed region (part of a photodetecting surface P(m, n)) excluding the second prescribed region. Therefore, a high-resolution image can be obtained at a low cost without the need for increasing the number of photodetecting elements A(m, n) or connecting images.

Although the fourth exemplary embodiment is directed to the case that a subject 205 is shot with a resolution corresponding to a subpixel that occupies 1/9 of a pixel, the invention is not limited to such a case. Although in the fourth exemplary embodiment the L-shaped light shield plate 206 whose legs extend parallel with the two sidelines of the photodetecting surface of the imaging device 201 is used and an operation that a subject 205 is shot after the imaging device 201 is shifted by 1/3 of the length of a pixel in the horizontal direction or the vertical direction is repeated until it is moved by the length of a pixel in the horizontal direction or the vertical direction is performed repeatedly, the invention is not limited to such a case.

For example, a similar procedure can be followed even in a case that an operation of shooting a subject 205 after shifting the imaging device 201 by 1/X of the length of a pixel in the horizontal direction and or by 1/Y of the length of a pixel in the vertical direction (X, Y: arbitrary natural number) is repeated until the imaging device 201 is moved by the length of a pixel in the horizontal direction or the vertical direction. In this case, the subject 205 can be shot with a resolution corresponding to a subpixel obtained by equally dividing a pixel into XY parts (XY: natural number).

That is, the driving section 203 moves the imaging device 201 progressively to prescribed imaging positions in units of an arbitrary fraction of the length of a pixel until each of at least part of the pixel information acquisition areas P(m, n) (m, n: arbitrary natural number) is put into a state that is immediately before a state that a region corresponding to one pixel is masked starting from a state that it is not shielded from incident light coming from a subject 205 by the light shield plate 206. Imaging is performed every time the imaging device 201 is moved to an imaging position by the driving section 203. The control section 204 calculates pieces of pixel information based on signal charges generated by the imaging device 201. The control section 204 stores the thus-calculated pieces of pixel information in the storage section 207 in such a manner that they are correlated with pieces of position information of a pixel image.

The control section 204 calculates pixel information of a region that is smaller than one pixel and corresponds to part of the subject image based on a difference between a signal charge generated by the imaging device 201 when it is located at each imaging position and a signal charge generated by the imaging device 201 when it was previously located at other imaging positions. The control section 204 constitutes a pixel information calculating section.

A similar procedure can be followed even in a case that imaging is performed while the driving section 203 moves the imaging device 201 to prescribed imaging positions progressively in the vertical direction in units of 1/Y (Y: prescribed natural number) of the length of a pixel until each of horizontally arranged pixel information acquisition areas of one row is put into a state that is immediately before a state that a region corresponding to one pixel is masked starting from a state that it is not masked at all and moves the imaging device 201 to prescribed imaging positions progressively in the horizontal direction in units of 1/X (X: prescribed natural number) of the length of a pixel until each of vertically arranged pixel information acquisition areas of one column is put into a state that is immediately before a state that a region corresponding to one pixel is masked starting from a state that it is not masked at all. In this manner, the subject can be shot with a resolution corresponding to a subpixel obtained by equally dividing a pixel into XY parts (XY: natural number).

In such an imaging apparatus 210 according to the fourth exemplary embodiment, the resolution of an image taken or the number of pieces of pixel information constituting an image taken can be increased arbitrarily by changing the number of regions obtained by dividing each pixel using the light shield plate 206.

Although the L-shaped light shield plate 206 is employed in the fourth exemplary embodiment, a light shield plate having another shape may be used as long as it is suitable for shielding of at least two sidelines of the imaging device 201 from light.

As described above, the imaging apparatus 210 according to the fourth exemplary embodiment is equipped with the imaging device 201; the light shield plate 206 for interrupting light; the driving section 203 which moves the imaging device 201 relative to the light shield plate 206 to a prescribed imaging position where the imaging device 201 is shielded by the light shield plate 206 from a prescribed portion of incident light coming from a subject; the pixel information calculating section (control section 204) which calculates pieces of pixel information of a subject image based on pieces of information that are acquired from the imaging device 201 through imaging when the imaging device 201 is moved individual imaging positions by the driving section 203; and the pixel information storage section (storage section 207) which stores the pieces of pixel information calculated by the pixel information calculating section in such a manner that they are correlated with pieces of position information of the subject image. The imaging device 201 has the pixel information acquisition areas P(m, n) arranged in the vertical direction and the horizontal direction, and each of the pixel information acquisition areas P(m, n) is configured so as to generate pixel information of one pixel by converting part of incident light coming from a subject. The driving section 203 is configured so as to move the imaging device 201 stepwise by an arbitrary fraction of the length of a pixel each time until each of vertically arranged pixel information acquisition areas P(m, n) of at least one column or horizontally arranged pixel information acquisition areas P(m, n) of at least one row is put into a state immediately before a state that a region corresponding to one pixel is masked starting from a state that it is not shielded from the incident light coming from the subject by the light shield plate 206. The pixel information calculating section calculates pieces of pixel information of the subject image in units of a region that is smaller than one pixel based on differences between pieces of pixel information calculated when the imaging device 201 is located at the individual imaging positions.

For example, in the fourth exemplary embodiment, the driving section 203 moves the imaging device 201 relative to the light shield plate 206 until each of small regions (in the fourth exemplary embodiment, small regions obtained by equally dividing the top-left end pixel information acquisition area P(1, 1) into nine parts; separated by broken lines in part (1) of Fig. 16) that are obtained by equally dividing the pixel information acquisition area (top-left end pixel information acquisition area P(1, 1)) where the horizontally arranged pixel information acquisition areas of one row and the pixel information acquisition areas of one column intersect into XY parts (X, Y, XY: prescribed natural number) and that are arranged in a mesh-like manner in the vertical direction and the horizontal direction is put into an exposed state and a masked state.

The driving section 203 also moves the imaging device 201 in the vertical direction until each of the horizontally arranged pixel information acquisition areas of one row that do not intersect the vertically arranged pixel information acquisition areas of one column (i.e., the top-left end pixel information acquisition area P(1, 1) is excluded) is put into a state that is immediately before a state that a region corresponding to one pixel is masked starting from a state that it is not masked at all; and the driving section 203 moves the imaging device 201 in the horizontal direction until each of the vertically arranged pixel information acquisition areas of one column that do not intersect the horizontally arranged pixel information acquisition areas of one row (i.e., the top-left end pixel information acquisition area P(1, 1) is excluded) is put into a state that is immediately before a state that a region corresponding to one pixel is masked starting from a state that it is not masked at all.

The pixel information calculating section can calculate pieces of pixel information of a subject image in units of a region obtained by equally dividing one pixel into XY parts based on differences between output values acquired from the imaging device 201 through imaging when the imaging device 201 is moved to imaging positions by the driving section 203.

In the imaging apparatus 210 according to the fourth exemplary embodiment, to produce a high-resolution image, at the time of imaging, the position of each photodetecting element having a pixel information acquisition area P(m, n) is changed relative to a light shield part in units of a subpixel length that is shorter than the length of the pixel information acquisition area P(m, n). Each photodetecting element is thus moved only slightly at the time of imaging. Therefore, the movement distance of the photodetecting elements is much shorter than in the conventional method in which a subject to be shot is divided into plural portions and the subject is shot repeatedly for its respective portions while an imaging device is moved. Therefore, in the fourth exemplary embodiment, a high-resolution image can be produced while the total shooting time can be shortened by virtue of shortening of time required for movement of the photodetecting elements.

Even finer pieces of pixel information can be acquired without the need for increasing the number of photodetecting elements or connecting images. That is, a large number of pixels can be obtained using a sensor having a small number of pixels. As such, the imaging apparatus 210 according to the fourth exemplary embodiment can produce a high-resolution image at a low cost.

Although in the fourth exemplary embodiment the light shield plate 206 is disposed close to a subject 205, this is just an example and the light shield plate 206 may be disposed even closer to a subject 205.

Although the fourth exemplary embodiment is directed to the case that a subject 205 is shot with a resolution corresponding to a subpixel obtained by equally dividing a pixel into nine parts, the invention is not limited to such a case.

<Exemplary embodiment 6>

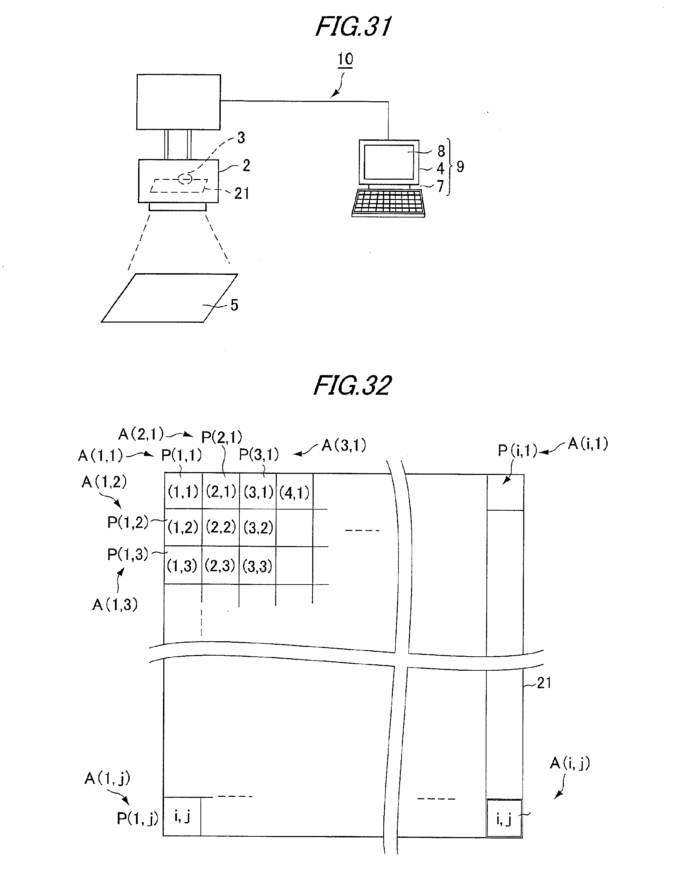

An imaging apparatus according to a fifth exemplary embodiment will be outlined below with reference to Figs. 31 and 32.

Fig. 31 is a schematic diagram of the imaging apparatus according to the fifth exemplary embodiment of the invention. Fig. 2 is a block diagram showing the configuration of an imaging device used in the imaging apparatus according to the fifth exemplary embodiment.

The imaging apparatus 10 of Fig. 31 includes an imaging unit 2 including plural imaging devices 21A-21D each of which shoots a subject 205 and converts a resulting image into an electrical signal; a driving section 3 which drives the imaging devices 21A-21D; a control section 4 which controls the imaging devices 21A-21D, the imaging unit 2, and the driving section 3; a storage section 7 which stores image data of the subject 205 generated by the imaging unit 2; and a display unit 8 which displays an image of the subject 5 based on the image data.

The imaging unit 2 includes, in addition to the imaging devices 21A-21D, an imaging lens (not shown) which forms an image of light coming from the subject 5 on one imaging device 21, located at an imaging position (described later), of the imaging devices 21A-21D. The imaging device 21 located at the imaging position converts the image, formed by the imaging lens, of the incident light coming from the subject 205 into an electrical signal. Each of the imaging devices 21A-21D is a CCD (charge-coupled device) imaging device, a CMOS (complementary metal oxide semiconductor) imaging device, or the like which has plural photodetecting elements for photoelectrically converting an image (hereinafter referred to as "subject image") 5' that is formed on the imaging device 21 itself by the imaging lens. The imaging unit 2 has a function of an imaging part.

The driving section 3 moves one imaging device 21 of the imaging devices 21A-21D to the imaging position which is suitable for imaging of the subject 5. The driving section 3 will be described later in detail.

In the fifth exemplary embodiment, the control section 4, the storage section 7, and the display unit 8 are parts of a computer 9. Although not shown in any drawing, the control section 4 is composed of a ROM (read-only memory) which is stored with programs according which the imaging apparatus 10 performs various functions, a CPU (central processing unit) which performs any of the various functions of the imaging apparatus 10 by executing a corresponding program stored in the ROM, a RAM (random access memory) which stores, when necessary, data etc. that are necessary when the CPU performs any of various kinds of processing, and other components.

The control section 4 drives the imaging devices 21A-21D by controlling the driving section 3 so that one imaging device 21 of the imaging devices 21A-21D is placed at the imaging position. The control section 4 generates image data by processing an electrical signal that is output from the imaging device 21, and stores the generated image data in the storage section 7. The control section 4 displays the image taken by the imaging unit 2 on the display unit 8 based on the generated image data. Furthermore, the control section 4 performs calculation processing (described later) in processing the electrical signal that is output from the imaging device 21.

The display unit 8 is a liquid crystal display or the like. The storage section 7 consists of a DRAM (dynamic random access memory), a ROM (read-only memory), a hard disk drive, etc.

[Configuration of imaging devices]

Next, the configuration of each of the imaging devices 21A-21D will be described with reference to Fig. 32. Each imaging device 21 is formed by plural photodetecting elements which are arranged two-dimensionally. Each photodetecting element has a photodetecting surface having a prescribed area. When light is incident on the photodetecting surface, each photodetecting element generates signal charge corresponding to one pixel through photoelectric conversion according to a quantity of light received by the photodetecting surface. The photodetecting surface of each photodetecting element is referred to as "pixel information acquisition area." Therefore, the entire photodetecting surface of the imaging device 21 which is a two-dimensional array of the photodetecting elements can be divided into plural pixel information acquisition areas where the photodetecting elements generate signal charges corresponding to the pixels, respectively.

As shown in Fig. 32, the total number of pixels of the imaging device 21 is determined by the number of pixel information acquisition areas that constitute the photodetecting surface of the imaging device 21. For example, if the number of pixel information acquisition areas arranged in the horizontal direction (i.e., the number of horizontally arranged pixels) is represented by $i$ and the number of pixel information acquisition areas arranged in the vertical direction (i.e., the number of vertically arranged pixels) is represented by $j$, ($i$, $j$: arbitrary natural number), the total number of pixels of the imaging device 21 is given by $i \times j$.

With the above notation, the imaging device 21 has photodetecting elements A(1, 1), A(2, 1), A(3, 1), ···, A(1, 2), ···, A(1, 3), ···, A(i, j). The pixel information acquisition areas of the photodetecting elements A(1, 1), A(2, 1), A(3, 1), ···, A(1, 2), ···, A(1, 3), ···, A(i, j) are denoted by P(1, 1), P(2, 1), P(3, 1), ···, P(1, 2), ···, P(1, 3), ···, P(i, j), respectively.

Since each pixel information acquisition area generates signal charge corresponding to one pixel, information indicating the position of each pixel information acquisition area of the imaging device 21 will be hereinafter referred to as "pixel address." With the top-left end defined as a reference position, pieces of information (pixel addresses) indicating the positions of the pixel information acquisition areas arranged rightward from the top-left end are (1, 1), (2, 1), ···, (i, 1), and pixel addresses indicating the positions of the pixel information acquisition areas arranged downward from the top-left end are (1, 1), (1, 2), ···, (1, j). The pixel address of the bottom-right end is (i, j), and the pixel addresses of the other pixel information acquisition areas are as shown in Fig. 32. Pieces of pixel information of a subject image 5' are given pixel addresses defined in a state that the imaging device 21 is located at a moved position [9'] (described later).

[Configuration of imaging unit]

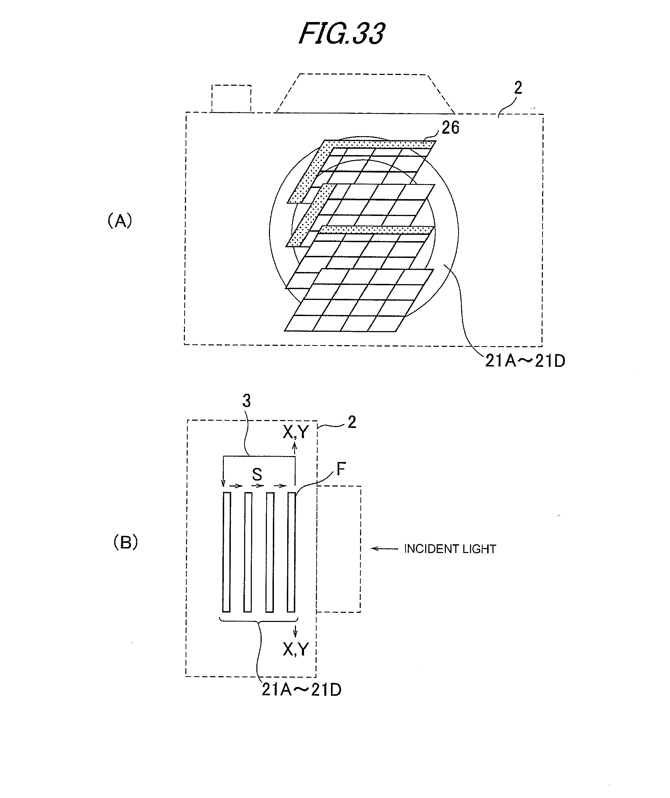

As shown in Fig. 33, in the imaging apparatus according to the fifth exemplary embodiment, the imaging unit 2 is equipped with the plural imaging devices 21A-21D. The driving section 3 drives the imaging devices 21A-21D in different manners under the control of the control section 4. First, the driving section 3 guides one of the imaging devices 21A-21D to an imaging position F where the one imaging device 21 can shoot a subject in such a manner as to receive incident light properly. Then, the driving section 3 moves the imaging device 21 located at the imaging position F in units of the length of a subpixel in each of the directions X and Y in the plane that is perpendicular to incident light so that the imaging device 21 is moved to a prescribed position (see part (B) of Fig. 33).

More specifically, the driving section 3 has a first drive mechanism which moves one of the imaging devices 21A-21D from a storage place S to the imaging position F under the control of the control section 4. For example, the first drive mechanism may have the same configuration as a CD changer which takes out an arbitrary CD from a cartridge housing plural CDs and sets it. The driving section 3 also has a second drive mechanism which moves the imaging device 21 located at the imaging position F in units of the length of a subpixel in each of the directions X and Y in the plane that is perpendicular to incident light so that the imaging device 21 is moved to a prescribed position. The second drive mechanism may be composed of an actuator using a piezoelectric element, a distance sensor, etc.

Part of the imaging devices 21A-21D have respective light shield films 26A-26C each of which is formed so as to partially interrupt light that is incident on it.

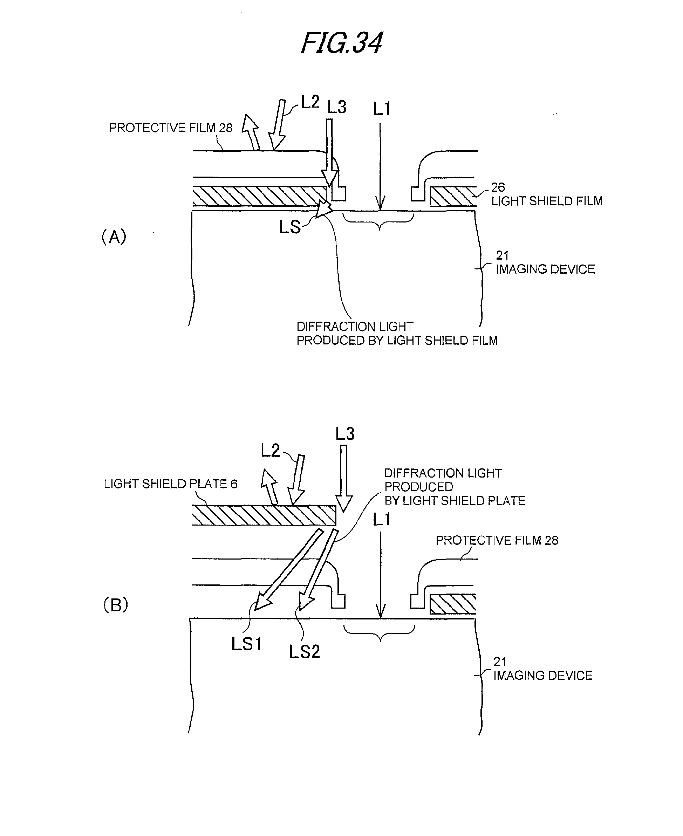

Part (A) of Fig. 34 shows a relationship between each imaging device 21 and its light shield film 26 in the fifth exemplary embodiment.

As shown in part (A) of Fig. 34, in the fifth exemplary embodiment, the light shield film 26 is formed directly on the photodecting surface of the imaging device 21. That is, the light shield film 26 is formed under a protective film 28 of the imaging device 21. Therefore, light L1 incident on the photodecting area and light L2 incident on the protective film 28 are absorbed and reflected ordinarily. On the other hand, the degree of diffraction LS of light L3 incident on the boundary between the photodecting area and the light shield film 26 and its neighborhood is very low.

For reference, part (B) of Fig. 34 shows a relationship between a conventional imaging device 21 and light shield plate 6. The light shield plate 6 is disposed over a protective film 28. A certain distance exists between the photodetecting area and the light shield plate 6. Therefore, light L3 incident on the edge of the light shield plate 6 produces strong diffraction light beams LS1 and LS2, which shine on the photodetecting area to cause noise.

It is understood that using the light shield film 26 as shown in part (A) of Fig. 34 instead of the light shield plate 6 greatly reduces diffraction light that is caused by shielding.

An example manner of formation of the light shield film 26 on each imaging device 21 will be described below.

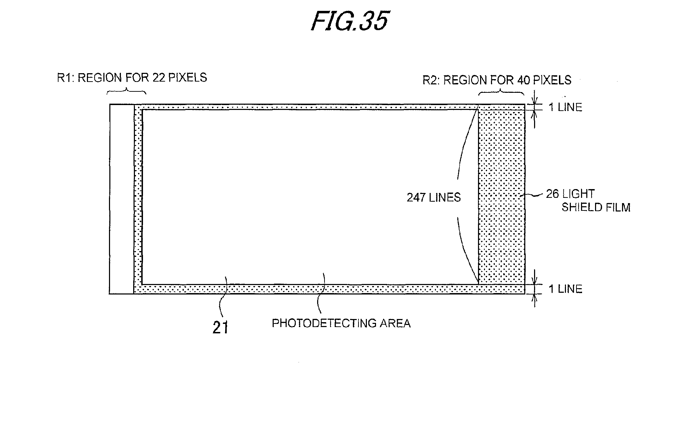

For example, imaging devices have been used in the manner shown in Fig. 35. It is assumed that 493 lines of effective pixel signals exist in total in a first field and a second field. In the first field, the effective pixel signals on the first line and the 248th line are substantially not used because they include optical black ones on the field reading-out side. As for each line, horizontally arranged 40 optical black pixels located on the right-hand side are masked to prevent incidence of light on the corresponding photodetecting surfaces of the imaging device. Signals obtained from these horizontally arranged 40 pixels are used as a black reference to a video signal. Horizontal empty signals of 22 pixels located on the left-hand side contains only small dark current components and hence are used as a reference for checking the magnitude of dark current contained in pixel signals.

Although there are pixels that are shielded from light for black correction, they are not used intentionally to control reception of light in units of a fraction of a pixel. In the fifth exemplary embodiment, a light shield film for interrupting incident light is formed in units of a fraction of a pixel in, for example, a portion(s) of the imaging device that is used conventionally for black correction or dark current measurement. In this manner, a peripheral portion(s) of the imaging device to which no attention is paid conventionally is utilized effectively.

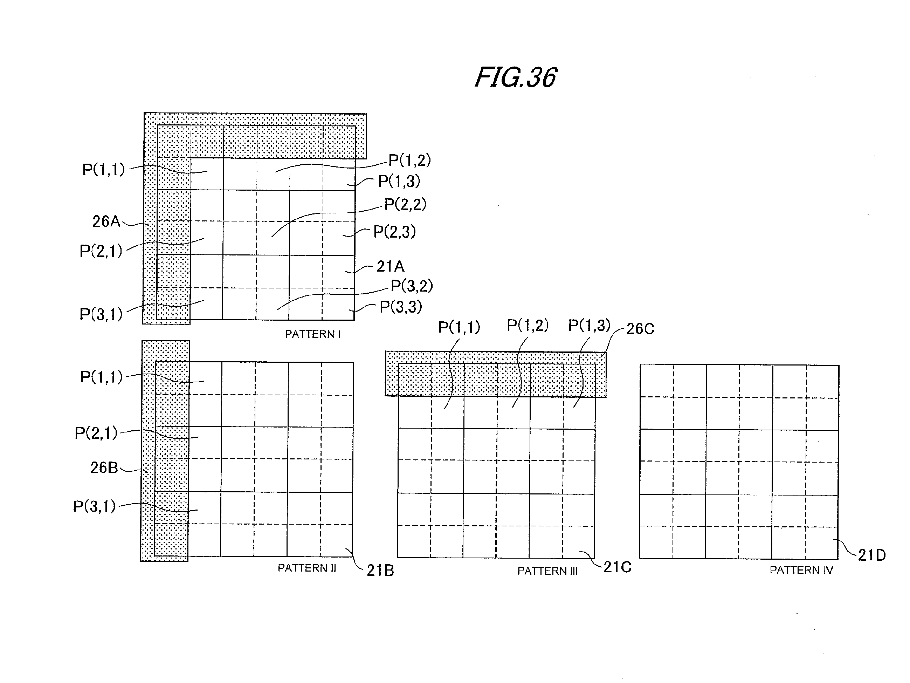

Fig. 36 shows example imaging devices 21A-21D which are formed with light shield films 26A-26C. Each of the light shield films 26A-26C is formed so as to shield the associated imaging device 21 from light in units of an arbitrary fraction of a pixel. To facilitate understanding, the following description will be directed to a case that each pixel is equally divided into four parts.

First, the imaging device 21A is formed with an L-shaped light shield film 26A along the two sidelines, extending in the vertical direction and the horizontal direction, respectively, of the imaging device 21A. Although in this example the light shield film 26A is formed so as to shield the top and left sidelines from light, a light shield film may be formed so as to shield, from light, any two sidelines that extend in the vertical direction and the horizontal direction, respectively. A 3/4-pixel portion of the top-left end pixel information acquisition area P(1, 1) of the imaging device 21A is shielded from light by the light shield film 26A, and a 2/4-pixel portion of each of the pixel information acquisition areas P(1, 2), P(1, 3), P(2, 1), and P(3, 1) is shielded from light by the light shield film 26A. Each of the other pixel information acquisition areas P(2, 2), P(2, 3), P(3, 2), and P(3, 3) is not shielded from light at all by the light shield film 26A. This pattern of a light shield film is called "light shield pattern I."

The imaging device 21B is formed with a vertical light shield film 26B along the left sideline of the imaging device 21B. A 2/4-pixel portion of each of the leftmost pixel information acquisition areas P(1, 1), P(2, 1), and P(3, 1) of the imaging device 21B is shielded from light by the light shield film 26B. Each of the other pixel information acquisition areas P(1, 2), P(1, 3), P(2, 2), P(2, 3), P(3, 2), and P(3, 3) is not shielded from light at all by the light shield film 26B. This pattern of a light shield film is called "light shield pattern II."

The imaging device 21C is formed with a horizontal light shield film 26C along the top sideline of the imaging device 21C. A 2/4-pixel portion of each of the top pixel information acquisition areas P(1, 1), P(1, 2), and P(1, 3) of the imaging device 21C is shielded from light by the light shield film 26C. Each of the other pixel information acquisition areas P(2, 1), P(2, 2), P(2, 3), P(3, 1), P(3, 2), and P(3, 3) is not shielded from light at all by the light shield film 26C. This pattern of a light shield film is called "light shield pattern III."

Each of the pixel information acquisition areas P(1, 1), P(1, 2), P(1, 3), P(2, 1), P(2, 2), P(2, 3), P(3, 1), P(3, 2), and P(3, 3) are not shielded from light at all by the light shield film 26 of the imaging device 21D is not shielded from light at all. This pattern of a light shield film is called "light shield pattern IV.

Although to facilitate understanding the above description is directed to only the nine pixel information acquisition areas, the number of pixel information acquisition areas of each of the imaging devices 21A-21D is arbitrary. The light shield films 26A-26C are formed so as to shield the respective imaging devices 21A-21C from light in the same manners as described above in units of a subpixel. That is, in a case corresponding to the example of Fig. 36, the light shield film 26A is formed so as to shield the top and left sidelines, the light shield film 26B is formed so as to shield the left sideline, and the light shield film 26C is formed so as to shield the top sideline.

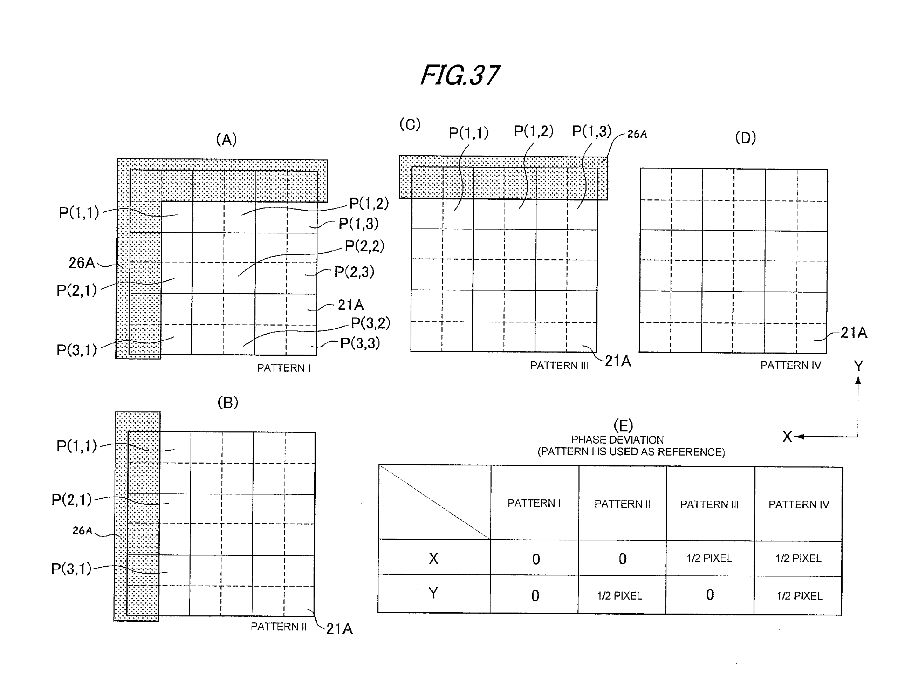

Fig. 37 shows positions that the pixel information acquisition areas can take when one of the imaging devices 21A-21D of Fig. 36 is moved by the driving section 3.

One imaging device 21 selected from the imaging devices 21A-21D is guided to the imaging position F by the first drive mechanism of the driving section 3. Then, at the imaging position F, the imaging device 21 is further moved by the second drive mechanism in units of the length of a subpixel in each of the directions X and Y in the plane that is perpendicular to incident light coming from a subject so as to be moved a prescribed imaging position. Various light shield patterns can be obtained by the second drive mechanism's moving the imaging device 21 in the plane perpendicular to incident light. The following description will be directed to a case that sets of output values corresponding to the respective light shield patterns I-IV shown in Fig. 36 are acquired as the imaging device 21A is moved in units of the length of a subpixel in each of the directions X and Y in the plane that is perpendicular to incident light.

Parts (A)-(D) of Fig. 37 show positions of the imaging device 21A corresponding to the respective light shield patterns I-IV, and part (E) of Fig. 37 is a table showing movement directions and movement distances (phase deviations), necessary for acquisition of sets of output values corresponding to the respective light shield patterns I-IV, of the imaging device 21A with the pattern I used as a reference.

As shown in parts (A) and (E) of Fig. 37, when the imaging device 21 A is located at a base position, sets of output values corresponding to pattern I (see Fig. 36) can be acquired from the imaging device 21A.

As shown in parts (B) and (E) of Fig. 37, when the imaging device 21 A has been moved from the base position upward in the Y direction by 1/2 of the length of a pixel, sets of output values corresponding to pattern II (see Fig. 36) can be acquired from the imaging device 21A.

As shown in parts (C) and (E) of Fig. 37, when the imaging device 21 A has been moved from the base position leftward in the X direction by 1/2 of the length of a pixel, sets of output values corresponding to pattern III (see Fig. 36) can be acquired from the imaging device 21A.

As shown in parts (D) and (E) of Fig. 37, when the imaging device 21 A has been moved from the base position leftward in the X direction by 1/2 of the length of a pixel and upward in the Y direction by 1/2 of the length of a pixel, sets of output values corresponding to pattern IV (see Fig. 36) can be acquired from the imaging device 21A.

As described above, output values can be acquired from the imaging device 21A in units of a subpixel basis by moving the imaging device 21A which is formed with the light shield film 26A in units of a subpixel perpendicularly to incident light, even without switching between the imaging devices 21A-21D or light shield plates.

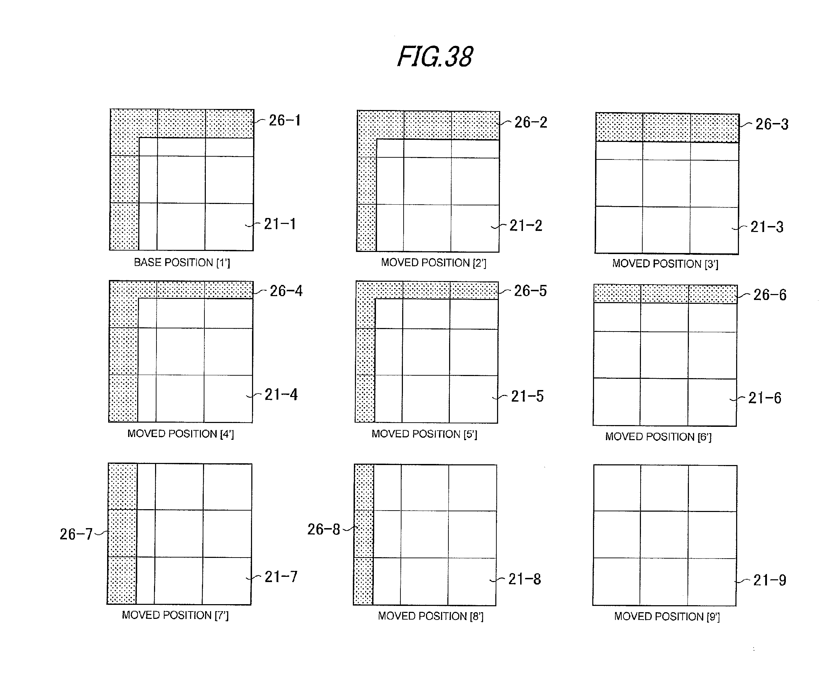

Where a light shield film(s) is used, as in the case of using a light shield plate(s), each pixel can equally be divided into not only four parts but also an arbitrary natural number of parts. For example, each pixel can equally be divided into XY parts (X, Y: arbitrary natural number). Fig. 38 shows example light shield films for equally dividing each pixel into nine parts.

Positions, with respect to light shield films 26-1 to 26-8, during imaging of a subject, of the sets of pixel information acquisition areas of an imaging device 21-1, an imaging device 21-2, an imaging device 21-3, an imaging device 21-4, an imaging device 21-5, an imaging device 21-6, an imaging device 21-7, and an imaging device 21-8 are named a base position [1'], a moved position [2'], a moved position [3'], a moved position [4'], a moved position [5'], a moved position [6'], a moved position [7'], and a moved position [8'], respectively. An imaging device 21-9 which corresponds to a moved position [9'] is not formed with a light shield film. In other words, sets of output values can be acquired in states that the sets of pixel information acquisition areas of the imaging device 21-1, the imaging device 21-2, the imaging device 21-3, the imaging device 21-4, the imaging device 21-5, the imaging device 21-6, the imaging device 21-7, the imaging device 21-8, and the imaging device 21-9 shown in Fig. 38 are located at the base position [1'], the moved position [2'], the moved position [3'], the moved position [4'], the moved position [5'], the moved position [6'], the moved position [7'], the moved position [8'], and the moved position [9'] with respect to the light shield films 26-1 to 26-8 by causing the driving section 3 to guide the imaging devices 26-1 to 26-9 to prescribed positions at the imaging position F and causing the imaging unit 2 to perform imaging operations properly under the control of the control section 4.

As described above, each pixel can equally be divided into XY parts (X, Y: arbitrary natural number) by using light shield films.

[Imaging operation]

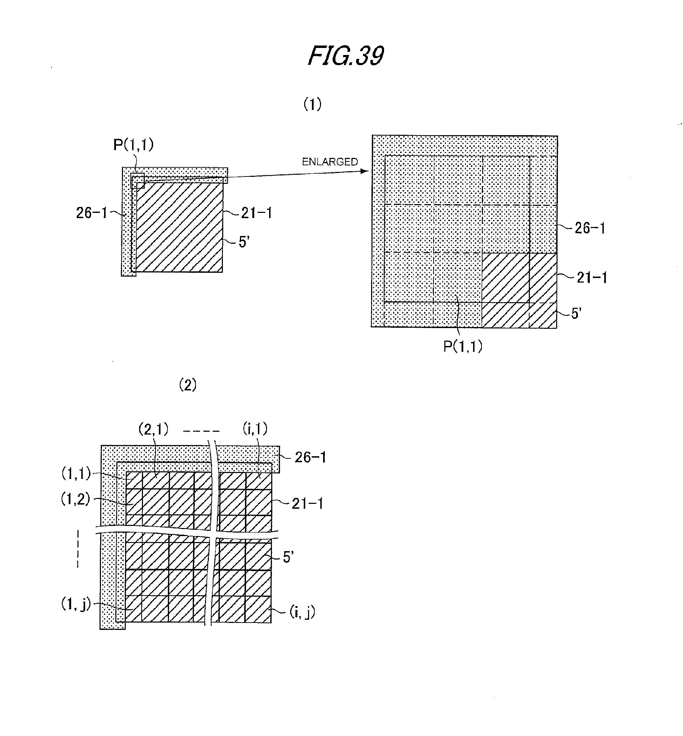

An operation of shooting a subject 5 efficiently using the thus-configured imaging devices 21-1 to 21-9 will be described below with reference to Figs. 39-52.

Fig. 39 shows a positional relationship, to be satisfied when first the subject 5 is shot using the imaging device 21, between the light shield film 26 formed on the imaging device 21, the end pixel information acquisition areas of the imaging device 21, and a subject image 5' formed on the imaging device 21.

As shown in part (1) of Fig. 39, for example, the light shield film 26-1 is formed on the imaging device 21-1 so as to partially shield, from light, the end pixel information acquisition areas arranged alongside at least two sidelines of the imaging device 21-1. The right-hand part of part (1) of Fig. 39 is an enlarged diagram showing, in a more detailed manner, a relationship between the pixel information acquisition area P(1, 1) located at the top-left end of the imaging device 21-1 and the light shield film 26-1. The region enclosed by the solid line is the top-left end pixel information acquisition area P(1, 1) of the imaging device 21-1. When receiving light incident thereon, the pixel information acquisition area P(1, 1) generates and outputs information corresponding to one pixel. When located at the position shown in part (1) of Fig. 39, the light shield film 26-1 is disposed so as to prohibit incident light from reaching that region of the pixel information acquisition area P(1, 1) which extends from each of the top sideline and the left sideline downward or leftward by 2/3 of the length of a pixel. As a result, the pixel information acquisition area P(1, 1) actually outputs information corresponding to a subpixel that measures 1/9 of the area of a pixel.

The L-shaped light shield film 26-1 prohibits incident light (to form the subject image 5' on the imaging device 21-1) from reaching a region, extending from the top or left sideline downward or rightward by 2/3 of the length of a pixel, of each of the end pixel information acquisition areas arranged alongside the top or left sideline other than the pixel information acquisition area P(1, 1). That is, when located at the position shown in part (2) of Fig. 39, the light shield film 26-1 prohibits incident light from reaching a region, measuring 2/3 of the area of a pixel, of each of the top pixel information acquisition areas P(2, 1), P(3, 1), ···, P(i, 1) arranged alongside the top sideline and the left end pixel information acquisition areas P(1, 2), P(1, 3), c, P(1, j) arranged alongside the left sideline. Therefore, each of the pixel information acquisition areas P(2, 1), P(3, 1), ···, P(i, 1) and P(1, 2), P(1, 3), ···, P(1, j) actually outputs information corresponding to a subpixel that measures 1/3 of the area of a pixel.

Next, an imaging operation according to the fifth exemplary embodiment will be described. In the fifth exemplary embodiment, the control section 4 controls the driving section 3 to repeatedly perform imaging after selecting the imaging device 21-1 from the imaging devices 21-1 to 21-9 and moving the selected imaging device 21-1 to a proper imaging position until moving it by the length of a pixel.

[Operation in which attention is paid to the top-left end pixel information acquisition area]

First, to facilitate understanding, relationships between operations of switching between the imaging devices 21-1 to 21-9 and moving the selected imaging devices 21 relative to a subject image 5' so as to reach prescribed imaging positions and sets of output values of the imaging devices 21-1 to 21-9 will be described with attention paid to the top-left end pixel information acquisition area P(1, 1). In the fifth exemplary embodiment, the end pixel information acquisition areas arranged alongside the top sideline in each of the imaging devices 21-1 to 21-9 are pixel information acquisition areas of at least one row and the end pixel information acquisition areas arranged alongside the left sideline are pixel information acquisition areas of at least one column. The top-left end pixel information acquisition area P(1, 1) is the intersecting pixel information acquisition area of the horizontally arranged pixel information acquisition areas of one row and the vertically arranged pixel information acquisition areas of one column.

In the following description, attention will be paid to mesh-like small regions (subpixels; separated from each other by broken lines) obtained by equally dividing the top-left end pixel information acquisition area P(1, 1) into nine (3 x 3) parts.

Switching is made between a masked state and an exposed state in units of 1/9 of a pixel using the light shield films 26-1 to 26-9 in vertically arranged pixel information acquisition areas and horizontally arranged pixel information acquisition areas while the driving section 3 switches between the imaging devices 21-1 to 21-9 and moves the selected imaging devices 21 to prescribed positions, until almost all of the mesh-like small regions are put into an exposed state and a masked state.

As a result, switching is made between the imaging devices 21-1 to 21-9 and the selected imaging devices 21 are moved to prescribed positions until:

in the horizontal direction, each of the vertically arranged pixel information acquisition areas of one column excluding the top-left end pixel information acquisition area P(1, 1) is put into a state that is immediately before a state that a region corresponding to one pixel is masked starting from a state that it is not masked at all; and in the vertical direction, each of the horizontally arranged pixel information acquisition areas of one row excluding the top-left end pixel information acquisition area P(1, 1) is put into a state that is immediately before a state that a region corresponding to one pixel is masked starting from a state that it is not masked at all.

Switching can be made between a masked state and an exposed state in units of 1/9 of a pixel using the light shield films 26-1 to 26-9 in the vertically arranged pixel information acquisition areas and the horizontally arranged pixel information acquisition areas.

Although to facilitate understanding the expression "the imaging devices 21 are moved to prescribed positions 'until each of the pixel information acquisition areas of one row or column is put into a state that is immediately before a state that a region corresponding to one pixel is masked starting from a state that it is not masked at all,'" the invention is not limited to such a case. For example, in the fifth exemplary embodiment, the driving section 3 switches between the imaging devices 21-1 to 21-9 and moves the selected imaging devices 21 to prescribed positions "until each of the pixel information acquisition areas of one row or column is put into a state that it is not masked at all starting from a state that is immediately before a state that a region corresponding to one pixel is masked." From which of the horizontally or vertically arranged pixel information acquisition areas of one row or column the driving section 3 switches between the imaging devices 21-1 to 21-9 and moves the selected imaging devices 21 "until each pixel information acquisition area is put into a state immediately before a state that a region corresponding to one pixel is masked starting from a state that it is not masked at all" or "until each pixel information acquisition area is put into a state that it is not masked at all starting from a state that is immediately before a state that a region corresponding to one pixel is masked" may be determined arbitrarily. Therefore, in this specification, the expression "until each pixel information acquisition area is put into a state immediately before a state that a region corresponding to one pixel is masked starting from a state that it is not masked at all" should not construed as a restriction relating to temporal order.

First, imaging is performed in a state that a region, measuring 2/3 of the area of a pixel, of each of the end pixel information acquisition areas arranged alongside the top sideline of the imaging device 201 and the end pixel information acquisition areas arranged alongside the left sideline is masked by the light shield film 26-1 (in the case of the pixel information acquisition area P(1, 1), a region measuring 8/9 of the area of a pixel is masked). The position of the pixel information acquisition areas of the imaging device 21-1 with respect to the subject image 5' in this state is the base position [1'].

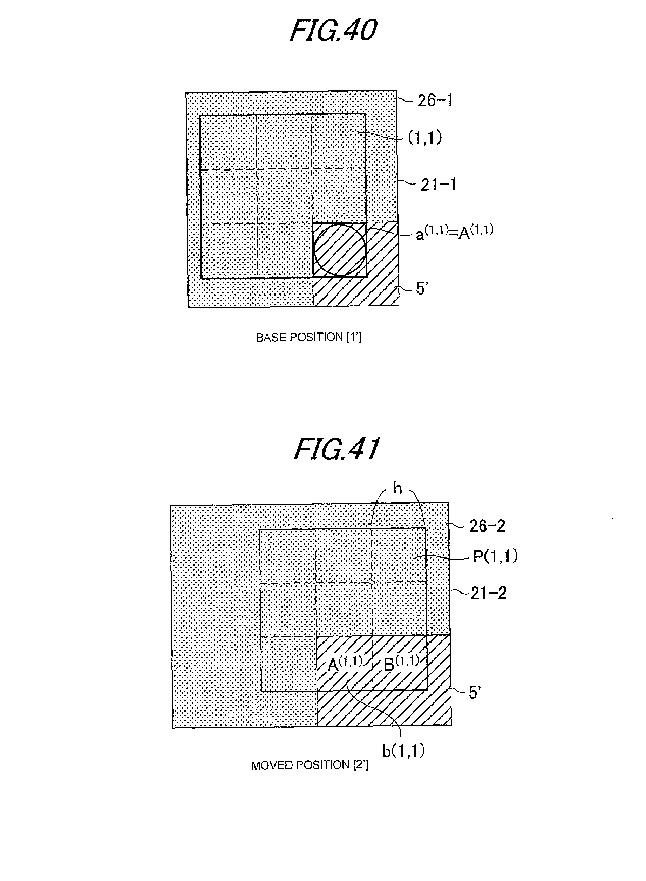

Fig. 41 shows a relationship between the position of the pixel information acquisition areas of the imaging device 21-1 and output values of the imaging device 21-1 when the imaging device 21-1 is located at the base position [1], with attention paid to the top-left end pixel information acquisition area P(1, 1). Imaging is performed in the state that the region, measuring 2/3 of the length of a pixel in each of the vertical direction and the horizontal direction from the top and the left end, respectively, of the top-left end pixel information acquisition area P(1, 1) is shielded from light by the light shield film 26-1.

An output value $a^{(1,1)}$ of the pixel information acquisition area P(1, 1) is stored in the storage section 7. Furthermore, the output value $a^{(1,1)}$ of the pixel information acquisition area P(1, 1) is stored in the storage section 7 as a pixel value $A^{(1,1)}$ of the top-left end region of the subject image 5'.

Then, imaging is performed after switching is made from the imaging device 21-1 to the imaging device 21-2 and the position of the pixel information acquisition areas is shifted rightward from the base position [1'] by 1/3 of the length of a pixel relative to the subject image 5' and the light shield film 26. The resulting position of the pixel information acquisition areas of the imaging device 21-2 with respect to the subject image 5' and the light shield film 26 is the moved position [2'].

Fig. 41 shows a relationship between the imaging device 21-2 and the subject image 5' when the position of the pixel information acquisition areas of the imaging device 21 has been moved rightward from the base position [1'] so that the subject image 5' formed on the imaging device 21 is shifted from the pixel information acquisition area P(1, 1) (one pixel) by a distance h which is 1/3 of the length of a pixel, with attention paid to the pixel information acquisition area P(1, 1). The distance h is shorter than the dimension of each photodetecting element. The area of the masked region, shown in Fig. 41, of the pixel information acquisition area P(1, 1) is smaller than that shown in Fig. 40 by an amount corresponding to the movement of the distance h. That is, the area of the exposed region, shown in Fig. 41, of the pixel information acquisition area P(1, 1) is larger than that shown in Fig. 40 by an amount corresponding to the movement of the distance h. Pixel values are calculated progressively on a subpixel-by-subpixel basis utilizing a difference between exposed regions.

More specifically, an output value $b^{(1,1)}$ of the pixel information acquisition area P(1, 1) produced in this state is stored in the storage section 7. Furthermore, a pixel value

$$B^{(1,\,1)} = b^{(1,\,1)} - a^{(1,\,1)}$$

is stored in the storage section 7 as a pixel value of the region, second to the right from the top-left end region, of the subject image 5'.

Then, imaging is performed after switching is made from the imaging device 21-2 to the imaging device 21-3 and the position of the pixel information acquisition areas of the imaging device 21 is shifted rightward from the moved position [2'] by 1/3 of the length of a pixel relative to the subject image 5' and the light shield film 26. The resulting position of the pixel information acquisition areas of the imaging device 21-3 with respect to the subject image 5' and the light shield film 26 is the moved position [3'].

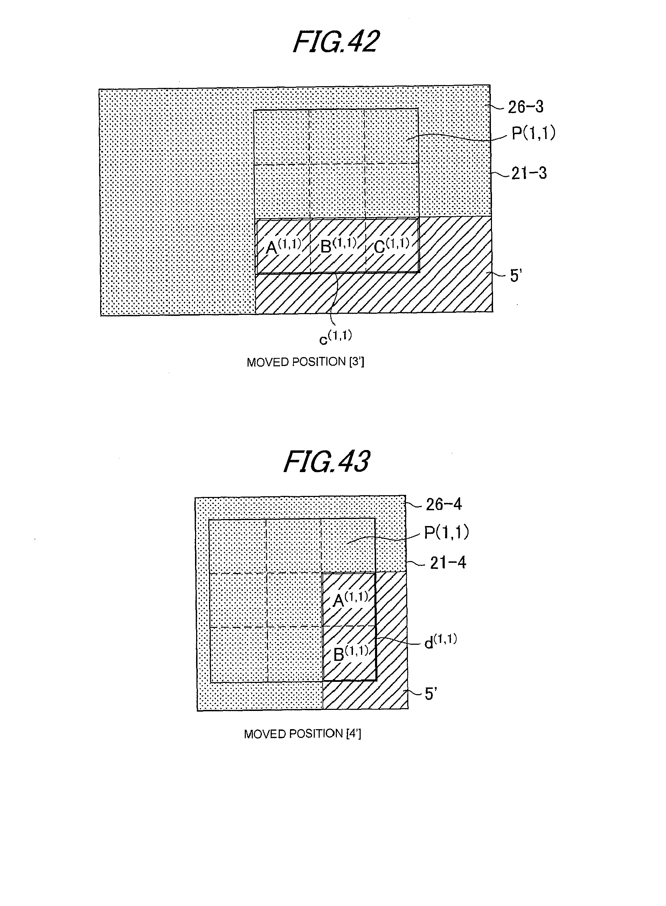

Fig. 42 shows a relationship between the imaging device 21-3 and the subject image 5' when the imaging device 21-3 is located at the moved position [3'] with attention paid to the pixel information acquisition area P(1, 1).

An output value $c^{(1,1)}$ of the pixel information acquisition area P(1, 1) produced in this state is stored in the storage section 7. Furthermore, a pixel value

$$C^{(1,\,1)} = c^{(1,\,1)} - (A^{(1,\,1)} + B^{(1,\,1)})$$

is stored in the storage section 7 as a pixel value of the region, third to the right from the top-left end region, of the subject image 5'.

Then, imaging is performed after switching is made from the imaging device 21-3 to the imaging device 21-4 and the imaging device 21 is shifted downward relative to the subject image 5' by 1/3 of the length of a pixel.

Fig. 43 shows a relationship between the imaging device 21-4 and the subject image 5' when switching has been made from the imaging device 21-3 to the imaging device 21-4 and the position of the pixel information acquisition areas has been shifted downward from the base position [1'] relative to the subject image 5' by 1/3 of the length of a pixel, with attention paid to the pixel information acquisition area P(1, 1). The resulting position of the pixel information acquisition areas of the imaging device 21-4 with respect to the subject image 5' is the moved position [4'].

An output value $d^{(1,1)}$ of the pixel information acquisition area P(1, 1) produced in this state is stored in the storage section 7. Furthermore, a pixel value

$$D^{(1,\,1)} = d^{(1,\,1)} - A^{(1,\,1)}$$

is stored in the storage section 207 as a pixel value of the region, second downward from the top-left end region, of the subject image 5'.

Then, imaging is performed after switching is made from the imaging device 21-4 to the imaging device 21-5 and the position of the pixel information acquisition areas is shifted rightward from the moved position [4'] by 1/3 of the length of a pixel.

The resulting position of the pixel information acquisition areas of the imaging device 21-5 with respect to the subject image 5' is the moved position [5'] (not shown).

An output value $e^{(1,1)}$ of the pixel information acquisition area P(1, 1) produced in this state is stored in the storage section 7. Furthermore, a pixel value

$$E^{(1,\,1)} = e^{(1,\,1)} - (A^{(1,\,1)} + B^{(1,\,1)} + D^{(1,\,1)})$$

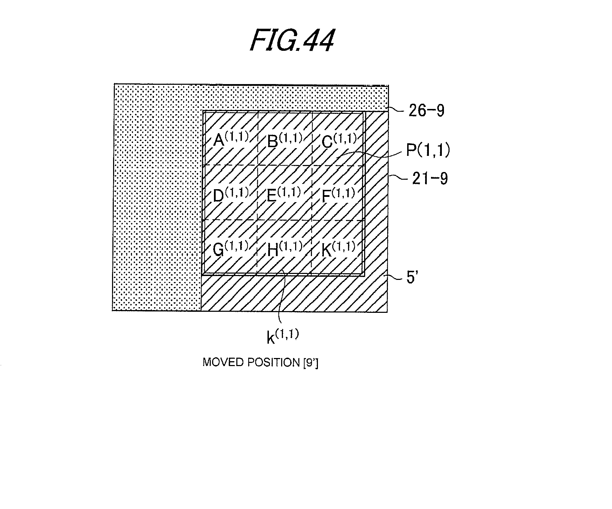

is stored in the storage section 7 as a pixel value of the region, second to the right and second downward from the top-left end region, of the subject image 5' (see Fig. 44).

Then, imaging is performed after switching is made from the imaging device 21-5 to the imaging device 21-6 and the position of the pixel information acquisition areas is further shifted rightward from the moved position [5'] by 1/3 of the length of a pixel.

The resulting position of the pixel information acquisition areas of the imaging device 21-6 with respect to the subject image 5' is the moved position [6'] (not shown).

An output value $f^{(1,1)}$ of the pixel information acquisition area P(1, 1) produced in this state is stored in the storage section 7. Furthermore, a pixel value

$$F^{(1,\,1)} = f^{(1,\,1)} - (A^{(1,\,1)} + B^{(1,\,1)} + C^{(1,\,1)} + D^{(1,\,1)} + E^{(1,\,1)})$$

is stored in the storage section 7 as a pixel value of the region, third to the right and second downward from the top-left end region, of the subject image 5' (see Fig. 44).

Then, imaging is performed after switching is made from the imaging device 21-6 to the imaging device 21-7 and the position of the pixel information acquisition areas is shifted downward from the base position [1'] by 2/3 of the length of a pixel.

The resulting position of the imaging device 21-7 with respect to the subject image 5' is the moved position [7'] (not shown).

An output value $g^{(1,1)}$ of the pixel information acquisition area P(1, 1) produced in this state is stored in the storage section 07. Furthermore, a pixel value

$$G^{(1,\,1)} = g^{(1,\,1)} - (A^{(1,\,1)} + D^{(1,\,1)})$$

is stored in the storage section 7 as a pixel value of the region, third downward from the top-left end region, of the subject image 5' (see Fig. 44).

Then, imaging is performed after switching is made from the imaging device 21-7 to the imaging device 21-8 and the pixel information acquisition areas is shifted rightward from the moved position [7'] by 1/3 of the length of a pixel.

The resulting position of the pixel information acquisition areas of the imaging device 21-8 with respect to the subject image 5' is the moved position [8'] (not shown).

An output value $h^{(1,\ 1)}$ of the pixel information acquisition area P(1, 1) produced in this state is stored in the storage section 7. Furthermore, a pixel value

$$H^{(1,\ 1)} = h^{(1,\ 1)} - (A^{(1,\ 1)} + B^{(1,\ 1)} + D^{(1,\ 1)} + E^{(1,\ 1)} + G^{(1,\ 1)})$$

is stored in the storage section 7 as a pixel value of the region, second to the right and third downward from the top-left end region, of the subject image 5' (see Fig. 44).

Then, imaging is performed after switching is made from the imaging device 21-8 to the imaging device 21-9 and the position of the pixel information acquisition areas is further shifted rightward from the moved position [8'] by 1/3 of the length of a pixel. The resulting position of the pixel information acquisition areas of the imaging device 21-9 with respect to the subject image 5' is named a moved position [9'] (not shown).

An output value $k^{(1,\ 1)}$ of the pixel information acquisition area P(1, 1) produced in this state is stored in the storage section 7. Furthermore, a pixel value

$$K^{(1,\ 1)} = k^{(1,\ 1)} - (A^{(1,\ 1)} + B^{(1,\ 1)} + C^{(1,\ 1)} + D^{(1,\ 1)} + E^{(1,\ 1)}$$
$$+ F^{(1,\ 1)} + G^{(1,\ 1)})$$

is stored in the storage section 7 as a pixel value of the region, third to the right and third downward from the top-left end region, of the subject image 5' (see Fig. 44).

As described above, the position of the pixel information acquisition areas of the imaging device 21 with respect to the light shield film 26 can be changed to the moved position [9] from the base position [1'] via the moved positions [2']-[8'] by switching between the imaging devices 21-1 to 21-9 and moving the selected imaging devices 21 to imaging positions. Fig. 44 shows a relationship between the imaging device 21-9 and the generated pieces of pixel information (pixel values) of the subject image 5' with attention paid to the pixel information acquisition area P(1, 1). Pieces of pixel information of the subject image 5' are given pixel addresses defined in a state that the position of the pixel information acquisition areas of the imaging device 21-9 is the moved position [9'].

In the above-described manner, the pixel values $A^{(1,\ 1)}$, $B^{(1,1)}$, $C^{(1,1)}$, $D^{(1,\ 1)}$, $E^{(1,\ 1)}$, $F^{(1,\ 1)}$ and $G^{(1,\ 1)}$ of 1/9-size subpixels of the top-left end pixel of the subject image 5' can be obtained using the pixel information acquisition area P(1, 1) of one pixel which is located at the top-left end of the imaging device 21. That is, nine pieces of pixel information can be obtained using the pixel information acquisition area P(1, 1) of one pixel.

[Operation in which attention is paid to other pixel information acquisition areas]

When imaging is performed after switching is made between the imaging devices 21-1 to 21-9 and the position of the pixel information acquisition areas of the selected imaging device 21 is each of the positions [1']-[9'], corresponding sets of pieces of pixel information of the subject image 5' can also be acquired from pixel information acquisition areas other than the top-left end pixel information acquisition area P(1, 1). A description will now be made of an operation of acquiring sets of pieces of pixel information from the pixel information acquisition areas other than the pixel information acquisition area P(1, 1), that is, the pixel information acquisition areas P(2, 1), P(3, 1), P(1, 2), P(2, 2), P(3, 2), P(1, 3), P(2, 3), P(3, 3), ⋯.

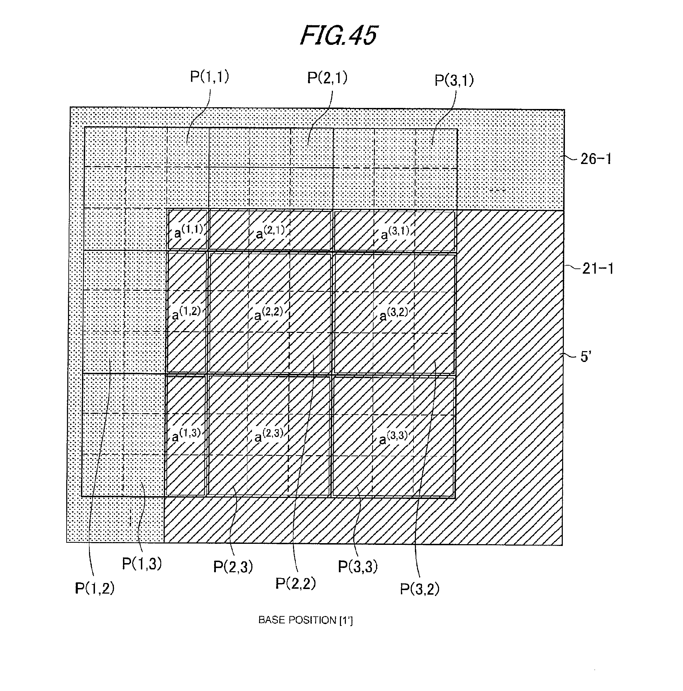

As shown in Fig. 45, when the pixel information acquisition areas of the imaging device 21-1 are located at the base position [1'], output values $a^{(1,\ 1)}$ $a^{(2,\ 1)}$, $a^{(3,\ 1)}$, $a^{(1,\ 2)}$, $a^{(2,\ 2)}1$, $a^{(3,\ 2)}$, $a^{(1,\ 3)}$, $a^{(2,\ 3)}$, $a^{(3,\ 3)}$, ⋯ of the pixel information acquisition areas P(1, 1), P(2, 1), P(3, 1), P(1, 2), P(2, 2), P(3, 2), P(1, 3), P(2, 3), P(3, 3), ⋯ are stored in the storage section 7.

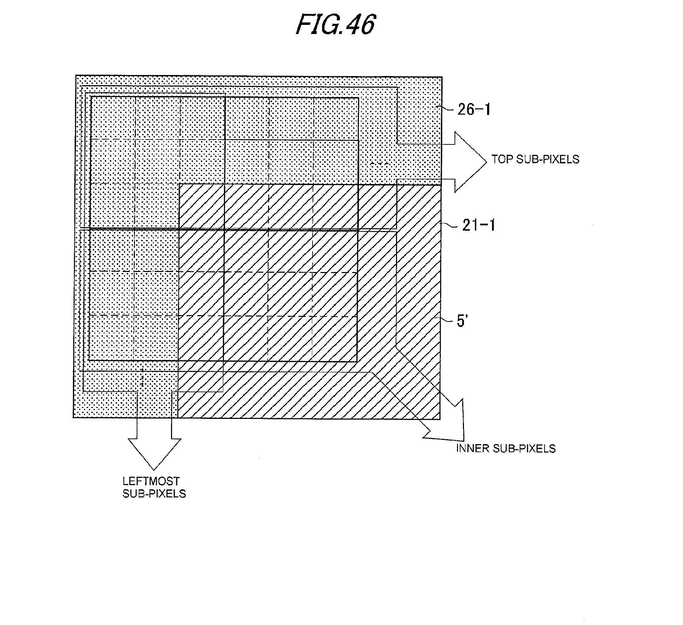

As shown in Fig. 46, pieces of pixel information of the subject image 5' can be acquired from the top subpixels by similar methods by switching to the imaging devices 21-2 and 21-3 and moving the pixel information acquisition areas of the imaging device 21 rightward relative to the subject image 5' and the light shield film 26 to the moved positions [2'] and [3'] starting from the base position [1']. Likewise, pieces of pixel information of the subject image 5' can be acquired from the leftmost subpixels by similar methods by switching to the imaging devices 21-4 and 21-5 and moving the pixel information acquisition areas downward relative to the subject image 5' and the light shield plate 26 to the moved positions [4] and [5]. Furthermore, pieces of pixel information of the subject image 5' can be acquired from the inner subpixels and pixel information acquisition areas by similar methods based on the thus-acquired pieces of pixel information of the top subpixels and the leftmost subpixels by switching to the imaging devices 21-6 to 21-9 and moving the pixel information acquisition areas to the moved positions [6']-[9'].

A description will now be made of how to acquire pieces of pixel information of the entire subject image 5' for three separate cases of acquiring pieces of pixel information from the top subpixels, acquiring pieces of pixel information from the leftmost subpixels, and acquiring pieces of pixel information from the inner subpixels and pixel information acquisition areas of the subject image 5'.

[Acquisition of pieces of pixel information of top subpixels]

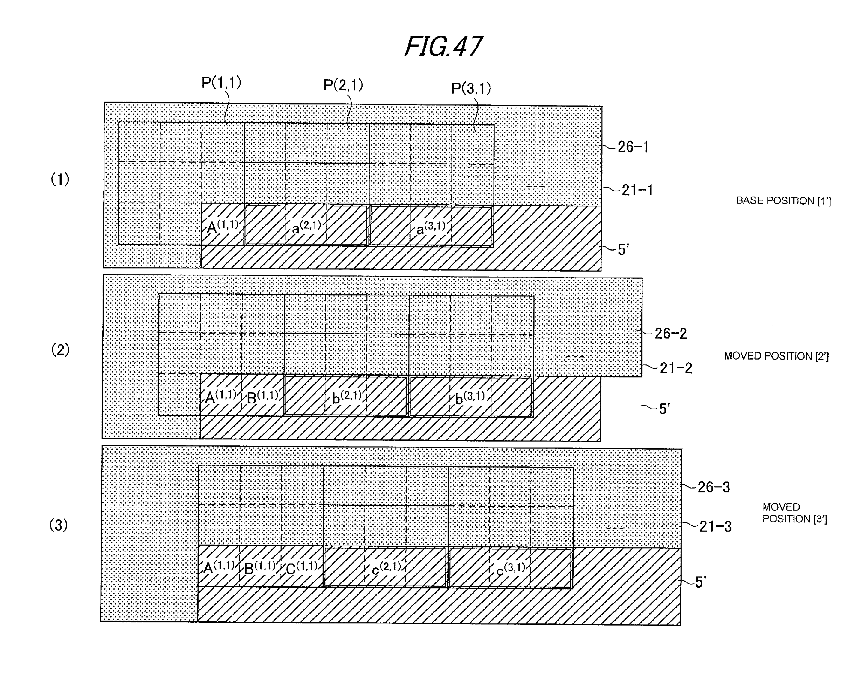

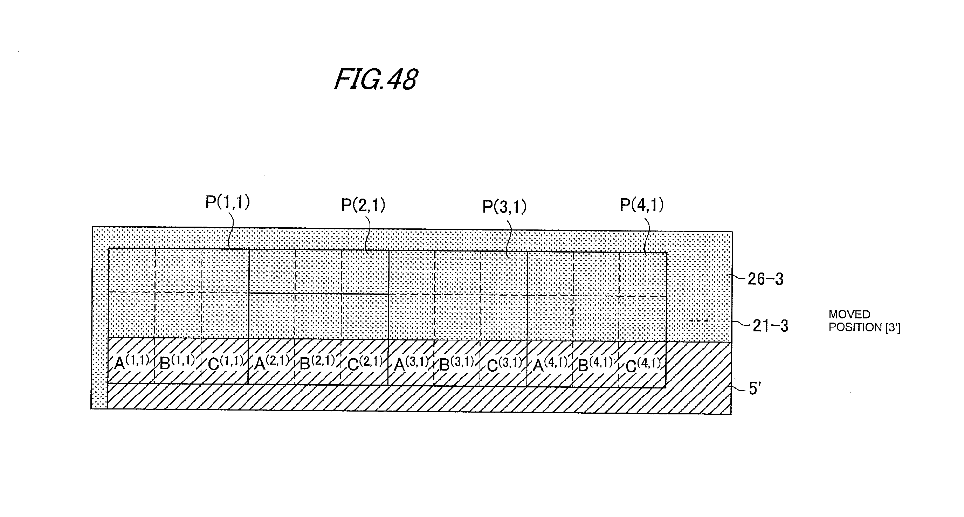

A method for acquiring pieces of pixel information of top subpixels of the subject image 5' of the pixel information acquisition area P(1, 1), P(2, 1), P(3, 1), ··· will be described below with reference to Figs. 47 and 48.

As shown in part (1) of Fig. 47, when the pixel information acquisition areas the imaging device 21-1 are located at the base position [1'], output values of the pixel information acquisition areas P(1, 1), P(2, 1), and P(3, 1) are stored in the storage section 7 as $A^{(1, 1)}$, $a^{(2, 1)}$, and $a^{(3, 1)}$, respectively, because an output value $a^{(1, 1)}$ of the pixel information acquisition area P(1, 1) is employed as pixel information $A^{(1, 1)}$.

Then, as shown in part (2) of Fig. 47, when the pixel information acquisition areas of the imaging device 21-2 are located at the moved position [2'], pieces of information $A^{(1, 1)}$, $B^{(1, 1)}$, $b^{(2, 1)}$, and $b^{(3, 1)}$ are stored in the storage section 7 based on output values of the pixel information acquisition areas P(1, 1), P(2, 1), and P(3, 1), because pieces of pixel information $A^{(1, 1)}$ and $B^{(1, 1)}$ of the pixel information acquisition area P(1, 1) are calculated by the above-described method.

Then, as shown in part (3) of Fig. 47, when the pixel information acquisition areas of the imaging device 21-3 are located at the moved position [3'], pieces of information $A^{(1, 1)}$, $B^{(1, 1)}$, $C^{(1, 1)}$, $C^{(2, 1)}$, and $C^{(3, 1)}$ are stored in the storage section 7 based on output values of the pixel information acquisition areas P(1, 1), P(2, 1), and P(3, 1), because pieces of pixel information $A^{(1,1)}$, $B^{(1, 1)}$, and $C^{(1, 1)}$ of the pixel information acquisition area P(1, 1) are calculated by the above-described method.

Pieces of pixel information of the top subpixels of the pixel information acquisition area P(2, 1) are calculated as follows:

$$A^{(2, 1)} = a^{(2, 1)} - (B^{(1, 1)} + C^{(1, 1)})$$

$$B^{(2, 1)} = b^{(2, 1)} - (C^{(1, 1)} + A^{(2, 1)})$$

$$C^{(2, 1)} = c^{(2, 1)} - (A^{(1, 1)} + B^{(2, 1)})$$

These pieces of pixel information are stored in the storage section 7.

Likewise, pieces of pixel information of the top subpixels of the other pixel information acquisition areas P(3, 1), P(4, 1), ··· are calculated according to the following equation based on output values of the pixel information acquisition areas P(1, 1), P(2, 1), P(3, 1), P(4, 1), ···:

$$A^{(m, 1)} = a^{(m, 1)} - (B^{(m-1, 1)} + C^{(m-1, 1)})$$

$$B^{(m, 1)} = b^{(m, 1)} - (C^{(m-1, 1)} + A^{(m, 1)})$$

$$C^{(m, 1)} = c^{(m, 1)} - (A^{(m, 1)} + B^{(m, 1)})$$

where m is an arbitrary natural number. These pieces of pixel information are stored in the storage section 7.

Fig. 48 shows the pieces of pixel information acquired in the above-described manner.

[Acquisition of pieces of pixel information of leftmost subpixels]

A method for acquiring pieces of pixel information of leftmost subpixels of the subject image 5' of the pixel information acquisition areas P(1, 1), P(1, 2), P(1, 3), ⋯ will be described below.

Output values of the pixel information acquisition areas P(1, 1), P(1, 2), P(1, 3), ⋯ to be produced when the pixel information acquisition areas of the imaging device 21-1 are located at the base position [1'] are represented by $a^{(1, 1)}$, $a^{(1, 2)}$, $a^{(1, 3)}$, ⋯, respectively. Output values of the pixel information acquisition areas P(1, 1), P(1, 2), P(1, 3), ⋯ obtained by imaging which is performed repeatedly as switching is made to the imaging device 21-4 and 21-7 and the pixel information acquisition areas are shifted downward by 1/3 of the length of a pixel each time so as to reach the moved positions [4'] and [7'] starting from the base position [1'] are used. That is, pieces of pixel information of the leftmost subpixels can be acquired based on the output values of the pixel information acquisition areas P(1, 1), P(1, 2), P(1, 3), ⋯ by methods similar to the methods by which pieces of pixel information of the top subpixels are acquired. Pieces of pixel information of the leftmost subpixels of the leftmost pixel information acquisition areas are calculated according to the following equations (interim equations omitted):

$$A^{(1, n)} = a^{(1, n)} - (D^{(1, n-1)} + G^{(1, n-1)})$$

$$D^{(1, n)} = d^{(1, n)} - (G^{(1, n-1)} + A^{(1, n)})$$

$$G^{(1, n)} = g^{(1, n)} - (A^{(1, n)} + D^{(1, n)})$$

where n is an arbitrary natural number. These pieces of pixel information are stored in the storage section 7.

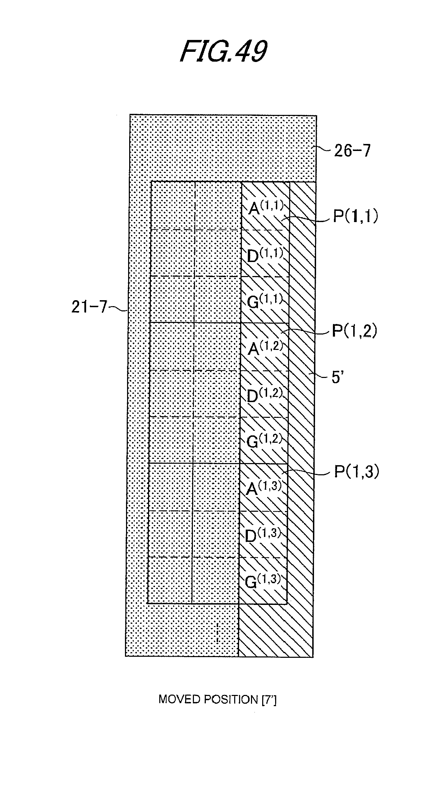

Fig. 49 shows the pieces of pixel information acquired in the above-described manner.

[Acquisition of pieces of pixel information of inner subpixels and pixel information acquisition areas]

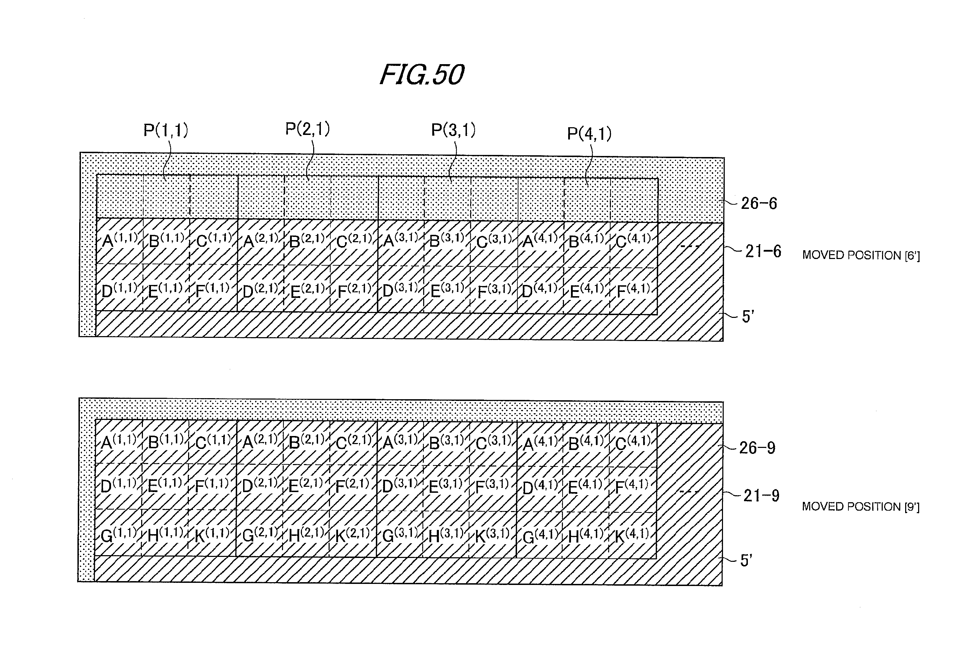

A method for acquiring pieces of pixel information of inner subpixels of the subject image 5' of the pixel information acquisition areas P(1, 1), P(2, 1), P(3, 1), ⋯ will be described below with reference to Fig. 50.
Output values of the pixel information acquisition areas P(1, 1), P(2, 1), P(3, 1), ⋯ obtained by imaging which is performed after switching is made from the imaging device 21-3 to the imaging device 21-6 and the pixel information acquisition areas are shifted downward by 1/3 of the length of a pixel so as to reach the moved positions [6'] from the moved position [3'] are used. That is, pieces of pixel information D-F of the pixel information acquisition areas P(1, 1), P(2, 1), P(3, 1), ⋯ can be acquired using the output values of the pixel information acquisition area P(1, 1), P(2, 1), P(3, 1), ⋯ by methods similar to the methods by which pieces of pixel information of the top subpixels are acquired. Pieces of pixel information D-F are calculated according to the following equations:

$$D^{(m, 1)} = d^{(m, 1)} - (B^{(m-1, 1)} + C^{(m-1, 1)} + E^{(m-1, 1)} + F^{(m-1, 1)} + A^{(m, 1)})$$

$$E^{(m, 1)} = e^{(m, 1)} - (C^{(m-1, 1)} + F^{(m-1, 1)} + A^{(m, 1)} + B^{(m, 1)} + D^{(m, 1)})$$

$$F^{(m, 1)} = f^{(m, 1)} - (A^{(m, 1)} + B^{(m, 1)} + C^{(m, 1)} + D^{(m, 1)} + E^{(m, 1)})$$

The pieces of pixel information calculated in the above-described manner are stored in the storage section 7. Part (1) of Fig. 50 shows the thus-acquired pieces of pixel information.

Furthermore, output values of the pixel information acquisition area P(1, 1), P(2, 1), P(3, 1), ··· obtained by imaging which is performed after switching is made to the imaging device 21-9 and the pixel information acquisition areas are shifted downward by 1/3 of the length of a pixel so as to reach the moved positions [9'] from the moved position [6'] are used. That is, pieces of pixel information G-K of the pixel information acquisition areas P(1, 1), P(2, 1), P(3, 1), ··· can be acquired using the output values of the pixel information acquisition areas P(1, 1), P(2, 1), P(3, 1), ··· by methods similar to the methods by which pieces of pixel information of the top subpixels are acquired. Pieces of pixel information G-K are calculated according to the following equations:

$$G^{(m, 1)} = g^{(m, 1)} - (B^{(m-1, 1)} + C^{(m-1, 1)} + E^{(m-1, 1)} + F^{(m-1, 1)}$$
$$+ H^{(m-1, 1)} + K^{(m-1, 1)} + A^{(m, 1)} + D^{(m, 1)})$$

$$H^{(m, 1)} = h^{(m, 1)} - (C^{(m-1, 1)} + F^{(m-1, 1)} + K^{(m-1, 1)} + A^{(m, 1)}$$
$$+ B^{(m, 1)} + D^{(m, 1)} + E^{(m, 1)} + G^{(m, 1)})$$

$$K^{(m, 1)} = k^{(m, 1)} - (A^{(m, 1)} + B^{(m, 1)} + C^{(m, 1)} + D^{(m, 1)} + E^{(m, 1)}$$

$$+ F^{(m, 1)} + G^{(m, 1)} + H^{(m, 1)})$$

The pieces of pixel information calculated in the above-described manner are stored in the storage section 7. Part (2) of Fig. 50 shows the thus-acquired pieces of pixel information.

Next, a method for acquiring pieces of pixel information of the subject image 5' of further inner pixel information acquisition areas based on pieces of pixel information of inner pixel information acquisition areas of the imaging devices 21 will be described using, as an example, a case of acquiring pieces of pixel information of the subpixels of the pixel information acquisition area P(2, 2). It is assumed that output values $a^{(2, 2)}$ -$k^{(2, 2)}$ of the subpixels of the pixel information acquisition area P(2, 2) that were acquired when the pixel information acquisition areas were located at the base position [1'] and the moved positions [2']-[9'] are already stored in the storage section 7.

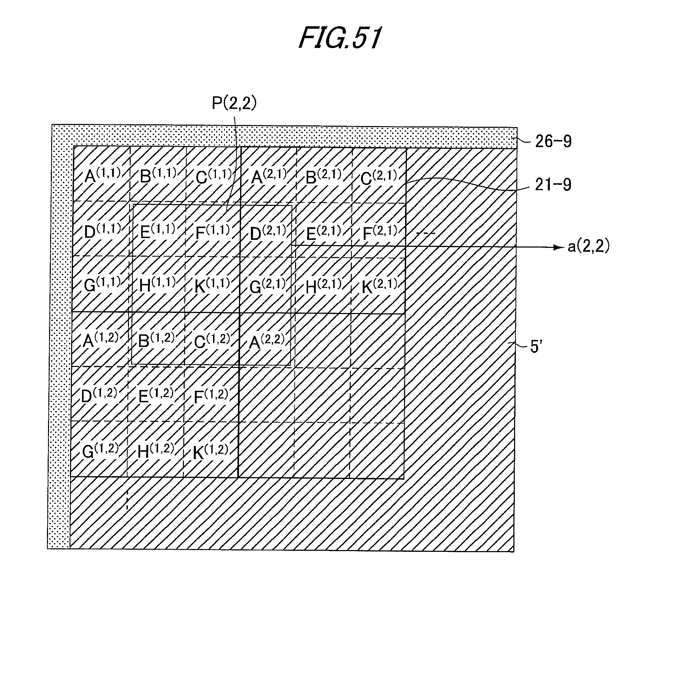

It is also assumed that pieces of pixel information of the top pixel information acquisition areas and the leftmost pixel information acquisition areas that were calculated based on pieces of information acquired when the pixel information acquisition areas were located at the base position [1'] and the moved positions [2']-[9'] are already stored in the storage section 7 as shown in Fig. 51.

As shown in Fig. 51, pixel information $A^{(2, 2)}$ is calculated according to the following equation using the output value $a^{(2, 2)}$ of the pixel information acquisition area P(2, 2) that was acquired when the pixel information acquisition areas of the imaging device 21-1 were located at the base position [1']:

$$A^{(2, 2)} = a^{(2, 2)} - (E^{(1, 1)} + F^{(1, 1)} + H^{(1, 1)} + K^{(1, 1)} + D^{(2, 1)}$$
$$+ G^{(2, 1)} + B^{(1, 2)} + C^{(1, 2)})$$

Likewise, pixel information $B^{(2, 2)}$ is calculated according to the following equation using the output value $b^{(2, 2)}$ of the pixel information acquisition area P(2, 2) that was acquired when the pixel information acquisition areas of the imaging device 21-2 were located at the moved position [2']:

$$B^{(2, 2)} = b^{(2, 2)} - (F^{(1, 1)} + K^{(1, 1)} + D^{(2, 1)} + E^{(2, 1)} + G^{(2, 1)}$$
$$+ H^{(2, 1)} + C^{(1, 2)} + A^{(2, 2)})$$

Pixel information $C^{(2, 2)}$ is calculated according to the following equation using the output value $C^{(1, 2)}$ of the pixel information acquisition area P(2, 2) that was acquired when the pixel information acquisition areas of the imaging device 21-3 were located at the moved position [3']:

$$C^{(2, 2)} = c^{(2, 2)} - (D^{(2, 1)} + E^{(2, 1)} + F^{(2, 1)} + G^{(2, 1)} + H^{(2, 1)}$$
$$+ K^{(2, 1)} + A^{(2, 2)} + B^{(2, 2)})$$

Pixel information $D^{(2, 2)}$ is calculated according to the following equation using the output value $d^{(2, 2)}$ of the pixel information acquisition area P(2, 2) that was acquired when the pixel information acquisition areas of the imaging device 21-4 were located at the moved position [4']:

$$D^{(2, 2)} = d^{(2, 2)} - (H^{(1, 1)} + K^{(1, 1)} + G^{(2, 1)} + B^{(1, 2)} + C^{(1, 2)}$$
$$+ E^{(1, 2)} + F^{(1, 2)} + A^{(2, 2)})$$

Pixel information $E^{(2, 2)}$ is calculated according to the following equation using the output value $e^{(2, 2)}$ of the pixel information acquisition area P(2, 2) that was acquired when the pixel information acquisition areas of the imaging device 21-5 were located at the moved position [5']:

$$E^{(2, 2)} = e^{(2, 2)} - (K^{(1, 1)} + G^{(2, 1)} + H^{(2, 1)} + C^{(1, 2)} + F^{(1, 2)}$$
$$+ A^{(2, 2)} + B^{(2, 2)} + D^{(2, 2)})$$

Pixel information $F^{(2, 2)}$ is calculated according to the following equation using the output value $f^{(2, 2)}$ of the pixel information acquisition area P(2, 2) that was acquired when the pixel information acquisition areas of the imaging device 21-6 were located at the moved position [6']:

$$F^{(2, 2)} = f^{(2, 2)} - (G^{(2, 1)} + H^{(2, 1)} + K^{(2, 1)} + A^{(2, 2)} + B^{(2, 2)}$$
$$+ C^{(2, 2)} + D^{(2, 2)} + E^{(2, 2)})$$

Pixel information $G^{(2, 2)}$ is calculated according to the following equation using the output value $g^{(2, 2)}$ of the pixel information acquisition area P(2, 2) that was acquired when the pixel information acquisition areas of the imaging device 201 were located at the moved position [7']:

$$G^{(2, 2)} = g^{(2, 2)} - (B^{(1, 2)} + C^{(1, 2)} + E^{(1, 2)} + F^{(1, 2)} + K^{(1, 2)}$$
$$+ H^{(1, 2)} + A^{(2, 2)} + D^{(2, 2)})$$

Pixel information $H^{(2, 2)}$ is calculated according to the following equation using the output value $h^{(2, 2)}$ of the pixel information acquisition area P(2, 2) that was acquired when the pixel information acquisition areas of the imaging device 21-8 were located at the moved position [8']:

$$H^{(2, 2)} = h^{(2, 2)} - (C^{(1, 2)} + F^{(1, 2)} + K^{(1, 2)} + A^{(2, 2)} + B^{(2, 2)}$$
$$+ D^{(2, 2)} + E^{(2, 2)} + G^{(2, 2)})$$

Pixel information $K^{(2, 2)}$ is calculated according to the following equation using the output value $k^{(2, 2)}$ of the pixel information acquisition area P(2, 2) that was acquired when the pixel information acquisition areas of the imaging device 21-9 was located at the moved position [9']:

$$K^{(2,\,2)} = k^{(2,\,2)} - (A^{(2,\,2)} + B^{(2,\,2)} + C^{(2,\,2)} + D^{(2,\,2)} + E^{(2,\,2)}$$
$$+ F^{(2,\,2)} + G^{(2,\,2)} + H^{(2,\,2)})$$

Put in general terms, pieces of pixel information $A^{(m,\,n)}$ -$K^{(m,\,n)}$ of the subpixels of the subject image 5' can be calculated according to the following equations using output values $a^{(m,\,n)}$-$k^{(m,\,n)}$ of the pixel information acquisition areas P(m, n):

$$A^{(m,\,n)} = a^{(m,\,n)} - (E^{(m-1,\,n-1)} + F^{(m-1,\,n-1)} + H^{(m-1,\,n-1)}$$
$$+ K^{(m-1,\,n-1)} + D^{(m,\,n-1)} + G^{(m,\,n-1)} + B^{(m-1,\,n)} + C^{(m-1,\,n)})$$

$$B^{(m,\,n)} = b^{(m,\,n)} - (F^{(m-1,\,n-1)} + K^{(m-1,\,n-1)} + D^{(m,\,n-1)} + E^{(m,\,n-1)}$$
$$+ G^{(m,\,n-1)} + H^{(m,\,n-1)} + C^{(m-1,\,n)} + A^{(m,\,n)})$$

$$C^{(m,\,n)} = c^{(m,\,n)} - (D^{(m,\,n-1)} + E^{(m,\,n-1)} + F^{(m,\,n-1)} + G^{(m,\,n-1)}$$
$$+ H^{(m,\,n-1)} + K^{(m,\,n-1)} + A^{(m,\,n)} + B^{(m,\,n)})$$

$$D^{(m,\,n)} = d^{(m,\,n)} - (H^{(m-1,\,n-1)} + K^{(m-1,\,n-1)} + G^{(m,\,n-1)} + B^{(m-1,\,n)}$$
$$+ C^{(m-1,\,n)} + E^{(m-1,\,n)} + F^{(m-1,\,n)} + A^{(m,\,n)})$$

$$E^{(m,\,n)} = e^{(m,\,n)} - (K^{(m-1,\,n-1)} + G^{(m,\,n-1)} + H^{(m,\,n-1)} + C^{(m-1,\,n)}$$
$$+ F^{(m-1,\,n)} + A^{(m,\,n)} + B^{(m,\,n)} + D^{(m,\,n)})$$

$$F^{(m,\,n)} = f^{(m,\,n)} - (G^{(m,\,n-1)} + H^{(m,\,n-1)} + K^{(m,\,n-1)} + A^{(m,\,n)}$$
$$+ B^{(m,\,n)} + C^{(m,\,n)} + D^{(m,\,n)} + E^{(m,\,n)})$$

$$G^{(m,\,n)} = g^{(m,\,n)} - (B^{(m-1,\,n)} + C^{(m-1,\,n)} + E^{(m-1,\,n)} + F^{(m-1,\,n)}$$
$$+ H^{(m-1,\,n)} + K^{(m-1,\,n)} + A^{(m,\,n)} + D^{(m,\,n)})$$

$$H^{(m,\,n)} = h^{(m,\,n)} - (C^{(m-1,\,n)} + F^{(m-1,\,n)} + K^{(m-1,\,n)} + A^{(m,\,n)}$$
$$+ B^{(m,\,n)} + D^{(m,\,n)} + E^{(m,\,n)} + G^{(m,\,n)})$$

$$K^{(m,\,n)} = k^{(m,\,n)} - (A^{(m,\,n)} + B^{(m,\,n)} + C^{(m,\,n)} + D^{(m,\,n)} + E^{(m,\,n)}$$
$$+ F^{(m,\,n)} + G^{(m,\,n)} + H^{(m,\,n)})$$

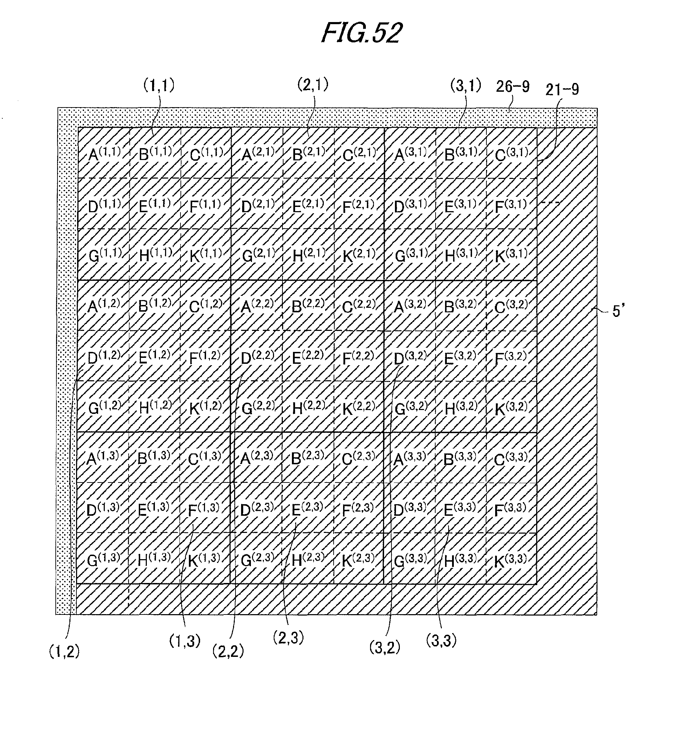

Fig. 52 shows pieces of pixel information acquired in the above-described manner. Pieces of pixel information of the subject image 5' are given pixel addresses defined in a state that the pixel information acquisition areas of the imaging device 21-9 is located at the moved position [9']. The thus-calculated pieces of pixel information are stored in the storage section 7.

It is understood from the above description that pieces of pixel information of the subject image 5' of all the subpixels can be extracted from pieces of information that are acquired when the top pixel information acquisition areas and leftmost pixel information acquisition areas are shielded from light partially.

[Pixel information acquisition process]

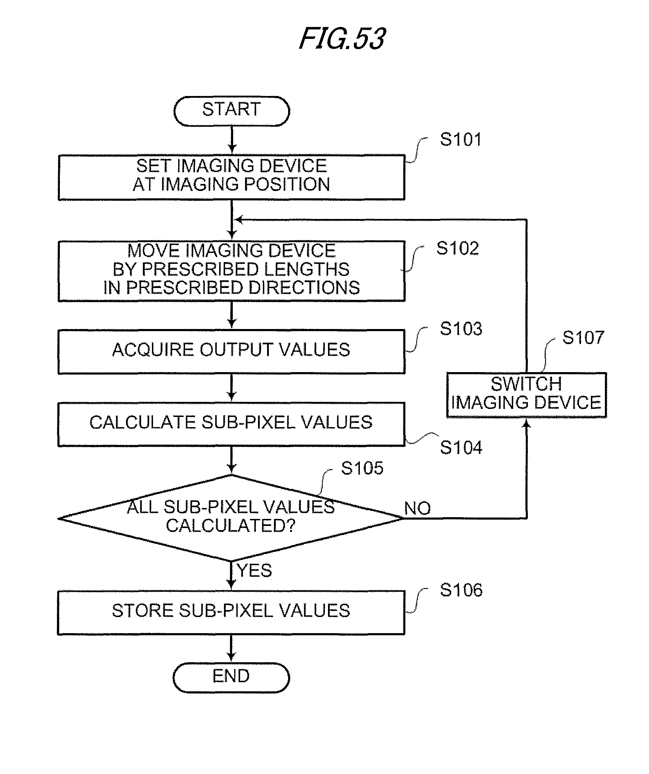

A process according to which the imaging apparatus 10 according to the fifth exemplary embodiment takes an image of a subject 5 will be described below with reference to Fig. 53. This process is executed under the control of the control section 4.

First, at step S101, the control section 4 controls the driving section 3 to select an imaging device 21 from the imaging devices 21-1 to 21-9 and set the selected imaging device 21 at a prescribed position. More specifically, the control section 4 controls the driving section 3 to set a selected imaging device 21 at an imaging position F where it can shoot a subject 5. One of the imaging devices 21-1 to 21-9 that is selected at this stage for shooting of the subject 5 is called "imaging device 21."

At step S102, the control section 4 moves the imaging device 21 by prescribed lengths in prescribed directions. More specifically, the control section 4 controls the driving section 3 to move the imaging device 21 to a prescribed position that is suitable to shoot the subject 5 by moving it in units of the length of a subpixel in each of the directions X and Y in the plane that is perpendicular to incident light.

At step S103, the control section 4 causes imaging and acquires output values of the imaging device 21. More specifically, the control section 4 controls the imaging unit 2 to perform imaging, acquire output values of the pixel information acquisition areas P(1, 1), P(2, 1), P(3, 1), ⋯ , P(1, 2), ⋯ , P(1, 3), ⋯, P(i, j) of the imaging device 21, and store them in the storage section 7.

At step S104, the control section 4 calculates subpixel values. More specifically, the control section 4 calculates subpixel values of pixel addresses (m, n) of a subject image 5' according to the above-described equations using the output values of the pixel information acquisition areas P(1, 1), P(2, 1), P(3, 1), ⋯, P(1, 2), ⋯, P(1, 3), ⋯, P(i, j) of the imaging device 21, and stores the calculated subpixel values in the storage section 7.

At step S105, the control section 204 judges whether or not all subpixel values of every pixel address (m, n) have been calculated. More specifically, the control section 104 judges whether or not imaging has been performed using all the imaging devices 21-1 to 21-9. If it is judged that there remains an imaging device(s) that has not been used yet, the process moves to step S107, where the imaging device 21 is switched. More specifically, assume that, for example, steps S102-S105 have been executed using the imaging device 21-1 and switching should be made from the imaging device 21-1 to the imaging device 21-2. In this case, the control section 4 controls the driving section 3 to return the imaging device 21-1 from the imaging position F to the imaging device storage place S. Furthermore, the driving section 3 moves the imaging device 21-2 from the storage place S to the imaging position F.

On the other hand, if the control section 4 judges at step S105 that all subpixel values of every pixel address (m, n) of the subject image 5' have been calculated, that is, imaging has been performed using all the imaging devices 21-1 to 21-9, the process moves to step S106. At step S106, the control section 4 stores, as pieces of pixel information, all the calculated pixel values (subpixel values) in the storage section 7 in such a manner that they are correlated with the corresponding pieces of position information of the subject image 5'. If necessary, the control section 4 displays an image based on all the calculated pixel values. More specifically, the control section 4 controls the display unit 8 to display an image of the subject 5 based on all the pieces of pixel information of the subject image 5' stored in the storage section 7. Then, the pixel information acquisition process is finished.

The imaging apparatus 10 according to the fifth exemplary embodiment is equipped with the plural imaging devices 21-1 to 21-9 in which the respective sets of photodetecting elements A(m, n) are partially shielded in different patterns from incident light coming from a subject. The photodetecting elements A(m, n) of each of the imaging devices 21-1 to 21-9 have the divisional photodetecting surfaces P(m, n) as the pixel information acquisition areas each having a prescribed area and produce output values corresponding to light quantities received by the divisional photodetecting surfaces P(m, n), respectively. In the fifth exemplary embodiment, each of the imaging devices 21-1 to 21-9 is shielded from light in units of 1/9 of a pixel. The imaging apparatus 10 performs the imaging method which includes step S103 of acquiring output values of the photodetecting elements A(m, n) of each of the imaging devices 21-1 to 21-9 while switching is made between the imaging devices 21-1 to 21-9 having the different light shield patterns (step S107), step S104 of calculating subpixel values corresponding to light quantities received by regions smaller than the photodetecting surfaces P(m, n) of the photodetecting elements A(m, n) based on the output values of the photodetecting elements A(m, n) of the imaging devices 21-1 to 21-9, and step S106 of storing the subpixel values calculated by step S104 in such a manner that they are correlated with pieces of position information of a subject image.

In the above imaging method, even finer pieces of pixel information of a subject image can be obtained based on output values corresponding to regions smaller than the photodetecting surfaces P(m, n) (pixel information acquisition areas) of the photodetecting elements A(m, n) while the masked portion of the photodetecting elements A(m, n) of the imaging device 21 is changed. Therefore, a high-resolution image can be obtained at a low cost without the need for increasing the pixel density of an imaging device.

Where only the imaging device 21A of the imaging devices 21A-21D shown in Fig. 36 is used, the imaging device 21A is moved to the individual positions shown in Fig. 37 by moving it by 1/2 of the length of a pixel in each of the directions X and Y in the plane that is perpendicular to incident light coming from a subject.

In the fifth exemplary embodiment, an operation that a subject 5 is shot after switching is made between the imaging devices 21-1 to 21-9 and the pixel information acquisition areas are shifted by 1/3 of the length of a pixel is repeated until they are moved by the length of a pixel, that is, the subject 5 is shot with a resolution corresponding to a subpixel that occupies 1/9 of a pixel. However, the distance by which the pixel information acquisition areas are shifted using the imaging devices 21-1 to 21-9 is not limited to 1/3 of the length of a pixel and the number of imaging devices used is not limited to none. The shift distance may even be different in the vertical direction and the horizontal direction. A similar procedure can be followed even in a case that an operation of shooting a subject 5 after shifting the pixel information acquisition areas by 1/X of the length of a pixel in the horizontal direction and by 1/Y of the length of a pixel in the vertical direction (X, Y: arbitrary natural number) is repeated until they are moved by the length of a pixel, that is, the subject 5 is shot with a resolution corresponding to a subpixel obtained by equally dividing a pixel into XY parts (XY: natural number).

In this case, plural imaging devices on which light shield films are formed in different manners in the vertical direction and the horizontal direction are used until each of horizontally arranged pixel information acquisition areas of one row that do not intersect vertically arranged pixel information acquisition areas of one column is put into a state that is immediately before a state that a region corresponding to one pixel is masked starting from a state that it is not masked at all. The plural imaging devices also used until each of the vertically arranged pixel information acquisition areas of one column that do not intersect the horizontally arranged pixel information acquisition areas of one row is put into a state that is immediately before a state that a region corresponding to one pixel is masked starting from a state that it is not masked at all.

As described above, the imaging apparatus 10 according to the fifth exemplary embodiment is equipped with the plural imaging devices 21 which are provided with the photodetecting elements A(m, n) which have the pixel information acquisition areas P(m, n) as the divisional photodetecting surfaces each having a prescribed area and produce output values corresponding to light quantities received by the divisional photodetecting surfaces, respectively, and which are selectively formed with the light shield films 26 each of which partially shields the associated photodetecting elements A(m, n) from incident light coming from a subject, where m is an arbitrary natural number of 1 to i and n is an arbitrary natural number of 1 to j. With this configuration, in the imaging apparatus 10 according to the fourth exemplary embodiment, an output value can be acquired from each photodetecting element A(m, n) in a state that its photodetecting surface P(m, n) is shielded from light partially. Therefore, in the imaging apparatus 10, an output value which corresponds to a fine region of each divisional photodetecting surface and is different from an output value produced without shielding of the divisional photodetecting surface because it reflects the degree of shielding.

The imaging apparatus 10 according to the fifth exemplary embodiment is equipped with the plural imaging devices 21 which are formed with the respective light shield films 26. The pixel information acquisition areas are partially shielded from light by the light shield film 26 differently depending on the imaging device 21. In other words, the plural imaging devices 21 are formed with the light shield films 26 having different light shield patterns so that different portions of the photodetecting elements A(m, n) are shielded from light. Therefore, in the imaging apparatus 10 according to the fourth exemplary embodiment, each pixel information acquisition area P(m, n) can be shielded from light partially in different light shield patterns by switching between the imaging devices 21. Output values produced in states that each pixel information acquisition area P(m, n) is shielded from light partially in different light shield patterns and an output value produced in a state that the pixel information acquisition area P(m, n) is not shielded from light can be acquired. Output values corresponding to even finer regions which reflect respective different light shield patterns can thus be acquired.

The imaging apparatus 10 according to the fifth exemplary embodiment is also equipped with the control section 4 (a calculating part) which calculates pixel information corresponding to a light quantity received by a region that is smaller than the photodetecting surface of a photodetecting element concerned based on the difference between the sum of pieces of pixel information that are acquired when pixel information acquisition areas P(m, n) are shielded from light in different patterns and an output value of the pixel information acquisition area concerned that is acquired when it is shielded from light in a particular light shield pattern or is not shielded at all and outputs the calculated pixel information, and the storage section 7 which stores the pixel information that is output from the control section 4 in such a manner that it is correlated with corresponding position information of a subject image. Therefore, the imaging apparatus 10 according to the fifth exemplary embodiment can calculate pixel information corresponding to a light quantity received by a region that is smaller than the photodetecting surface of a photodetecting element concerned based on the difference between the sum of pieces of pixel information that are acquired when pixel information acquisition areas P(m, n) are shielded from light in different patterns and an output value of the pixel information acquisition area concerned that is acquired when it is shielded from light in a particular light shield pattern or is not shielded at all, and store the calculated pixel information in such a manner that it is correlated with corresponding position information of a subject image. Therefore, in the imaging apparatus 10, pieces of pixel information corresponding to regions that are smaller than the photodetecting surface P(m, n) of each photodetecting element A(m, n) can be acquired as pieces of pixel information of a subject image corresponding to even finer regions.

Still further, the imaging apparatus 10 according to the fifth exemplary embodiment is equipped with the plural imaging devices 21 which are formed with the light shield films 26 having such different light shield patterns that the position of the photodetecting elements A(m, n) with respect to the light shield film 26 is varied in units of a distance that is shorter than the length of each photodetecting element A(m, n), and the driving section 3 for switching between the imaging devices 21. With this configuration, in the imaging apparatus 10 according to the fourth exemplary embodiment, since the position of the photodetecting elements A(m, n) with respect to the light shield film 26 can be varied with respect to the light shield plate 26 each time by a distance that is shorter than the length of each photodetecting elements A(m, n), pieces of pixel information of a subject image corresponding to even finer regions can be acquired based on output values that correspond to regions that are smaller than the photodetecting surface P(m, n) of each photodetecting element A(m, n) and are acquired as the photodetecting elements A(m, n) are moved each time by a distance that is shorter than the length of each photodetecting elements A(m, n).

As a result, the imaging apparatus 10 according to the fifth exemplary embodiment can generate pieces of pixel information of a subject image corresponding to even finer regions without the need for increasing the pixel density of an imaging device or connecting images, and hence can generate a high-resolution image at a low cost.

In the imaging apparatus 10 according to the fifth exemplary embodiment, the photodetecting elements A(m, n) have the divisional photodetecting surfaces P(m, n) as the pixel information acquisition areas each having a prescribed area and produce output values corresponding to light quantities received by the divisional photodetecting surfaces P(m, n), respectively. The imaging apparatus 10 performs the imaging method which includes step S103 of acquiring output values of the photodetecting elements A(m, n) in each of plural states in which different regions of each photodetecting element A(m, n) are shielded from incident light coming from a subject, step S104 of calculating subpixel values corresponding to light quantities received by regions smaller than the photodetecting surfaces P(m, n) of the photodetecting elements A(m, n) based on a difference between the output values of the photodetecting elements A(m, n) acquired in the plural states, and step S106 of storing the subpixel values calculated by step S104 in such a manner that they are correlated with pieces of position information of a subject image.

In the above imaging method, even finer pieces of pixel information of a subject image can be obtained based on a difference between output values corresponding to regions smaller than the photodetecting surfaces P(m, n) of the photodetecting elements A(m, n) while the masked region of each photodetecting element is changed. Therefore, a high-resolution image can be obtained at a low cost without the need for increasing the pixel density of an imaging device or connecting images.

In the imaging apparatus 10 according to the fifth exemplary embodiment, the photodetecting elements A(m, n) have the divisional photodetecting surfaces P(m, n) each having a prescribed area and produce output values corresponding to light quantities received by the divisional photodetecting surfaces P(m, n), respectively. For example, the imaging apparatus 10 performs the following imaging method. At step S103, the imaging apparatus 10 executes a substep of acquiring, from the photodetecting element A(1, 1), a first output value (e.g., $b^{(1,\,1)}$) that corresponds to a light quantity received by a first prescribed region which is part of the photodetecting surface P(1, 1) and a substep of acquiring a second output value (e.g., $a^{(1,\,1)}$) that corresponds to a light quantity received by a second prescribed region which is included in the first prescribed region. At step S104, the imaging apparatus 10 calculates the difference (e.g. $b^{(1,\,1)}$ - $a^{(1,\,1)}$) between the first output value and the second output value as a third output value (e.g., $B^{(1,\,1)}$) corresponding to a light quantity received by a region that is the first prescribed region excluding the second prescribed region.

Although the fifth exemplary embodiment is directed to the case that a subject 5 is shot with a resolution corresponding to a subpixel that occupies 1/9 of a pixel, the invention is not limited to such a case. Although in the fifth exemplary embodiment an operation that a subject 5 is shot after the pixel information acquisition areas are shifted by 1/3 of the length of a pixel in the horizontal direction or the vertical direction by switching between the imaging devices 21-1 to 21-9 is repeated until they are moved by the length of a pixel in the horizontal direction or the vertical direction is performed repeatedly, the invention is not limited to such a case.

For example, a similar procedure can be followed even in a case that an operation of shooting a subject 5 after switching between plural imaging devices 21 properly and shifting the pixel information acquisition areas by 1/X of the length of a pixel in the horizontal direction and or by 1/Y of the length of a pixel in the vertical direction (X, Y: arbitrary natural number) is repeated until the pixel information acquisition areas are moved by the length of a pixel in the horizontal direction or the vertical direction. In this case, the subject 5 can be shot with a resolution corresponding to a subpixel obtained by equally dividing a pixel into XY parts (XY: natural number).

That is, the driving section 3 switches between the plural imaging devices 21 properly and moves the selected imaging device 21 progressively to prescribed imaging positions in units of an arbitrary fraction of the length of a pixel until each of at least part of the pixel information acquisition areas P(m, n) (m, n: arbitrary natural number) is put into a state that is immediately before a state that a region corresponding to one pixel is masked starting from a state that it is not shielded from incident light coming from a subject 205 by the light shield film 26. Imaging is performed every time the imaging device 21 is moved to an imaging position by the driving section 3. The control section 4 calculates pieces of pixel information based on signal charges generated by the imaging device 21. The control section 4 stores the thus-calculated pieces of pixel information in the storage section 7 in such a manner that they are correlated with pieces of position information of a pixel image.

The control section 4 calculates pixel information of a region that is smaller than one pixel and corresponds to part of the subject image based on a difference between a signal charge generated by the imaging device 21 when it is located at each imaging position and signal charges generated by the imaging device 21 when it was located at other imaging positions previously. The control section 4 constitutes a pixel information calculating section.

A similar procedure can be followed even in a case that imaging is performed while the driving section 3 moves the imaging device 21 to prescribed imaging positions progressively in the vertical direction in units of 1/Y (Y: prescribed natural number) of the length of a pixel until each of horizontally arranged pixel information acquisition areas of one row is put into a state that is immediately before a state that a region corresponding to one pixel is masked starting from a state that it is not masked at all and moves the imaging device 21 to prescribed imaging positions progressively in the horizontal direction in units of 1/X (X: prescribed natural number) of the length of a pixel until each of vertically arranged pixel information acquisition areas of one column is put into a state that is immediately before a state that a region corresponding to one pixel is masked starting from a state that it is not masked at all. In this manner, the subject can be shot with a resolution corresponding to a subpixel obtained by equally dividing a pixel into XY parts (XY: natural number).

In such an imaging apparatus 10 according to the fifth exemplary embodiment, the resolution of an image taken or the number of pieces of pixel information constituting an image taken can be increased arbitrarily by changing the number of regions obtained by dividing each pixel using the light shield films 26.

Although the L-shaped light shield films 26-1, 26-2, 26-4, and 26-5 are employed in the fifth exemplary embodiment, light shield films having another shape may be used as long as they are suitable for shielding of at least two sidelines of each imaging device 21 from light.

As described above, the imaging apparatus 10 according to the fifth exemplary embodiment is equipped with the plural imaging device 21-1 to 21-9; the driving section 3 which moves the imaging device 21-1 to 21-9 in order one at a time so that the selected imaging device 21 is placed at an imaging position for shooting of a subject; the pixel information calculating section (control section 4) which calculates pieces of pixel information based on pieces of information that are acquired from the imaging devices 21-1 to 21-9 through imaging when they are placed at the imaging position by the driving section 3; and the pixel information storage section (storage section 7) which stores the pieces of pixel information calculated by the pixel information calculating section in such a manner that they are correlated with pieces of position information of a subject image.

Each of the imaging devices 21-1 to 21-9 has the pixel information acquisition areas P(m, n) arranged in the vertical direction and the horizontal direction, and each of the pixel information acquisition areas P(m, n) is configured so as to generate pixel information of one pixel by converting part of incident light coming from a subject. The imaging devices 21-1 to 21-9 include the imaging device that is not shielded from light and the imaging devices that are formed with the light shield films 26-1 to 26-8 having different patterns so that the imaging devices are shielded from light differently in units of an arbitrary fraction of a pixel until each of at least part of vertically arranged pixel information acquisition areas or horizontally arrange pixel information acquisition areas is put into a state that is immediately before a state that a region corresponding to one pixel is masked starting from a state that a region that is an arbitrary fraction of a pixel is masked. The pixel information calculating section calculates pieces of pixel information of the subject image in units of a region that is smaller than one pixel based on pieces of information acquired from the imaging devices 21-1 to 21-9 through imaging when they are placed at the imaging position by the driving section 3. The pixel information storage section stores the pieces of pixel information calculated by the pixel information calculating section in such a manner that they are correlated with pieces of position information of the subject image.

For example, in the fifth exemplary embodiment, the imaging devices are formed with the light shield films having different patterns so that the imaging devices are shielded from light differently until each of horizontally arranged pixel information acquisition areas of at least one row is put into a state that is immediately before a state that a region corresponding to one pixel is masked starting from a state that it is not masked at all; and until each of the vertically arranged pixel information acquisition areas of at least one column is put into a state that is immediately before a state that a region corresponding to one pixel is masked starting from a state that it is not masked at all.

The imaging devices are formed with the light shield films having different patterns until small regions (in the fifth exemplary embodiment, small regions obtained by equally dividing the top-left end pixel information acquisition area P(1, 1) into nine parts; separated by broken lines in part (1) of Fig. 39) that are obtained by equally dividing the pixel information acquisition area (top-left end pixel information acquisition area P(1, 1)) where the horizontally arranged pixel information acquisition areas of one row and the pixel information acquisition areas of one column intersect into XY parts (X, Y, XY: prescribed natural number) and that are arranged in a mesh-like manner in the vertical direction and the horizontal direction are masked progressively to establish a state that they are masked except one small region starting from a state that they are not masked at all.

The pixel information calculating section calculates pieces of pixel information of part of a subject image in units of a region obtained by equally dividing one pixel into XY parts based on pieces of information acquired from the imaging devices through imaging when the imaging devices are placed at the imaging position by the driving section 3.

Therefore, even finer pieces of pixel information of a subject image can be acquired without the need for increasing the pixel density of an imaging device or connecting images. That is, an image having a large number of pixels can be obtained using an image sensor having a small number of pixels. As such, the imaging apparatus 10 according to the fifth exemplary embodiment can produce a high-resolution image at a low cost.

In the imaging apparatus 10 according to the fifth exemplary embodiment, what needs to be performed is only switching between plural imaging devices. The process is thus much simper than in the conventional method in which a subject to be shot is divided into plural portions and the subject is shot repeatedly for its respective portions while an imaging device is moved. Therefore, in the fifth exemplary embodiment, a high-resolution image can be produced while the total shooting time can be shortened by virtue of shortening of time required for movement of the photodetecting elements.

Each of the plural imaging devices 21-1 to 21-9 has the pixel information acquisition areas P(1, 1)-P(i, j) each of which generates signal charge of one pixel by converting part of incident light coming from a subject. The imaging devices 21-1 to 21-9 include an imaging device that is not shielded from light at all and one or more imaging devices that are formed with light shield films having different patterns so that the imaging devices are shielded from light differently in units of an arbitrary fraction of a pixel until immediately before a region, corresponding to one pixel, of each of at least part of pixel information acquisition areas arranged vertically or horizontally, is masked.

The control section 4 can calculate pieces of pixel information corresponding to part of a subject image in units of a region that is smaller than one pixel based on signal charges that are generated by the imaging devices 21-1 to 21-9 by imaging when the imaging devices 21-1 to 21-9 are placed at the imaging position by the driving section 3. And the storage section 8 can store the pieces of pixel information calculated by control section 4 in such a manner that they are correlated with pieces of position information of the subject image.

The plural imaging devices are formed with the light shield films having different patterns so that the imaging devices are shielded from light differently in units of a region that measures 1/X of the length of a pixel in the horizontal direction and 1/Y of the length of one pixel in the vertical direction (X, Y: prescribed natural number) until each of horizontally arranged pixel information acquisition areas of at least one row is put into a state that is immediately before a state that a region corresponding to one pixel is masked starting from a state that a region that measures 1/XY (XY: natural number) of a pixel is masked and until each of the vertically arranged pixel information acquisition areas of at least one column is put into a state that is immediately before a state that a region corresponding to one pixel is masked starting from a state that a region that measures 1/XY of a pixel is masked.

The control section 4 performs imaging every time each of the thus-configured imaging devices is placed at the imaging position by the driving section 3. The control section 4 places each of the imaging devices at the imaging position while switching between them, and can calculate pieces of pixel information corresponding to part of a subject image in units of 1/XY (XY: natural number) of one pixel based on signal charges generated by the imaging devices.

As described above, pieces of pixel information can be acquired in units of a subpixel by switching between the imaging devices which are formed with light shield films.

Although the fifth exemplary embodiment is directed to the case that a subject 5 is shot with a resolution corresponding to a subpixel obtained by equally dividing a pixel into four or nine parts, the invention is not limited to such a case.

As seen from the relationships between the imaging devices 21A-21D and the light shield films 26A-26C shown in Fig. 36, the light shield films 26A-26C may be formed so as to shield, from light, parts of the pixel information acquisition areas of the imaging devices 21A-21D, for example, vertically arranged pixel information acquisition areas of at least one column and horizontally arranged pixel information acquisition areas of at least one row of the imaging devices 21A-21D.

As seen from the relationships between the imaging devices 21-1 to 21-9 and the light shield films 26-1 to 26-8 shown in Fig. 38, the light shield films 26-1 to 26-8 may be formed so as to shield, from light, vertically arranged pixel information acquisition areas of at least one column and horizontally arranged pixel information acquisition areas of at least one row of the imaging devices 21-1 to 21-9. The shielded vertically arranged pixel information acquisition areas or the shielded horizontally arranged pixel information acquisition areas need not be such as to be arranged straightly as shown in Fig. 36 or 38.

That is, the imaging devices are shielded in units of a region that measures 1/X of the length of a pixel in the horizontal direction and 1/Y of the length of one pixel in the vertical direction (X, Y: prescribed natural number) until a state that a region corresponding to one pixel is masked is established starting from a state that a region that measures 1/XY (XY: natural number) of a pixel is masked and until a state that a region corresponding to one pixel is masked is established starting from a state that a region that measures 1/XY of one pixel is masked.

The control section 4 performs imaging every time each of the thus-configured imaging devices is placed at the imaging position by the driving section 3. The control section 4 places each of the imaging devices at the imaging position while switching between them, and can calculate pieces of pixel information corresponding to part of a subject image in units of 1/XY (XY: natural number) of a pixel based on signal charges generated by the imaging devices. Pieces of pixel information can be acquired in units of an arbitrary fraction of a pixel without increasing the number of pixels of an imaging device. That is, an image having a large number of pixels can be produced using an image sensor having a small number of pixels. Therefore, a high-resolution image can be produced at a low cost.

According to the embodiments, an imaging apparatus may include a photodetecting element A(m, n) including a photodetecting surface P(m, n) having a prescribed area and adapted to generate an output value corresponding to a light quantity received by the photodetecting surface; and a light shield part 206, 106A-106D, 126, 127, 136A-136D, 26A-26C, 26-1 to 26-8 adapted to partially shield the photodetecting element from incident light coming from a subject.

The imaging apparatus may further include an imaging part 201, 101, 121, 122, 131A-131D, 21, 21A-21D, 21-1 to 21-9 adapted to generate output values from the photodetecting element in a plurality of states in which different portions of the photodetecting element are shielded by the light shield part.

The imaging apparatus may further include: a calculating part 204, 104, 4 adapted to calculate a pixel information corresponding to a light quantity received by a region that is smaller than the photodetecting surface of the photodetecting element based on said output values generated by the imaging part in said plurality of states in which the different portions of the photodetecting element are shielded, and adapted to output the calculated pixel information; and a storage section 207, 107, 7 adapted to store the pixel information that is output from the calculating part in such a manner that the pixel information is correlated with a position information of a subject image.

The imaging apparatus may further include an imaging device driving section 203, 103, 123, 133, 3 adapted to change the position of the photodetecting element with respect to the light shield part in units of a distance that is shorter than a length of the photodetecting element.

Moreover, according to the embodiments, an imaging apparatus may include an imaging device 101; a plurality of light shield plates 106A-106D adapted to partially shield the imaging device from light coming from a subject toward the imaging device; a driving section 103 adapted to place the light shield plates at a light interrupting position one by one; a pixel information calculating section 104 adapted to calculate respective pixel information of a subject image based on respective output values from the imaging device that are generated through imaging operations carried out in every time where one of the light shield plates is placed on the light interrupting position; and a pixel information storage section 107 adapted to store the respective pixel information calculated by the pixel information calculating section. The imaging device may include a plurality of pixel information acquisition areas P(1,1)-P(i, j) which are arranged in a vertical direction and a horizontal direction. Each of the pixel information acquisition areas may be adapted to generate an output value of one pixel by converting light coming from the subject and shining thereon. Each of the light shield plates may be configured so as to shield each of the pixel information acquisition areas from light in units of a region that is smaller than a single pixel. The light shield plates may be configured so as to shield, from light, different portions of each of the pixel information acquisition areas. The pixel information calculating section may be adapted to calculate the respective pixel information of the subject image in the units of the region that is smaller than the single pixel based on respective output values from the imaging device that are generated through the imaging operations carried out in every time where one of the light shield plates is positioned on the light interrupting position. The pixel information storage section may be adapted to store the pixel information calculated by the pixel information calculating section in such a manner that they are correlated with respective position information of the subject image.

Moreover, according to the embodiments, an imaging apparatus may include: an imaging device 121, 122; a light shield plate 126, 127; a driving section 123 adapted to move the light shield plate so that the light shield plate shields prescribed portions of the imaging device from light coming from a subject toward the imaging device; a pixel information calculating section 104 adapted to calculate respective pixel information of the subject image based on respective output values from the imaging device that are generated through imaging operations carried out in every time where the light shield plate is moved by the driving section; and a pixel information storage section 107 adapted to store the pixel information calculated by the pixel information calculating section. The imaging device may include a plurality of pixel information acquisition areas P(1,1)-P(i, j) which are arranged in a vertical direction and a horizontal direction. Each of the pixel information acquisition areas may be adapted to generate an output value of one pixel by converting light coming from the subject and shining thereon. The light shield plate may be configured so as to shield each of the pixel information acquisition areas from light in units of a region that is smaller than a single pixel. The driving section may be adapted to move the light shield plate to a plurality of positions where the light shield plate shields, from light, different portions of each of the pixel information acquisition areas. The pixel information calculating section may be adapted to calculate the pixel information of the subject image in units of the region that is smaller than the single pixel based on the respective output values of the imaging device that are generated through the imaging operations carried out in every time where the light shield plate is positioned on one of the plurality of positions. The pixel information storage section may be adapted to store the pixel information calculated by the pixel information calculating section in such a manner that they are correlated with respective position information of the subject image.

Moreover, according to the embodiments, an imaging apparatus may include: a plurality of imaging devices 131A-131D; a driving section 133 adapted to place the imaging devices at an imaging position one by one; a pixel information calculating section 104 adapted to calculate respective pixel information of a subject image based on respective output values from the imaging devices placed on the imaging position by the driving section; and a pixel information storage section 107 adapted to store the pixel information calculated by the pixel information calculating section. Each of the imaging devices may include a plurality of pixel information acquisition areas P(1,1)-P(i, j) which are arranged in a vertical direction and a horizontal direction, wherein each of the pixel information acquisition areas is adapted to generate an output value of one pixel by converting light coming from a subject and shining thereon. The imaging devices may include respective light shield films 136A-136D. Each of the light shield films may be adapted to shield, from light, in units of a region that is smaller than a single pixel. Portions of each of the pixel information acquisition areas shielded by the light shield films may be different from each other. The pixel information calculating section may be adapted to calculates the pixel information of the subject image in units of the region that is smaller than the single pixel based on respective output values from the imaging devices that are generated through imaging operations carried out in every time wherein one of the imaging devices is positioned on the imaging position. The pixel information storage section may be adapted to store the pixel information calculated by the pixel information calculating section in such a manner that they are correlated with position information of the subject image.

Moreover, according to the embodiments, an imaging apparatus may include: an imaging device 201; a light shield plate 206; a driving section 203 adapted to move the imaging device relative to the light shield plate to a plurality of prescribed imaging positions where the imaging device is partially shielded by the light shield plate from light coming from a subject toward the imaging device; and a pixel information calculating section 204 adapted to calculate respective pixel information of a subject image based on output values from the imaging device that are generated through imaging operations carried out in every time where the imaging device is positioned on the prescribed image positions. The imaging device may include a plurality of pixel information acquisition areas P(1,1)-P(i, j) which are arranged in a vertical direction and a horizontal direction. Each of the pixel information acquisition areas may be adapted to generate an output value of one pixel by converting light coming from the subject and shining thereon. The light shield plate may be configured so as to shield each of the pixel information acquisition areas from light in units of a region that is smaller than a pixel. The driving section may be adapted to move the imaging device stepwise in units of an arbitrary fraction of a single pixel until each of vertically arranged pixel information acquisition areas of at least one column or horizontally arranged pixel information acquisition areas of at least one row among the plurality of pixel information acquisition areas is put into a state that is immediately before a state that a region corresponding to one pixel is masked by the light shield plate starting from a state that it is not masked at all by the light shield plate. The pixel information calculating section may be adapted to calculate the respective pixel information of the subject image in units of a region that is smaller than a single pixel based on output values of the imaging device that are generated through imaging operations carried out in every time where the imaging device is positioned on the prescribed imaging positions.

In the imaging apparatus, the driving section may be adapted to move the imaging device relative to the light shield plate: until each of small regions obtained by equally dividing, in the horizontal direction and the vertical direction, into XY parts, a pixel information acquisition area where the horizontally arranged pixel information acquisition areas of one row and the pixel information acquisition areas of one column intersect is put into an exposed state and a masked state, X and Y being natural numbers; in the vertical direction, until each of the horizontally arranged pixel information acquisition areas of one row that do not intersect the vertically arranged pixel information acquisition areas of one column is put into a state that is immediately before a state that a region corresponding to one pixel is masked starting from a state that it is not masked at all; and in the horizontal direction, until each of the vertically arranged pixel information acquisition areas of one column that do not intersect the horizontally arranged pixel information acquisition areas of one row is put into a state that is immediately before a state that a region corresponding to one pixel is masked starting from a state that it is not masked at all. The pixel information calculating section may be adapted to calculate pixel information of the subject image in units of a region obtained by equally dividing one pixel into XY parts based on output values from the imaging device that are generated through the imaging operations carried out in every time where the imaging device is located at the prescribed imaging positions.

Moreover, according to the embodiments, an imaging apparatus may include: a plurality of imaging devices 21, 21A-21D, 21-1 to 21-9; a driving section 3 adapted to place the imaging devices at an imaging position one by one;

a pixel information calculating section 4 adapted to calculate respective pixel information of a subject image based on output values of the imaging devices that are generated through imaging operations carried out in every time where respective ones of the imaging devices are located at the image position; and a pixel information storage section 7 adapted to store the pixel information calculated by the pixel information calculating section. Each of the imaging devices may include a plurality of pixel information acquisition areas P(1,1)-P(i, j) which are arranged in a vertical direction and a horizontal direction. Each of the pixel information acquisition areas may generate an output value of one pixel by converting light coming from the subject and shining thereon. The imaging devices may include an imaging device that is not formed with a light shield film and a plurality of imaging devices that are formed with respective light shield films 26A-26C, 26-1 to 26-8. Between the imaging devices formed with the light shield films, parts where the light shield films are formed may be different to each other, so that the imaging devices are differently shielded in units of an arbitrary fraction of a single pixel until at least one of the pixel information acquisition areas is put into a state that is immediately before a state that a region corresponding to one pixel is masked starting from a state that a region that is the arbitrary fraction of the single pixel is masked. The pixel information calculating section may be adapted to calculate the pixel information of the subject image in units of the region that is smaller than the single pixel based on the output values of the imaging devices that are generated through the imaging operations carried out in every time where the imaging devices are positioned on the prescribed imaging positions. The pixel information storage section may be adapted to store the pixel information calculated by the pixel information calculating section in such a manner that they are correlated with position information of the subject image.

In the imaging apparatus, the driving sections may be adapted to move the imaging devices, such that, after placing each of the imaging devices at the imaging position, the driving section moves the thus-placed imaging device to prescribed positions in units of an arbitrary fraction of the single pixel in a plane that is perpendicular to light coming from the subject.

In the imaging apparatus, the plurality of imaging devices may be formed with the respective light shield films in the different areas so as to be differently shielded in units of an arbitrary fraction of the single pixel: in the vertical direction, until each of horizontally arranged pixel information acquisition areas of at least one row is put into a state that is immediately before a state that a region corresponding to one pixel is masked starting from a state that it is not masked at all; in the horizontal direction, until each of vertically arranged pixel information acquisition areas of at least one column is put into a state that is immediately before a state that a region corresponding to one pixel is masked starting from a state that it is not masked at all; and until mesh-like small regions obtained by equally dividing, in the horizontal direction and the vertical direction, into XY parts, a pixel information acquisition area where the horizontally arranged pixel information acquisition areas of one row and the pixel information acquisition areas of one column intersect are masked progressively to establish a state that they are masked except one small region starting from a state that they are not masked at all. The pixel information calculating section may be adapted to calculate the pixel information of the subject image in units of a region obtained by equally dividing one pixel into XY parts based on the output values of the imaging devices that are generated through the imaging operations carried out in every time where the imaging devices are located at the imaging position.

Furthermore, according to the embodiments, an imaging method may include: a step of partially shielding, from incident light coming from a subject, a photodetecting element A(m, n) including a photodetecting surface P(m, n) having a prescribed area and adapted to generate output values corresponding to light quantities received by the photodetecting surface, and acquiring output values from the photodetecting element in each of a plurality of states in which different portions of the photodetecting element are shielded; a step of calculating a pixel information corresponding to a light quantity received by a region that is smaller than the photodetecting surface of the photodetecting element based on the output values acquired in the plurality of states; and a step of storing the calculated pixel information in such a manner that the pixel information is correlated with a position information of a subject image.

Furthermore, according to the embodiments, an imaging method may include: a step of acquiring, from a photodetecting element A(m, n) which has a photodetecting surface P(m, n) having a prescribed area and is adapted to generate an output value corresponding to a light quantity received by the photodetecting surface, a first output value that corresponds to a light quantity received by a first prescribed region which is a part of the photodetecting surface; a step of acquiring a second output value that corresponds to a light quantity received by a second prescribed region which is included in the first prescribed region; and a step of calculating a third output value corresponding to a light quantity received by a region that is the first prescribed region excluding the second prescribed region based on a difference between the first output value and the second output value.

Furthermore, according to the embodiments, an imaging method for imaging a subject using an imaging device 101, 121, 122, 131A-131D may include: a step of partially shielding the pixel information acquisition areas in units of a region that is smaller than a single pixel from incident light coming from the subject; a step of changing shielded portions of the pixel information acquisition areas; a step of calculating respective pixel information of a subject image based on respective output values of the imaging device that are generated through imaging operations carried out in every time where the shielded portions of the pixel information acquisition areas are changed; and a step of storing the calculated pixel information in such a manner that they are correlated with position information of the subject image.

Furthermore, according to the embodiments, an imaging method for imaging a subject using an imaging apparatus having an imaging device 201 and a light shield plate 206 may include: a driving step of moving the imaging device stepwise in units of an arbitrary fraction of a single pixel until each of vertically arranged pixel information acquisition areas of at least one column or horizontally arranged pixel information acquisition areas of at least one row among the plural pixel information acquisition areas is put into a state that is immediately before a state that a region corresponding to one pixel is shielded from light coming from the subject toward the imaging device by the light shield plate starting from a state that it is not masked at all from the incident light by the light shield plate; a pixel information calculating step of calculating pixel information of a subject image in units of a region that is smaller than a single pixel based on differences between output values from the imaging device that are generated through imaging operations carried out in every time where the imaging device is moved by the driving step; and a pixel information storing step of storing the pixel information calculated by the pixel information calculating step in such a manner that they are correlated with position information of the subject image.

Furthermore, according to the embodiments, an imaging method for imaging a subject using a plurality of imaging devices 21A-21D, 21-1 to 21-9 may include: a moving step of placing the imaging devices at an imaging position one by one; a pixel information calculating step of calculating pixel information of a subject image in units of a region that is smaller than a single pixel based on output values of the imaging devices that are generated through imaging operations carried out in every time where the imaging devices are placed at the image position by the moving step; and a pixel information storing step of storing the pixel information calculated by the pixel information calculating step in such a manner that they are correlated with position information of the subject image.

Moreover, according to the embodiments, an imaging program for a computer which controls an imaging device 101, 121, 122, 131A-131D may cause the computer to execute the steps of: partially shielding the pixel information acquisition areas in units of a region that is smaller than a single pixel from incident light coming from the subject; changing shielded portions of the pixel information acquisition areas; calculating respective pixel information of a subject image based on respective output values of the imaging device that are generated through imaging operations carried out in every time where the shielded portions of the pixel information acquisition areas are changed; and storing the calculated pixel information in such a manner that they are correlated with position information of the subject image.

Moreover, according to the embodiments, an imaging program for a computer which controls an imaging device 201 may cause the computer to execute: a driving step of moving the imaging device stepwise in units of an arbitrary fraction of a single pixel until each of vertically arranged pixel information acquisition areas of at least one column or horizontally arranged pixel information acquisition areas of at least one row among the plural pixel information acquisition areas is put into a state that is immediately before a state that a region corresponding to one pixel is shielded from light coming from the subject toward the imaging device by the light shield plate starting from a state that it is not masked at all from the incident light by the light shield plate; a pixel information calculating step of calculating pixel information of a subject image in units of a region that is smaller than a single pixel based on differences between output values from the imaging device that are generated through imaging operations carried out in every time where the imaging device is moved by the driving step; and a pixel information storing step of storing the pixel information calculated by the pixel information calculating step in such a manner that they are correlated with position information of the subject image.

In addition, according to the embodiments, an imaging program for a computer which controls a plurality of imaging devices 21, 21A-21D, 21-1 to 21-9, may cause the computer to execute: a moving step of placing the imaging devices at an imaging position one by one; a pixel information calculating step of calculating pixel information of a subject image in units of a region that is smaller than a single pixel based on output values of the imaging devices that are generated through imaging operations carried out in every time where the imaging devices are placed at the image position by the moving step; and a pixel information storing step of storing the pixel information calculated by the pixel information calculating step in such a manner that they are correlated with position information of the subject image.

While description has been made in connection with specific exemplary embodiments and modifications thereof, it will be obvious to those skilled in the art that various changes may be made therein without departing from the present invention. It is aimed, therefore, to cover in the appended claims all such changes falling within the true spirit and scope of the present invention.

The invention can be applied to not only apparatus for measuring the shape of a piece of work but also general electronic apparatus having an imaging device. Each of the above-described processes can be executed by hardware and also by software.

Where each of the above-described processes is executed by software, a program of the software is installed in a computer or the like from a network or a recording medium. The computer may be one that is incorporated in dedicated hardware, and may also be one capable of performing various functions when various programs are installed therein such as a general-purpose personal computer.

Steps of a program recorded in a recording medium that are described in this specification may naturally be executed in time-series order. However, they need not always be executed in time-series order, that is, they may be executed parallel or individually.

[Description of Reference Numerals and Signs]

21, 21A-21D, 21-1 to 21-9: Imaging devices
2: Imaging unit
3: Driving section
4: Control section (pixel information calculating section)
5: Subject
26, 26A-26D, 26-1 to 26-8: Light shield films
7: Storage section (pixel information storage section)
8: Display unit
10: Imaging apparatus
101, 121, 122, 131A, 131B, 131C, 131D: Imaging devices
102, 132: Imaging unit
103, 133: Driving section
104: Control section (pixel information calculating section)
105: Subject
106A, 106B, 106C, 106D, 126: Light shield plates
107: Storage section (pixel information storage section)
108: Display unit
110: Imaging apparatus
201: Imaging device
202: Imaging unit
203: Driving section
204: Control section (pixel information calculating section)
205: Subject
206: Light shield plate
207: Storage section (pixel information storage section)
208: Display unit
210: Imaging apparatus

**Claims**

1. An imaging apparatus comprising:

a photodetecting element (A(m, n)) including a photodetecting surface (P(m, n)) having a prescribed area and adapted to generate an output value corresponding to a light quantity received by the photodetecting surface; and
a light shield part (206, 106A-106D, 126, 127, 136A-136D, 26A-26C, 26-1 to 26-8) adapted to partially shield the photodetecting element from incident light coming from a subject.

2. The imaging apparatus according to claim 1, further comprising:

an imaging part (201, 101, 121, 122, 131A-131D, 21, 21A-21D, 21-1 to 21-9) adapted to generate output values from the photodetecting element in a plurality of states in which different portions of the photodetecting element are shielded by the light shield part.

3. The imaging apparatus according to claim 2, further comprising:

a calculating part (204, 104, 4) adapted to calculate a pixel information corresponding to a light quantity received by a region that is smaller than the photodetecting surface of the photodetecting element based on said output values generated by the imaging part in said plurality of states in which the different portions of the photodetecting element are shielded, and adapted to output the calculated pixel information; and
a storage section (207, 107, 7) adapted to store the pixel information that is output from the calculating part in such a manner that the pixel information is correlated with a position information of a subject image.

4. The imaging apparatus according to any one of claims 1 to 3, further comprising:

an imaging device driving section (203, 103, 123, 133, 3) adapted to change the position of the photodetecting element with respect to the light shield part in units of a distance that is shorter than a length of the photodetecting element.

5. An imaging apparatus comprising:

an imaging device (101);
a plurality of light shield plates (106A-106D) adapted to partially shield the imaging device from light coming from a subject toward the imaging device;
a driving section (103) adapted to place the light shield plates at a light interrupting position one by one;
a pixel information calculating section (104) adapted to calculate respective pixel information of a subject image based on respective output values from the imaging device that are generated through imaging operations carried out in every time where one of the light shield plates is placed on the light interrupting position; and
a pixel information storage section (107) adapted to store the respective pixel information calculated by the pixel information calculating section,
wherein the imaging device has a plurality of pixel information acquisition areas (P(1,1)-P(i, j)) which are arranged in a vertical direction and a horizontal direction,
wherein each of the pixel information acquisition areas is adapted to generate an output value of one pixel by converting light coming from the subject and shining thereon,
wherein each of the light shield plates is configured so as to shield each of the pixel information acquisition areas from light in units of a region that is smaller than a single pixel,
wherein the light shield plates are configured so as to shield, from light, different portions of each of the pixel information acquisition areas,
wherein the pixel information calculating section is adapted to calculate the respective pixel information of the subject image in the units of the region that is smaller than the single pixel based on respective output values from the imaging device that are generated through the imaging operations carried out in every time where one of the light shield plates is positioned on the light interrupting position, and
wherein the pixel information storage section is adapted to store the pixel information calculated by the pixel information calculating section in such a manner that they are correlated with respective position information of the subject image.

6. An imaging apparatus comprising:

an imaging device (121, 122);
a light shield plate (126, 127);
a driving section (123) adapted to move the light shield plate so that the light shield plate shields prescribed portions of the imaging device from light coming from a subject toward the imaging device;
a pixel information calculating section (104) adapted to calculate respective pixel information of the subject image based on respective output values from the imaging device that are generated through imaging operations carried out in every time where the light shield plate is moved by the driving section; and
a pixel information storage section (107) adapted to store the pixel information calculated by the pixel information calculating section,
wherein the imaging device includes a plurality of pixel information acquisition areas (P(1,1)-P(i, j)) which are arranged in a vertical direction and a horizontal direction,
wherein each of the pixel information acquisition areas is adapted to generate an output value of one pixel by converting light coming from the subject and shining thereon,
wherein the light shield plate is configured so as to shield each of the pixel information acquisition areas from light in units of a region that is smaller than a single pixel;
wherein the driving section is adapted to move the light shield plate to a plurality of positions where the light shield plate shields, from light, different portions of each of the pixel information acquisition areas,
wherein the pixel information calculating section is adapted to calculate the pixel information of the subject image in units of the region that is smaller than the single pixel based on the respective output values of the imaging device that are generated through the imaging operations carried out in every time where the light shield plate is positioned on one of the plurality of positions, and
wherein the pixel information storage section is adapted to store the pixel information calculated by the pixel information calculating section in such a manner that they are correlated with respective position information of the subject image.

7. An imaging apparatus comprising:

a plurality of imaging devices (131A-131D);
a driving section (133) adapted to place the imaging devices at an imaging position one by one;
a pixel information calculating section (104) adapted to calculate respective pixel information of a subject image based on respective output values from the imaging devices placed on the imaging position by the driving section; and
a pixel information storage section (107) adapted to store the pixel information calculated by the pixel information calculating section,
wherein each of the imaging devices includes a plurality of pixel information acquisition areas (P(1,1)-P(i, j)) which are arranged in a vertical direction and a horizontal direction, wherein each of the pixel information acquisition areas is adapted to generate an output value of one pixel by converting light coming from a subject and shining thereon,
wherein the imaging devices are formed with respective light shield films (136A-136D),
wherein each of the light shield films is adapted to shield, from light, in units of a region that is smaller than a single pixel,
wherein portions of each of the pixel information acquisition areas shielded by the light shield films are different from each other,
wherein the pixel information calculating section is adapted to calculates the pixel information of the subject image in units of the region that is smaller than the single pixel based on respective output values from the imaging devices that are generated through imaging operations carried out in every time wherein one of the imaging devices is positioned on the imaging position, and
wherein the pixel information storage section is adapted to store the pixel information calculated by the pixel information calculating section in such a manner that they are correlated with position information of the subject image.

8. An imaging apparatus comprising:

an imaging device (201);
a light shield plate (206);
a driving section (203) adapted to move the imaging device relative to the light shield plate to a plurality of prescribed imaging positions where the imaging device is partially shielded by the light shield plate from light coming from a subject toward the imaging device; and
a pixel information calculating section (204) adapted to calculate respective pixel information of a subject image based on output values from the imaging device that are generated through imaging operations carried out in every time where the imaging device is positioned on the prescribed image positions;
wherein the imaging device includes a plurality of pixel information acquisition areas (P(1,1)-P(i, j)) which are arranged in a vertical direction and a horizontal direction,
wherein each of the pixel information acquisition areas is adapted to generate an output value of one pixel by converting light coming from the subject and shining thereon,
wherein the light shield plate is configured so as to shield each of the pixel information acquisition areas from light in units of a region that is smaller than a pixel,
wherein the driving section is adapted to move the imaging device stepwise in units of an arbitrary fraction of a single pixel until each of vertically arranged pixel information acquisition areas of at least one column or horizontally arranged pixel information acquisition areas of at least one row among the plurality of pixel information acquisition areas is put into a state that is immediately before a state that a region corresponding to one pixel is masked by the light shield plate starting from a state that it is not masked at all by the light shield plate, and
wherein the pixel information calculating section is adapted to calculate the respective pixel information of the subject image in units of a region that is smaller than a single pixel based on output values of the imaging device that are generated through imaging operations carried out in every time where the imaging device is positioned on the prescribed imaging positions.

9. The imaging apparatus according to claim 8, wherein the driving section is adapted to move the imaging device relative to the light shield plate:

until each of small regions obtained by equally dividing, in the horizontal direction and the vertical direction, into XY parts, a pixel information acquisition area where the horizontally arranged pixel information acquisition areas of one row and the pixel information acquisition areas of one column intersect is put into an exposed state and a masked state, X and Y being natural numbers;

in the vertical direction, until each of the horizontally arranged pixel information acquisition areas of one row that do not intersect the vertically arranged pixel information acquisition areas of one column is put into a state that is immediately before a state that a region corresponding to one pixel is masked starting from a state that it is not masked at all; and

in the horizontal direction, until each of the vertically arranged pixel information acquisition areas of one column that do not intersect the horizontally arranged pixel information acquisition areas of one row is put into a state that is immediately before a state that a region corresponding to one pixel is masked starting from a state that it is not masked at all, and

wherein the pixel information calculating section is adapted to calculate pixel information of the subject image in units of a region obtained by equally dividing one pixel into XY parts based on output values from the imaging device that are generated through the imaging operations carried out in every time where the imaging device is located at the prescribed imaging positions.

10. An imaging apparatus comprising:

a plurality of imaging devices (21, 21A-21D, 21-1 to 21-9);

a driving section (3) adapted to place the imaging devices at an imaging position one by one;

a pixel information calculating section (4) adapted to calculate respective pixel information of a subject image based on output values of the imaging devices that are generated through imaging operations carried out in every time where respective ones of the imaging devices are located at the image position; and

a pixel information storage section (7) adapted to store the pixel information calculated by the pixel information calculating section,

wherein each of the imaging devices has a plurality of pixel information acquisition areas (P(1,1)-P(i, j)) which are arranged in a vertical direction and a horizontal direction,

wherein each of the pixel information acquisition areas generates an output value of one pixel by converting light coming from the subject and shining thereon,

wherein the imaging devices include an imaging device that is not formed with a light shield film and a plurality of imaging devices that are formed with respective light shield films (26A-26C, 26-1 to 26-8),

wherein, between the imaging devices formed with the light shield films, parts where the light shield films are formed are different to each other, so that the imaging devices are differently shielded in units of an arbitrary fraction of a single pixel until at least one of the pixel information acquisition areas is put into a state that is immediately before a state that a region corresponding to one pixel is masked starting from a state that a region that is the arbitrary fraction of the single pixel is masked,

wherein the pixel information calculating section is adapted to calculate the pixel information of the subject image in units of the region that is smaller than the single pixel based on the output values of the imaging devices that are generated through the imaging operations carried out in every time where the imaging devices are positioned on the prescribed imaging positions, and

wherein the pixel information storage section is adapted to store the pixel information calculated by the pixel information calculating section in such a manner that they are correlated with position information of the subject image.

11. The imaging apparatus according to claim 10, wherein the driving sections are adapted to move the imaging devices, such that, after placing each of the imaging devices at the imaging position, the driving section moves the thus-placed imaging device to prescribed positions in units of an arbitrary fraction of the single pixel in a plane that is perpendicular to light coming from the subject.

12. The imaging apparatus according to claim 10, wherein the plurality of imaging devices are formed with the respective light shield films in the different areas so as to be differently shielded in units of an arbitrary fraction of the single pixel:

in the vertical direction, until each of horizontally arranged pixel information acquisition areas of at least one row is put into a state that is immediately before a state that a region corresponding to one pixel is masked starting from a state that it is not masked at all;

in the horizontal direction, until each of vertically arranged pixel information acquisition areas of at least one column is put into a state that is immediately before a state that a region corresponding to one pixel is masked starting from a state that it is not masked at all; and

until mesh-like small regions obtained by equally dividing, in the horizontal direction and the vertical direction, into XY parts, a pixel information acquisition area where the horizontally arranged pixel information acquisition areas of one row and the pixel information acquisition areas of one column intersect are masked progressively to establish a state that they are masked except one small region starting from a state that they are not masked at all, and

wherein the pixel information calculating section is adapted to calculate the pixel information of the subject image in units of a region obtained by equally dividing one pixel into XY parts based on the output values of the imaging devices that are generated through the imaging operations carried out in every time where the imaging devices are located at the imaging position.

**13.** An imaging method comprising:

partially shielding, from incident light coming from a subject, a photodetecting element (A(m, n)) including a photodetecting surface (P(m, n)) having a prescribed area and adapted to generate output values corresponding to light quantities received by the photodetecting surface, and acquiring output values from the photodetecting element in each of a plurality of states in which different portions of the photodetecting element are shielded; calculating a pixel information corresponding to a light quantity received by a region that is smaller than the photodetecting surface of the photodetecting element based on the output values acquired in the plurality of states; and storing the calculated pixel information in such a manner that the pixel information is correlated with a position information of a subject image.

**14.** An imaging method comprising:

acquiring, from a photodetecting element (A(m, n)) which has a photodetecting surface P(m, n) having a prescribed area and is adapted to generate an output value corresponding to a light quantity received by the photodetecting surface, a first output value that corresponds to a light quantity received by a first prescribed region which is a part of the photodetecting surface; acquiring a second output value that corresponds to a light quantity received by a second prescribed region which is included in the first prescribed region; and calculating a third output value corresponding to a light quantity received by a region that is the first prescribed region excluding the second prescribed region based on a difference between the first output value and the second output value.

**15.** An imaging method for imaging a subject using an imaging device (101, 121, 122, 131A-131D), wherein the imaging device has a plurality of pixel information acquisition areas (P(1, 1)-P(i, j)) which are arranged in a vertical direction and a horizontal direction and each of which is adapted to generate an output value of one pixel by converting light coming from the subject and shining thereon, the method comprising:

partially shielding the pixel information acquisition areas in units of a region that is smaller than a single pixel from incident light coming from the subject; changing shielded portions of the pixel information acquisition areas; calculating respective pixel information of a subject image based on respective output values of the imaging device that are generated through imaging operations carried out in every time where the shielded portions of the pixel information acquisition areas are changed; and storing the calculated pixel information in such a manner that they are correlated with position information of the subject image.

**16.** An imaging method for imaging a subject using an imaging apparatus having an imaging device (201) and a light shield plate (206), wherein the imaging device has a plurality of pixel information acquisition areas (P(1, 1)-P(i, j)) which are arranged in a vertical direction and a horizontal direction and each of which is adapted to generate an output value of one pixel by converting light coming from the subject and shining thereon, the imaging method comprising:

a driving step of moving the imaging device stepwise in units of an arbitrary fraction of a single pixel until each of vertically arranged pixel information acquisition areas of at least one column or horizontally arranged pixel information acquisition areas of at least one row among the plural pixel information acquisition areas is put into a state that is immediately before a state that a region corresponding to one pixel is shielded from light coming from the subject toward the imaging device by the light shield plate starting from a state that it is not masked at all from the incident light by the light shield plate;

a pixel information calculating step of calculating pixel information of a subject image in units of a region that is smaller than a single pixel based on differences between output values from the imaging device that are generated through imaging operations carried out in every time where the imaging device is moved by the driving step; and

a pixel information storing step of storing the pixel information calculated by the pixel information calculating step in such a manner that they are correlated with position information of the subject image.

**17.** An imaging method for imaging a subject using a plurality of imaging devices (21A-21D, 21-1 to 21-9), wherein each of the imaging devices has a plurality of pixel information acquisition areas (P(1, 1)-P(i, j)) which are arranged in a vertical direction and a horizontal direction and each of which is adapted to generate an output value of one pixel by converting light coming from the subject and shining thereon, and wherein the imaging devices include an imaging device that is not formed with a light shield film and a plurality of imaging devices that are formed with respective light shield films (26A-26C, 26-1 to 26-8) in different areas so as to be shielded from light differently in units of an arbitrary fraction of a single pixel until each of at least one of the plural pixel information acquisition areas is put into a state that is immediately before a state that a region corresponding to one pixel is masked starting from a state that a region that is an arbitrary fraction of a pixel is masked at all, the imaging method comprising:

a moving step of placing the imaging devices at an imaging position one by one;

a pixel information calculating step of calculating pixel information of a subject image in units of a region that is smaller than a single pixel based on output values of the imaging devices that are generated through imaging operations carried out in every time where the imaging devices are placed at the image position by the moving step; and

a pixel information storing step of storing the pixel information calculated by the pixel information calculating step in such a manner that they are correlated with position information of the subject image.

**18.** An imaging program for a computer which controls an imaging device (101, 121, 122, 131A-131D), wherein the imaging device has a plurality of pixel information acquisition areas (P(1, 1)-P(i, j)) which are arranged in a vertical direction and a horizontal direction and each of which is adapted to generates an output value of one pixel by converting light coming from the subject and shining thereon, the imaging program causing the computer to execute the steps of:

partially shielding the pixel information acquisition areas in units of a region that is smaller than a single pixel from incident light coming from the subject;

changing shielded portions of the pixel information acquisition areas;

calculating respective pixel information of a subject image based on respective output values of the imaging device that are generated through imaging operations carried out in every time where the shielded portions of the pixel information acquisition areas are changed; and

storing the calculated pixel information in such a manner that they are correlated with position information of the subject image.

**19.** An imaging program for a computer which controls an imaging device (201), wherein the imaging device has a plurality of pixel information acquisition areas (P(1, 1)-P(i, j)) which are arranged in a vertical direction and a horizontal direction and each of which is adapted to generate an output value of one pixel by converting light coming from the subject and shining thereon, the imaging program causing the computer to execute:

a driving step of moving the imaging device stepwise in units of an arbitrary fraction of a single pixel until each of vertically arranged pixel information acquisition areas of at least one column or horizontally arranged pixel information acquisition areas of at least one row among the plural pixel information acquisition areas is put into a state that is immediately before a state that a region corresponding to one pixel is shielded from light coming from the subject toward the imaging device by the light shield plate starting from a state that it is not masked at all from the incident light by the light shield plate;

a pixel information calculating step of calculating pixel information of a subject image in units of a region that is smaller than a single pixel based on differences between output values from the imaging device that are generated through imaging operations carried out in every time where the imaging device is moved by the driving step; and

a pixel information storing step of storing the pixel information calculated by the pixel information calculating step in such a manner that they are correlated with position information of the subject image.

20. An imaging program for a computer which controls a plurality of imaging devices (21, 21A-21D, 21-1 to 21-9), wherein each of the imaging devices has a plurality of pixel information acquisition areas (P(1, 1)-P(i, j)) which are arranged in a vertical direction and a horizontal direction and each of which is adapted to generate an output value of one pixel by converting light coming from the subject and shining thereon, and wherein the imaging devices include an imaging device that is not formed with a light shield film and plural imaging devices that are formed with respective light shield films (26A-26C, 26-1 to 26-8) in different areas so as to be shielded from light differently in units of an arbitrary fraction of a pixel until each of at least one of the plural pixel information acquisition areas is put into a state that is immediately before a state that a region corresponding to one pixel is masked starting from a state that a region that is an arbitrary fraction of a pixel is masked at all, the imaging program causing the computer to execute:

a moving step of placing the imaging devices at an imaging position one by one;
a pixel information calculating step of calculating pixel information of a subject image in units of a region that is smaller than a single pixel based on output values of the imaging devices that are generated through imaging operations carried out in every time where the imaging devices are placed at the image position by the moving step; and
a pixel information storing step of storing the pixel information calculated by the pixel information calculating step in such a manner that they are correlated with position information of the subject image.

## *FIG.1*

## *FIG.2*

# FIG.3

(A)

102

101

106A～106D

(B)

103

X,Y

102

S

C

← INCIDENT LIGHT

X,Y

106A 106B 101 106D

106C

# FIG.4

(A)
PIXEL INFORMATION
ON IMAGING UNIT

(B)
SHAPE OF LIGHT SHIELD PLATE

(C)

(D)

(E)

(F)

EP 2 385 698 A2

## FIG.5

```
         ┌─────────────┐
         │    START    │
         └─────────────┘
                │
                ▼
  ┌──────────────────────────────┐  ┌ S1101
  │      SET LIGHT SHIELD PLATE   │
  │  AT LIGHT INTERRUPTING POSITION│
  └──────────────────────────────┘
                │
                ▼  ◄───────────────────────────┐
  ┌──────────────────────────────┐  ┌ S1102    │
  │      MOVE LIGHT SHIELD PLATE  │             │
  │      BY PRESCRIBED LENGTHS    │             │
  │      IN PRESCRIBED DIRECTION  │             │
  └──────────────────────────────┘             │
                │                               │
                ▼                               │
  ┌──────────────────────────────┐  ┌ S1103    │
  │       ACQUIRE OUTPUT VALUES   │        S1107│
  └──────────────────────────────┘             │
                │                   ┌───────────┴──┐
                ▼                   │ SWITCH LIGHT │
  ┌──────────────────────────────┐ │ SHIELD PLATE │
  │    CALCULATE SUB-PIXEL VALUES │ └───────────┬──┘
  └──────────────────────────────┘             │
                │            S1104               │
                ▼        S1105                   │
         ◄ALL SUB-PIXEL VALUES►──── NO ──────────┘
            CALCULATED?
                │
              YES
                ▼
  ┌──────────────────────────────┐  ┌ S1106
  │      STORE SUB-PIXEL VALUES   │
  └──────────────────────────────┘
                │
                ▼
         ┌─────────────┐
         │     END     │
         └─────────────┘
```

# FIG.6

(A)

102

126

141

121

(B)

X,Y

C

102

INCIDENT LIGHT

126

X,Y

121

FIG.7

(A) PIXEL INFORMATION ON IMAGING UNIT

(B) SHAPE OF LIGHT SHIELD PLATE

(C)

(D)

(E)

(F)

EP 2 385 698 A2

## FIG.8

```
                    ( START )

      ┌──────────────────────────────────┐     S1201
      │      SET LIGHT SHIELD PLATE        │
      │  AT LIGHT INTERRUPTING POSITION    │
      └──────────────────────────────────┘

      ┌──────────────────────────────────┐     S1202
      │      MOVE LIGHT SHIELD PLATE       │
      │      BY PRESCRIBED LENGTHS         │
      │      IN PRESCRIBED DIRECTION       │
      └──────────────────────────────────┘

      ┌──────────────────────────────────┐     S1203
      │       ACQUIRE OUTPUT VALUES        │
      └──────────────────────────────────┘

      ┌──────────────────────────────────┐
      │     CALCULATE SUB-PIXEL VALUES     │
      └──────────────────────────────────┘     S1204

                                          S1205
              ◇ ALL SUB-PIXEL VALUES         NO
                   CALCULATED? ◇

                      │ YES

      ┌──────────────────────────────────┐     S1206
      │      STORE SUB-PIXEL VALUES        │
      └──────────────────────────────────┘

                    (  END  )
```

## FIG.9

(A)
PIXEL INFORMATION ON IMAGING UNIT

(B)
SHAPE OF LIGHT SHIELD PLATE

(C)

(D)

(E)

# FIG.10

(A)

132

131A~131D

(B)

133

X,Y

S

F

INCIDENT LIGHT

X,Y

131A~131D

## FIG.11

P(1,1)a  136A          P(1,1)b  136B

131A

131B

P(1,1)c

131C

131D

136C          P(1,1)d          136D

## FIG.12

P(1,1)c

P(1,1)d

P(1,1)b

P(1,1)a

From 113D

From 113C

From 113A

From 131B

## FIG.13

```
                    ┌──────────┐
                    │  START   │
                    └────┬─────┘
                         │
         ┌───────────────▼───────────────┐ ⌐S1301
         │      SET IMAGING DEVICE        │
         │      AT IMAGING POSITION       │
         └───────────────┬───────────────┘
                         │◄──────────────────────────┐
         ┌───────────────▼───────────────┐ ⌐S1302   │
         │      MOVE IMAGING DEVICE       │          │
         │      BY PRESCRIBED LENGTHS     │          │
         │      IN PRESCRIBED DIRECTIONS  │          │
         └───────────────┬───────────────┘          │
                         │                           │
         ┌───────────────▼───────────────┐ ⌐S1303   │
         │      ACQUIRE OUTPUT VALUES     │          │
         └───────────────┬───────────────┘          │
                         │               ⌐S1307     │
         ┌───────────────▼───────────────┐ ┌────────────────┐
         │   CALCULATE SUB-PIXEL VALUES   │ │     SWITCH     │
         └───────────────┬───────────────┘ │ IMAGING DEVICE │
                         │   S1304         └───────▲────────┘
                      ⌐S1305                       │
                 ╱────▼────╲                       │
            ╱  ALL SUB-PIXEL VALUES  ╲  NO         │
            ╲     CALCULATED?        ╱─────────────┘
                 ╲────┬────╱
                      │ YES
         ┌────────────▼────────────┐ ⌐S1306
         │   STORE SUB-PIXEL VALUES │
         └────────────┬────────────┘
                      │
                 ┌────▼─────┐
                 │   END    │
                 └──────────┘
```

*FIG.14*

*FIG.15*

## FIG.16

(1)

ENLARGED

206
201
205'

206
201
205'

P(1,1)

(2)

(2,1) ---- (i,1)

(1,1)
(1,2)

(1, j)

(i, j)

206
201
205'

## FIG.17

BASE POSITION [1]

## FIG.18

MOVED POSITION [2]

## FIG.19

MOVED POSITION [3]

## FIG.20

MOVED POSITION [4]

## FIG.21

206

A$^{(1,1)}$  B$^{(1,1)}$  C$^{(1,1)}$

P(1,1)

201

D$^{(1,1)}$  E$^{(1,1)}$  F$^{(1,1)}$

G$^{(1,1)}$  H$^{(1,1)}$  K$^{(1,1)}$

205'

k$^{(1,1)}$

MOVED POSITION [9]

## FIG.22

BASE POSITION [1]

# FIG.23

206

TOP SUB-PIXELS

201

205'

INNER SUB-PIXELS

LEFTMOST SUB-PIXELS

FIG.24

EP 2 385 698 A2

## FIG.25

P(1,1)  P(2,1)  P(3,1)  P(4,1)

A$^{(1,1)}$ B$^{(1,1)}$ C$^{(1,1)}$ A$^{(2,1)}$ B$^{(2,1)}$ C$^{(2,1)}$ A$^{(3,1)}$ B$^{(3,1)}$ C$^{(3,1)}$ A$^{(4,1)}$ B$^{(4,1)}$ C$^{(4,1)}$

206

201  MOVED POSITION [3]

205'

## FIG.26

MOVED POSITION [7]

FIG.27

P(1,1)  P(2,1)  P(3,1)  P(4,1)

(1)

$A^{(1,1)}$ $B^{(1,1)}$ $C^{(1,1)}$ $A^{(2,1)}$ $B^{(2,1)}$ $C^{(2,1)}$ $A^{(3,1)}$ $B^{(3,1)}$ $C^{(3,1)}$ $A^{(4,1)}$ $B^{(4,1)}$ $C^{(4,1)}$ ---

$D^{(1,1)}$ $E^{(1,1)}$ $F^{(1,1)}$ $D^{(2,1)}$ $E^{(2,1)}$ $F^{(2,1)}$ $D^{(3,1)}$ $E^{(3,1)}$ $F^{(3,1)}$ $D^{(4,1)}$ $E^{(4,1)}$ $F^{(4,1)}$

~206
~201   MOVED POSITION [6]
~205'

(2)

$A^{(1,1)}$ $B^{(1,1)}$ $C^{(1,1)}$ $A^{(2,1)}$ $B^{(2,1)}$ $C^{(2,1)}$ $A^{(3,1)}$ $B^{(3,1)}$ $C^{(3,1)}$ $A^{(4,1)}$ $B^{(4,1)}$ $C^{(4,1)}$

$D^{(1,1)}$ $E^{(1,1)}$ $F^{(1,1)}$ $D^{(2,1)}$ $E^{(2,1)}$ $F^{(2,1)}$ $D^{(3,1)}$ $E^{(3,1)}$ $F^{(3,1)}$ $D^{(4,1)}$ $E^{(4,1)}$ $F^{(4,1)}$ ---

$G^{(1,1)}$ $H^{(1,1)}$ $K^{(1,1)}$ $G^{(2,1)}$ $H^{(2,1)}$ $K^{(2,1)}$ $G^{(3,1)}$ $H^{(3,1)}$ $K^{(3,1)}$ $G^{(4,1)}$ $H^{(4,1)}$ $K^{(4,1)}$

~206
~201   MOVED POSITION [9]
~205'

EP 2 385 698 A2

## FIG.28

## FIG.29

## FIG.30

START

SET IMAGING DEVICE
AT IMAGING POSITION — S2101

MOVE IMAGING DEVICE
BY PRESCRIBED LENGTHS
IN PRESCRIBED DIRECTIONS — S2102

ACQUIRE OUTPUT VALUES — S2103

CALCULATE SUB-PIXEL VALUES — S2104

ALL SUB-PIXEL VALUES CALCULATED? — S2105   NO

YES

STORE SUB-PIXEL VALUES — S2106

END

## FIG.31

## FIG.32

## FIG.33

(A)

26

2

21A~21D

(B)

3

2

X,Y

S

F

INCIDENT LIGHT

X,Y

21A~21D

# FIG.34

PROTECTIVE FILM 28

L2 L3 L1

26
LIGHT SHIELD FILM

LS

(A)

21
IMAGING DEVICE

DIFFRACTION LIGHT
PRODUCED BY LIGHT SHIELD FILM

L3

L2

LIGHT SHIELD PLATE 6

DIFFRACTION LIGHT
PRODUCED
BY LIGHT SHIELD PLATE
L1

PROTECTIVE FILM 28

(B)

LS1 LS2

21
IMAGING DEVICE

## FIG.35

R1: REGION FOR 22 PIXELS

R2: REGION FOR 40 PIXELS

1 LINE

247 LINES

26 LIGHT SHIELD FILM

1 LINE

21

PHOTODETECTING AREA

FIG.36

FIG.37

FIG.38

BASE POSITION [1']

MOVED POSITION [2']

MOVED POSITION [3']

MOVED POSITION [4']

MOVED POSITION [5']

MOVED POSITION [6']

MOVED POSITION [7']

MOVED POSITION [8']

MOVED POSITION [9']

*FIG.39*

(1)

P(1,1)

ENLARGED

26-1

21-1

5'

26-1

21-1

5'

P(1,1)

(2)

(2,1) ---- (i,1)

26-1

(1,1)

(1,2)

21-1

5'

(1, j)

(i, j)

## *FIG.40*

26-1

(1,1)

21-1

$a^{(1,1)}=A^{(1,1)}$

5'

BASE POSITION [1']

## *FIG.41*

h

26-2

P(1,1)

21-2

$A^{(1,1)}$ $B^{(1,1)}$

5'

b(1,1)

MOVED POSITION [2']

## FIG.42

26-3
P(1,1)
21-3
A(1,1) B(1,1) C(1,1)
5'
$c^{(1,1)}$

MOVED POSITION [3']

## FIG.43

26-4
P(1,1)
21-4
A(1,1)
$d^{(1,1)}$
B(1,1)
5'

MOVED POSITION [4']

## FIG.44

26-9

A$^{(1,1)}$  B$^{(1,1)}$  C$^{(1,1)}$

P(1,1)

21-9

D$^{(1,1)}$  E$^{(1,1)}$  F$^{(1,1)}$

G$^{(1,1)}$  H$^{(1,1)}$  K$^{(1,1)}$

5'

k$^{(1,1)}$

MOVED POSITION [9']

## FIG.45

BASE POSITION [1']

# FIG.46

26-1

TOP SUB-PIXELS

21-1

5'

INNER SUB-PIXELS

LEFTMOST
SUB-PIXELS

FIG.47

EP 2 385 698 A2

# FIG.48

P(1,1)  P(2,1)  P(3,1)  P(4,1)

26-3

21-3

MOVED
POSITION [3']

A$^{(1,1)}$ B$^{(1,1)}$ C$^{(1,1)}$ A$^{(2,1)}$ B$^{(2,1)}$ C$^{(2,1)}$ A$^{(3,1)}$ B$^{(3,1)}$ C$^{(3,1)}$ A$^{(4,1)}$ B$^{(4,1)}$ C$^{(4,1)}$

5'

## FIG.49

26-7

A$^{(1,1)}$ — P(1,1)

D$^{(1,1)}$

21-7 — G$^{(1,1)}$

A$^{(1,2)}$ — P(1,2)

5'

D$^{(1,2)}$

G$^{(1,2)}$

A$^{(1,3)}$ — P(1,3)

D$^{(1,3)}$

G$^{(1,3)}$

MOVED POSITION [7']

FIG.50

EP 2 385 698 A2

## FIG.51

## FIG.52

## FIG.53

```
                    ┌──────────┐
                    │  START   │
                    └──────────┘
                         │
                         ▼
        ┌────────────────────────────────┐  ⌐ S101
        │      SET IMAGING DEVICE        │
        │      AT IMAGING POSITION       │
        └────────────────────────────────┘
                         │
                         ▼  ◄─────────────────────────┐
        ┌────────────────────────────────┐  ⌐ S102    │
        │      MOVE IMAGING DEVICE       │            │
        │     BY PRESCRIBED LENGTHS      │            │
        │    IN PRESCRIBED DIRECTIONS    │            │
        └────────────────────────────────┘            │
                         │                            │
                         ▼                            │
        ┌────────────────────────────────┐  ⌐ S103    │
        │      ACQUIRE OUTPUT VALUES     │            │
        └────────────────────────────────┘   ⌐ S107   │
                         │              ┌──────────────┴──┐
                         ▼              │     SWITCH       │
        ┌────────────────────────────────┐  IMAGING DEVICE │
        │    CALCULATE SUB-PIXEL VALUES  │  └──────────────▲──┘
        └────────────────────────────────┘                │
                         │   S104                          │
                         ▼        ⌐ S105                   │
               ◇────────────────────────◇  NO             │
               │  ALL SUB-PIXEL VALUES  ├────────────────┘
               │      CALCULATED?       │
               ◇────────────────────────◇
                         │ YES
                         ▼              ⌐ S106
        ┌────────────────────────────────┐
        │     STORE SUB-PIXEL VALUES     │
        └────────────────────────────────┘
                         │
                         ▼
                    ┌──────────┐
                    │   END    │
                    └──────────┘
```

**REFERENCES CITED IN THE DESCRIPTION**

**Patent documents cited in the description**

- US 4634884 A